# EUROPEAN PATENT SPECIFICATION

(11) **EP 4 128 597 B1**
(45) Date of publication and mention of the grant of the patent: **22.04.2026**
(21) Application number: 21714483.1
(22) Date of filing: 02.03.2021
(51) Int. Cl.: H04L 1/00, H04W 76/23, H04W 4/40, H04W 72/12, H04W 80/02, H04W 88/04, H04W 92/18

(54) **TECHNIQUES FOR SIDELINK APERIODIC CHANNEL STATE INFORMATION REPORTING AND MODULATION AND CODING SCHEME CONTROL WITH LAYER 2 RELAYING**
VERFAHREN FÜR DIE MELDUNG VON APERIODISCHEN SIDELINK-KANALZUSTANDSINFORMATIONEN UND MODULATIONS- UND CODIERUNGSSCHEMA-STEUERUNG MIT SCHICHT 2-RELAYING
TECHNIQUES DE NOTIFICATION ET DE MODULATION D'INFORMATIONS D'ÉTAT DE CANAL APÉRIODIQUES DE LIAISON LATÉRALE ET COMMANDE DE SCHÉMA CODAGE AVEC RELAIS DE COUCHE 2

(30) Priority: 30.03.2020 US 202063002160 P; 30.03.2020 US 202063002164 P; 31.03.2020 US 202063003113 P; 03.04.2020 US 202063005101 P; 06.04.2020 US 202063006051 P; 01.03.2021 US 202117188125
(43) Date of publication of application: 08.02.2023
(73) Proprietor: QUALCOMM INCORPORATED, San Diego, California 92121-1714 (US)
(72) Inventor: DAMNJANOVIC, Jelena, San Diego, California 92121 (US); LUO, Tao, San Diego, California 92121 (US); DAMNJANOVIC, Aleksandar, San Diego, California 92121 (US); MONTOJO, Juan, San Diego, California 92121 (US); AKKARAKARAN, Sony, San Diego, California 92121 (US); AWONIYI-OTERI, Olufunmilola Omolade, San Diego, California 92121 (US); SAKHNINI, Iyab Issam, San Diego, California 92121 (US); ZHOU, Shanyu, San Diego, California 92121 (US)
(74) Representative: Jaeger, Michael David
(86) International application number: PCT/US2021/020447
(87) International publication number: WO 2021/202030

(56) References cited:
- ALCATEL-LUCENT ET AL: "DCI Overhead Reduction for CA", 3GPP DRAFT; R1-112406 DCI OVERHEAD REDUCTION FOR CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537807, [retrieved on 20110818]
- LENOVO ET AL: "Sidelink Physical layer structures in NR V2X", vol. RAN WG1, no. Prague, Czech Republic; 20190826 - 20190830, 16 August 2019 (2019-08-16), XP051765338, Retrieved from the Internet <URL:http://www.3gpp.org/ftp/tsg_ran/WG1_RL1/TSGR1_98/Docs/R1-1908730.zip> [retrieved on 20190816]
- ERICSSON: "On CSI report for Mode-1", vol. RAN WG1, no. Reno, US; 20190513 - 20190517, 13 May 2019 (2019-05-13), XP051728583, Retrieved from the Internet <URL:http://www.3gpp.org/ftp/Meetings%5F3GPP%5FSYNC/RAN1/Docs/R1%2D1907137%2Ezip> [retrieved on 20190513]
- HUAWEI ET AL: "Sidelink CSI", vol. RAN WG1, no. Taipei; 20190121 - 20190125, 20 January 2019 (2019-01-20), XP051593703, Retrieved from the Internet <URL:http://www.3gpp.org/ftp/Meetings%5F3GPP%5FSYNC/RAN1/Docs/R1%2D1900857%2Ezip> [retrieved on 20190120]
- NTT DOCOMO ET AL: "NR Sidelink Physical Layer Procedure", vol. RAN WG1, no. Reno, USA; 20190513 - 20190517, 3 May 2019 (2019-05-03), XP051708248, Retrieved from the Internet <URL:http://www.3gpp.org/ftp/tsg%5Fran/WG1%5FRL1/TSGR1%5F97/Docs/R1%2D1906209%2Ezip> [retrieved on 20190503]

## Description

### FIELD OF THE DISCLOSURE

Aspects of the present disclosure generally relate to wireless communication and to techniques and apparatuses for aperiodic channel state information (CSI) reporting and modulation and coding scheme (MCS) control with layer 2 relaying.

### DESCRIPTION OF RELATED ART

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless communication network may include a number of base stations (BSs) that can support communication for a number of user equipment (UEs). A UE may communicate with a BS via the downlink and uplink. "Downlink" (or "forward link") refers to the communication link from the BS to the UE, and "uplink" (or "reverse link") refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, and/or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. However, as the demand for mobile broadband access continues to increase, there exists a need for further improvements in LTE and NR technologies. Preferably, these improvements should be applicable to other multiple access technologies and the telecommunication standards that employ these technologies.

3GPP document R1-1907137 "On CSI report for Mode-1" from Ericsson, 3GPP TSG-RAN WG1 Meeting #97, Reno, US, 13th-17th of May 2019, discloses that the gNB triggers sidelink, SL CSI report and grants UL resources for that report. The gNB sends a request of SL CSI report to UE1, the UE1 sends corresponding SL-CSI-RS to UE2. UE2 feeds back the CSI report over sidelink, and then UE1 relays the SL CSI report to the gNB. gNB utilizes SL channel information to determine more proper transmission parameters, such as rank and MCS. For Mode-1, the gNB determines resources and potentially also transmission parameters such as MCS for sidelink, SL.

3GPP document R1-1900857 "Sidelink CSI" from Huawei, HiSilicon, 3GPP TSG RAN WG1 Ad-Hoc Meeting 1901, Taipei, 21th-25th of January, 2019, discloses a source UE sending data and reference signals to a destination UE. The destination UE feeds back the CSI to the source UE, and the source UE forward, relays, the CSI in NR SL mode-1 to the base station. The gNB schedules the resources used for sidelink transmission and selects the MCS used on the sidelink.

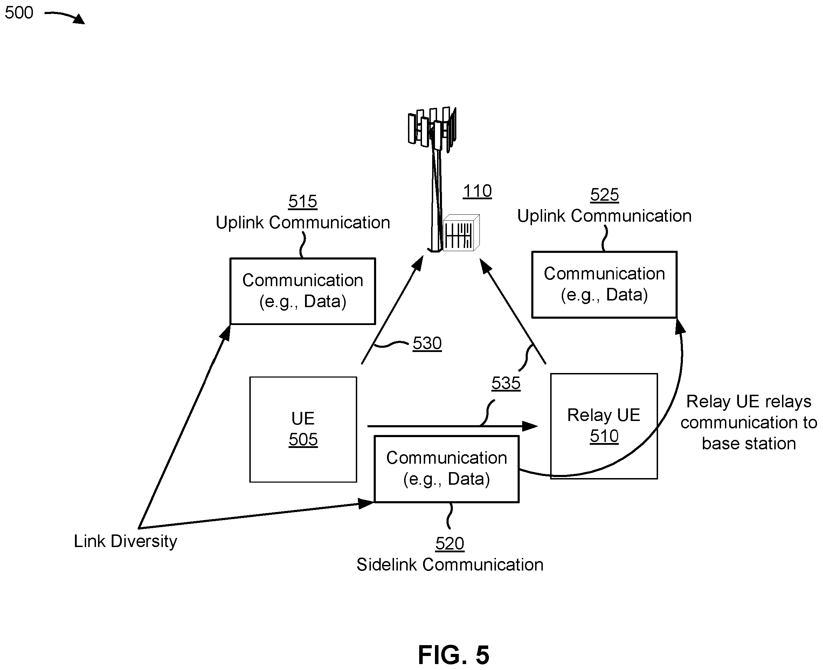

3GPP document R1-1906209 "NR Sidelink Physical Layer Procedure" from NTT DOCOMO, 3GPP TSG RAN WG1 Meeting #97, Reno, USA, 13th - 17th of May, 2019, discloses several methods to report CSI in sidelink transmission, especially the one of Figure 5(b) right where the base station sends a CSI request, the first UE relays the cSI request to a second UE, the second UE feeds back a CSI report to the first UE and the first UE relays the CSI report to the base station.

### SUMMARY

The invention is defined by the independent claims. Preferred embodiments are set out in the dependent claims. In some aspects, a method of wireless communication, performed by a relay user equipment (UE), may include transmitting an aperiodic channel state information (CSI) request to a UE, wherein the aperiodic CSI request is for sidelink communications; receiving, from a base station, an indication of one or more modulation and coding schemes (MCSs) for sidelink communications between the relay UE and the UE based at least in part on transmitting the aperiodic CSI request; receiving, from the base station, a communication to be relayed to the UE; and relaying the communication to the UE via a sidelink communication that is modulated using an MCS of the one or more MCSs.

In some aspects, the relay UE relays communications between the UE and the base station. In some aspects, the method includes receiving an aperiodic CSI report from the UE based at least in part on transmitting the aperiodic CSI request to the UE, wherein the aperiodic CSI report is for sidelink communications; transmitting the aperiodic CSI report to the base station; and receiving, from the base station, the indication of the one or more MCSs for sidelink communications based at least in part on transmitting the aperiodic CSI report to the base station. In some aspects, the aperiodic CSI report is transmitted to the base station in at least one of a medium access control (MAC) control element (CE) (MAC-CE), a MAC payload, uplink control information, or a combination thereof.

In some aspects, the indication of the one or more MCSs is received from the base station in at least one of a MAC-CE, a MAC payload, downlink control information, a sidelink grant for the sidelink communication, or a combination thereof. In some aspects, the relay UE provides a layer 2 relay service for the UE. In some aspects, the one or more MCSs include multiple MCSs or a range of MCSs, and the relay UE selects the MCS, used to modulate the sidelink communication, from the multiple MCSs or the range of MCSs. In some aspects, the one or more MCSs include a single MCS, and the relay UE uses the single MCS as the MCS used to modulate the sidelink communication.

In some aspects, a method of wireless communication, performed by a UE, may include receiving an aperiodic CSI request from a relay UE, wherein the aperiodic CSI request is for sidelink communications; transmitting an aperiodic CSI report based at least in part on receiving the aperiodic CSI request from the relay UE, wherein the aperiodic CSI report is for sidelink communications; and receiving, from the relay UE, a sidelink communication that includes a communication transmitted from a base station to the relay UE, wherein the sidelink communication is modulated using an MCS of one or more MCSs indicated by the base station to the relay UE.

In some aspects, the relay UE relays communications between the UE and the base station. In some aspects, the aperiodic CSI report is transmitted to the relay UE. In some aspects, the aperiodic CSI report is transmitted to the base station. In some aspects, the aperiodic CSI report is transmitted to the base station in at least one of a MAC-CE, a MAC payload, uplink control information, or a combination thereof. In some aspects, the relay UE provides a layer 2 relay service for the UE. In some aspects, the MCS is indicated to the UE in sidelink control information received from the relay UE.

In some aspects, a method of wireless communication, performed by a base station, may include receiving an aperiodic CSI report for sidelink communications between a relay UE and a UE; transmitting, to the relay UE, an indication of one or more MCSs for sidelink communications between the relay UE and the UE based at least in part on receiving the aperiodic CSI request; and transmitting, to the relay UE, a communication to be relayed by the relay UE to the UE using a sidelink communication modulated using an MCS of the one or more MCSs.

In some aspects, the relay UE relays communications between the UE and the base station. In some aspects, the aperiodic CSI report is received from the relay UE. In some aspects, the aperiodic CSI report is received from the UE. In some aspects, the aperiodic CSI report is received in at least one of a MAC-CE, a MAC payload, uplink control information, or a combination thereof. In some aspects, the indication of the one or more MCSs is transmitted in at least one of a MAC-CE, a MAC payload, downlink control information, a sidelink grant for the sidelink communication, or a combination thereof. In some aspects, the method includes determining the one or more MCSs based at least in part on the aperiodic CSI report and a configuration of the base station. In some aspects, the relay UE provides a layer 2 relay service for the UE. In some aspects, the method includes transmitting the communication directly to the UE.

In some aspects, a relay UE for wireless communication may include a memory and one or more processors operatively coupled to the memory. The memory and the one or more processors may be configured to transmit an aperiodic CSI request to a UE, wherein the aperiodic CSI request is for sidelink communications; receive, from a base station, an indication of one or more MCSs for sidelink communications between the relay UE and the UE based at least in part on transmitting the aperiodic CSI request; receive, from the base station, a communication to be relayed to the UE; and relay the communication to the UE via a sidelink communication that is modulated using an MCS of the one or more MCSs.

In some aspects, the relay UE relays communications between the UE and the base station. In some aspects, the relay UE is configured to receive an aperiodic CSI report from the UE based at least in part on transmitting the aperiodic CSI request to the UE, wherein the aperiodic CSI report is for sidelink communications; transmit the aperiodic CSI report to the base station; and receive, from the base station, the indication of the one or more MCSs for sidelink communications based at least in part on transmitting the aperiodic CSI report to the base station. In some aspects, the aperiodic CSI report is transmitted to the base station in at least one of a MAC-CE, a MAC payload, uplink control information, or a combination thereof.

In some aspects, the indication of the one or more MCSs is received from the base station in at least one of a MAC-CE, a MAC payload, downlink control information, a sidelink grant for the sidelink communication, or a combination thereof. In some aspects, the relay UE provides a layer 2 relay service for the UE. In some aspects, the one or more MCSs include multiple MCSs or a range of MCSs, and the relay UE selects the MCS, used to modulate the sidelink communication, from the multiple MCSs or the range of MCSs. In some aspects, the one or more MCSs include a single MCS, and the relay UE uses the single MCS as the MCS used to modulate the sidelink communication.

In some aspects, a UE for wireless communication may include a memory and one or more processors operatively coupled to the memory. The memory and the one or more processors may be configured to receive an aperiodic CSI request from a relay UE, wherein the aperiodic CSI request is for sidelink communications; transmit an aperiodic CSI report based at least in part on receiving the aperiodic CSI request from the relay UE, wherein the aperiodic CSI report is for sidelink communications; and receive, from the relay UE, a sidelink communication that includes a communication transmitted from a base station to the relay UE, wherein the sidelink communication is modulated using an MCS of one or more MCSs indicated by the base station to the relay UE.

In some aspects, the relay UE relays communications between the UE and the base station. In some aspects, the aperiodic CSI report is transmitted to the relay UE. In some aspects, the aperiodic CSI report is transmitted to the base station. In some aspects, the aperiodic CSI report is transmitted to the base station in at least one of a MAC-CE, a MAC payload, uplink control information, or a combination thereof. In some aspects, the relay UE provides a layer 2 relay service for the UE. In some aspects, the MCS is indicated to the UE in sidelink control information received from the relay UE.

In some aspects, a base station for wireless communication may include a memory and one or more processors operatively coupled to the memory. The memory and the one or more processors may be configured to receive an aperiodic CSI report for sidelink communications between a relay UE and a UE; transmit, to the relay UE, an indication of one or more MCSs for sidelink communications between the relay UE and the UE based at least in part on receiving the aperiodic CSI request; and transmit, to the relay UE, a communication to be relayed by the relay UE to the UE using a sidelink communication modulated using an MCS of the one or more MCSs.

In some aspects, the relay UE relays communications between the UE and the base station. In some aspects, the aperiodic CSI report is received from the relay UE. In some aspects, the aperiodic CSI report is received from the UE. In some aspects, the aperiodic CSI report is received in at least one of a MAC-CE, a MAC payload, uplink control information, or a combination thereof. In some aspects, the indication of the one or more MCSs is transmitted in at least one of a MAC-CE, a MAC payload, downlink control information, a sidelink grant for the sidelink communication, or a combination thereof. In some aspects, the base station is configured to determine the one or more MCSs based at least in part on the aperiodic CSI report and a configuration of the base station. In some aspects, the relay UE provides a layer 2 relay service for the UE. In some aspects, the base station is configured to transmit the communication directly to the UE.

In some aspects, a non-transitory computer-readable medium may store one or more instructions for wireless communication. The one or more instructions, when executed by one or more processors of a relay UE, may cause the one or more processors to transmit an aperiodic CSI request to a UE, wherein the aperiodic CSI request is for sidelink communications; receive, from a base station, an indication of one or more MCSs for sidelink communications between the relay UE and the UE based at least in part on transmitting the aperiodic CSI request; receive, from the base station, a communication to be relayed to the UE; and relay the communication to the UE via a sidelink communication that is modulated using an MCS of the one or more MCSs.

In some aspects, the relay UE relays communications between the UE and the base station. In some aspects, the relay UE is configured to receive an aperiodic CSI report from the UE based at least in part on transmitting the aperiodic CSI request to the UE, wherein the aperiodic CSI report is for sidelink communications; transmit the aperiodic CSI report to the base station; and receive, from the base station, the indication of the one or more MCSs for sidelink communications based at least in part on transmitting the aperiodic CSI report to the base station. In some aspects, the aperiodic CSI report is transmitted to the base station in at least one of a MAC-CE, a MAC payload, uplink control information, or a combination thereof.

In some aspects, the indication of the one or more MCSs is received from the base station in at least one of a MAC-CE, a MAC payload, downlink control information, a sidelink grant for the sidelink communication, or a combination thereof. In some aspects, the relay UE provides a layer 2 relay service for the UE. In some aspects, the one or more MCSs include multiple MCSs or a range of MCSs, and the relay UE selects the MCS, used to modulate the sidelink communication, from the multiple MCSs or the range of MCSs. In some aspects, the one or more MCSs include a single MCS, and the relay UE uses the single MCS as the MCS used to modulate the sidelink communication.

In some aspects, a non-transitory computer-readable medium may store one or more instructions for wireless communication. The one or more instructions, when executed by one or more processors of a UE, may cause the one or more processors to receive an aperiodic CSI request from a relay UE, wherein the aperiodic CSI request is for sidelink communications; transmit an aperiodic CSI report based at least in part on receiving the aperiodic CSI request from the relay UE, wherein the aperiodic CSI report is for sidelink communications; and receive, from the relay UE, a sidelink communication that includes a communication transmitted from a base station to the relay UE, wherein the sidelink communication is modulated using an MCS of one or more MCSs indicated by the base station to the relay UE.

In some aspects, the relay UE relays communications between the UE and the base station. In some aspects, the aperiodic CSI report is transmitted to the relay UE. In some aspects, the aperiodic CSI report is transmitted to the base station. In some aspects, the aperiodic CSI report is transmitted to the base station in at least one of a MAC-CE, a MAC payload, uplink control information, or a combination thereof. In some aspects, the relay UE provides a layer 2 relay service for the UE. In some aspects, the MCS is indicated to the UE in sidelink control information received from the relay UE.

In some aspects, a non-transitory computer-readable medium may store one or more instructions for wireless communication. The one or more instructions, when executed by one or more processors of a base station, may cause the one or more processors to receive an aperiodic CSI report for sidelink communications between a relay UE and a UE; transmit, to the relay UE, an indication of one or more MCSs for sidelink communications between the relay UE and the UE based at least in part on receiving the aperiodic CSI request; and transmit, to the relay UE, a communication to be relayed by the relay UE to the UE using a sidelink communication modulated using an MCS of the one or more MCSs.

In some aspects, the relay UE relays communications between the UE and the base station. In some aspects, the aperiodic CSI report is received from the relay UE. In some aspects, the aperiodic CSI report is received from the UE. In some aspects, the aperiodic CSI report is received in at least one of a MAC-CE, a MAC payload, uplink control information, or a combination thereof. In some aspects, the indication of the one or more MCSs is transmitted in at least one of a MAC-CE, a MAC payload, downlink control information, a sidelink grant for the sidelink communication, or a combination thereof. In some aspects, the base station is configured to determine the one or more MCSs based at least in part on the aperiodic CSI report and a configuration of the base station. In some aspects, the relay UE provides a layer 2 relay service for the UE. In some aspects, the base station is configured to transmit the communication directly to the UE.

In some aspects, an apparatus for wireless communication may include means for transmitting an aperiodic CSI request to a UE, wherein the aperiodic CSI request is for sidelink communications; means for receiving, from a base station, an indication of one or more MCSs for sidelink communications between the apparatus and the UE based at least in part on transmitting the aperiodic CSI request; means for receiving, from the base station, a communication to be relayed to the UE; and means for relaying the communication to the UE via a sidelink communication that is modulated using an MCS of the one or more MCSs.

In some aspects, the apparatus relays communications between the UE and the base station. In some aspects, the apparatus includes means for receiving an aperiodic CSI report from the UE based at least in part on transmitting the aperiodic CSI request to the UE, wherein the aperiodic CSI report is for sidelink communications; transmitting the aperiodic CSI report to the base station; and receiving, from the base station, the indication of the one or more MCSs for sidelink communications based at least in part on transmitting the aperiodic CSI report to the base station. In some aspects, the aperiodic CSI report is transmitted to the base station in at least one of a MAC-CE, a MAC payload, uplink control information, or a combination thereof.

In some aspects, the indication of the one or more MCSs is received from the base station in at least one of a MAC-CE, a MAC payload, downlink control information, a sidelink grant for the sidelink communication, or a combination thereof. In some aspects, the apparatus provides a layer 2 relay service for the UE. In some aspects, the one or more MCSs include multiple MCSs or a range of MCSs, and the apparatus selects the MCS, used to modulate the sidelink communication, from the multiple MCSs or the range of MCSs. In some aspects, the one or more MCSs include a single MCS, and the apparatus uses the single MCS as the MCS used to modulate the sidelink communication.

In some aspects, an apparatus for wireless communication may include means for receiving an aperiodic CSI request from a relay UE, wherein the aperiodic CSI request is for sidelink communications; means for transmitting an aperiodic CSI report based at least in part on receiving the aperiodic CSI request from the relay UE, wherein the aperiodic CSI report is for sidelink communications; and means for receiving, from the relay UE, a sidelink communication that includes a communication transmitted from a base station to the relay UE, wherein the sidelink communication is modulated using an MCS of one or more MCSs indicated by the base station to the relay UE.

In some aspects, the relay UE relays communications between the apparatus and the base station. In some aspects, the aperiodic CSI report is transmitted to the relay UE. In some aspects, the aperiodic CSI report is transmitted to the base station. In some aspects, the aperiodic CSI report is transmitted to the base station in at least one of a MAC-CE, a MAC payload, uplink control information, or a combination thereof. In some aspects, the relay UE provides a layer 2 relay service for the apparatus. In some aspects, the MCS is indicated to the apparatus in sidelink control information received from the relay UE.

In some aspects, an apparatus for wireless communication may include means for receiving an aperiodic CSI report for sidelink communications between a relay UE and a UE; means for transmitting, to the relay UE, an indication of one or more MCSs for sidelink communications between the relay UE and the UE based at least in part on receiving the aperiodic CSI request; and means for transmitting, to the relay UE, a communication to be relayed by the relay UE to the UE using a sidelink communication modulated using an MCS of the one or more MCSs.

In some aspects, the relay UE relays communications between the UE and the apparatus. In some aspects, the aperiodic CSI report is received from the relay UE. In some aspects, the aperiodic CSI report is received from the UE. In some aspects, the aperiodic CSI report is received in at least one of a MAC-CE, a MAC payload, uplink control information, or a combination thereof. In some aspects, the indication of the one or more MCSs is transmitted in at least one of a MAC-CE, a MAC payload, downlink control information, a sidelink grant for the sidelink communication, or a combination thereof. In some aspects, the apparatus includes means for determining the one or more MCSs based at least in part on the aperiodic CSI report and a configuration of the apparatus. In some aspects, the relay UE provides a layer 2 relay service for the UE. In some aspects, the apparatus includes means for transmitting the communication directly to the UE.

Aspects generally include a method, apparatus, system, computer program product, non-transitory computer-readable medium, user equipment, relay user equipment, remote user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless communication network, in accordance with the present disclosure.
Fig. 2 is a diagram illustrating an example of a base station in communication with a UE in a wireless communication network, in accordance with the present disclosure.
Fig. 3 is a diagram illustrating an example of sidelink communications, in accordance with the present disclosure.
Fig. 4 is a diagram illustrating an example of sidelink communications and access link communications, in accordance with the present disclosure.
Fig. 5 is a diagram illustrating an example of a relay UE that relays communications between a UE and a base station, in accordance with the present disclosure.
Fig. 6 is a diagram illustrating another example of a relay UE that relays communications between a UE and a base station, in accordance with the present disclosure.
Fig. 7 is a diagram illustrating an example of a protocol stack for relaying communications between a UE and a base station via a relay UE that uses layer 2 relaying, in accordance with the present disclosure.
Fig. 8 is a diagram illustrating an example of aperiodic channel state information (CSI) reporting and modulation and coding scheme (MCS) control with layer 2 relaying, in accordance with the present disclosure.
Fig. 9 is a diagram illustrating another example of aperiodic CSI reporting and MCS control with layer 2 relaying, in accordance with the present disclosure.
Fig. 10 is a diagram illustrating an example process performed, for example, by a relay UE, in accordance with the present disclosure.
Fig. 11 is a diagram illustrating an example process performed, for example, by a UE, in accordance with the present disclosure.
Fig. 12 is a diagram illustrating an example process performed, for example, by a base station, in accordance with the present disclosure.
Figs. 13-15 are data flow diagrams illustrating data flows between different components in example apparatuses, in accordance with the present disclosure.
Fig. 16 is a diagram illustrating an example of aperiodic CSI reporting and MCS control with layer 2 relaying, in accordance with the present disclosure.
Fig. 17 is a diagram illustrating another example of aperiodic CSI reporting and MCS control with layer 2 relaying, in accordance with the present disclosure.
Fig. 18 is a diagram illustrating an example process performed, for example, by a relay UE, in accordance with the present disclosure.
Fig. 19 is a diagram illustrating an example process performed, for example, by a UE, in accordance with the present disclosure.
Fig. 20 is a diagram illustrating an example process performed, for example, by a base station, in accordance with the present disclosure.
Figs. 21-23 are conceptual data flow diagrams illustrating data flows between different components in example apparatuses, in accordance with the present disclosure.
Figs. 24A and 24B illustrate examples of wireless communications systems that provide for base station support for sidelink CSI reporting in accordance with aspects of the present disclosure.
Fig. 25 illustrates an example of a process flow that provides for base station support for sidelink CSI reporting in accordance with aspects of the present disclosure.
Figs. 26 and 27 show block diagrams of devices that provide for base station support for sidelink CSI reporting in accordance with aspects of the present disclosure.
Fig. 28 is a diagram illustrating an example process performed, for example, by a first UE, in accordance with the present disclosure.
Fig. 29 is a diagram illustrating an example process performed, for example, by a base station, in accordance with the present disclosure.
Fig. 30 is a diagram illustrating an example process performed, for example, by a second UE, in accordance with the present disclosure.
Fig. 31 is a call flow diagram illustrating communications between a base station, a first UE, and a second UE.
Fig. 32 illustrates a communication system for triggering an aperiodic CSI (A-CSI) report from a relay UE.
Fig. 33 illustrates a communication system for triggering an A-CSI report from a UE.
Fig. 34 is a diagram illustrating an example process performed, for example, by a base station, in accordance with the present disclosure.
Fig. 35 is a diagram illustrating an example process performed, for example, by a second UE, in accordance with the present disclosure.
Fig. 36 is a diagram illustrating an example process performed, for example, by a first UE, in accordance with the present disclosure.
Fig. 37 illustrates an example signaling and data transmission timeline related to a method of determining an MCS for transmission of data via a sidelink according to some aspects.
Fig. 38 illustrates another example signaling and data transmission timeline related to another method of determining a modulation and coding scheme for transmission of data via a sidelink according to some aspects.
Fig. 39 is a diagram illustrating an example process performed, for example, by a base station, in accordance with the present disclosure.
Fig. 40 is a diagram illustrating an example process performed, for example, by a first UE, in accordance with the present disclosure.
Fig. 41 is a diagram illustrating an example process performed, for example, by a first UE, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with 3G and/or 4G wireless technologies, aspects of the present disclosure can be applied in other generation-based communication systems, such as 5G and later, including NR technologies.

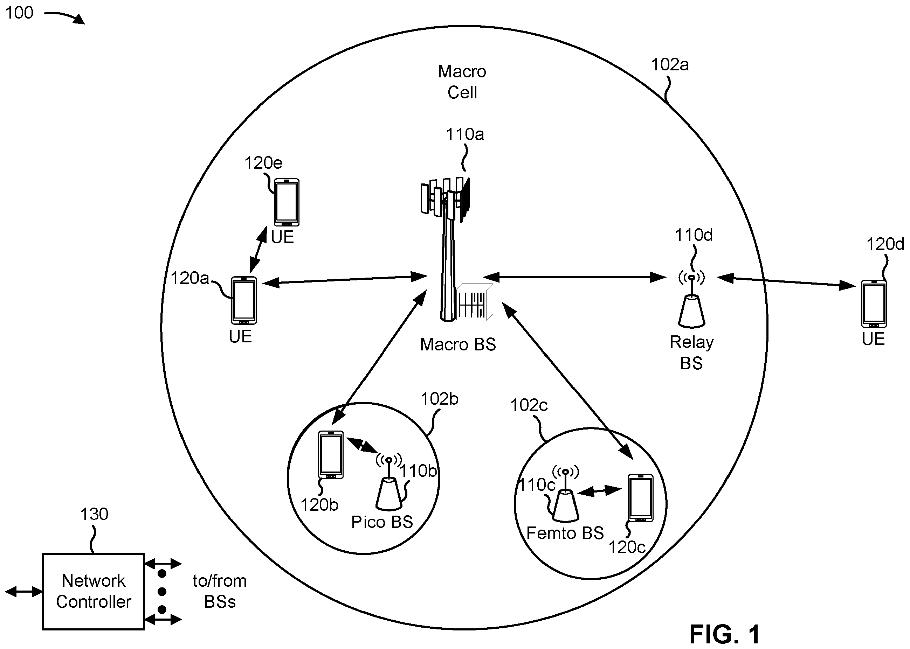

Fig. 1 is a diagram illustrating a wireless network 100 in which aspects of the present disclosure may be practiced. The wireless network 100 may be an LTE network or some other wireless network, such as a 5G or NR network. The wireless network 100 may include a number of BSs 110 (shown as BS 110a, BS 110b, BS 110c, and BS 110d) and other network entities. A BS is an entity that communicates with user equipment (UEs) and may also be referred to as a base station, a NR BS, a Node B, a gNB, a 5G node B (NB), an access point, a transmit receive point (TRP), and/or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces such as a direct physical connection, a virtual network, and/or the like using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay station 110d may communicate with macro BS 110a and a UE 120d in order to facilitate communication between BS 110a and UE 120d. A relay station may also be referred to as a relay BS, a relay base station, a relay, and/or the like.

Wireless network 100 may be a heterogeneous network that includes BSs of different types, e.g., macro BSs, pico BSs, femto BSs, relay BSs, and/or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, and/or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, location tags, and/or the like, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components, memory components, and/or the like.

In general, any number of wireless networks may be deployed in a given geographic area. Each wireless network may support a particular RAT and may operate on one or more frequencies. A RAT may also be referred to as a radio technology, an air interface, and/or the like. A frequency may also be referred to as a carrier, a frequency channel, and/or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, and/or the like), a mesh network, and/or the like. In this case, the UE 120 may perform scheduling operations, resource selection operations, and/or other operations described elsewhere herein as being performed by the base station 110.

As indicated above, Fig. 1 is provided as an example. Other examples may differ from what is described with regard to Fig. 1.

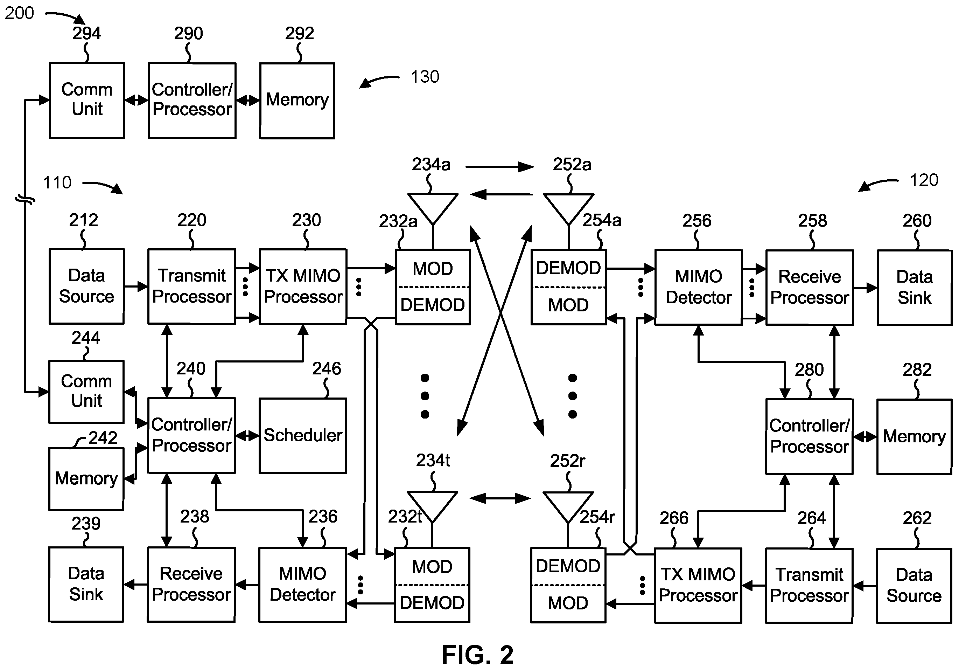

Fig. 2 shows a block diagram of a design 200 of base station 110 and UE 120, which may be one of the base stations and one of the UEs in Fig. 1. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCSs) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM and/or the like) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively. According to various aspects described in more detail below, the synchronization signals can be generated with location encoding to convey additional information.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like. In some aspects, one or more components of UE 120 may be included in a housing.

On the uplink, at UE 120, a transmit processor 264 may receive and process data from a data source 262 and control information (e.g., for reports comprising RSRP, RSSI, RSRQ, CQI, and/or the like) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM, CP-OFDM, and/or the like), and transmitted to base station 110. At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Network controller 130 may include communication unit 294, controller/processor 290, and memory 292.

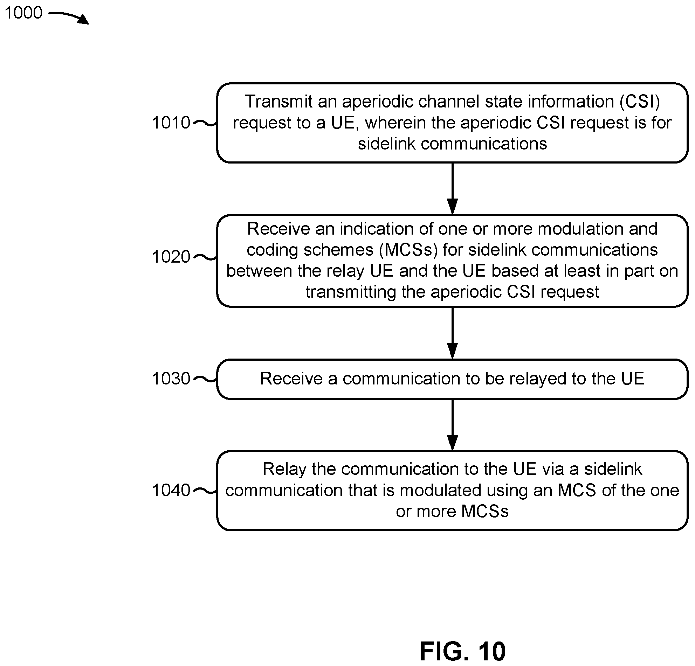

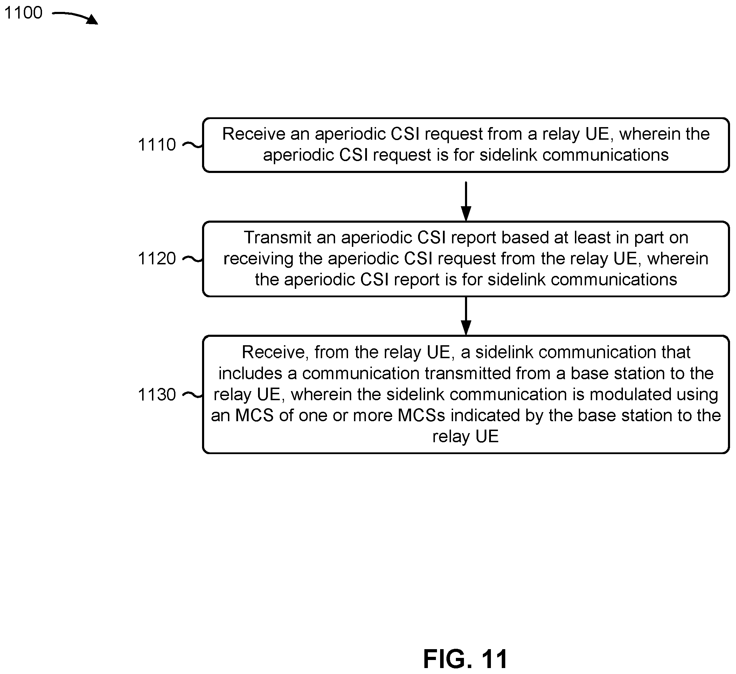

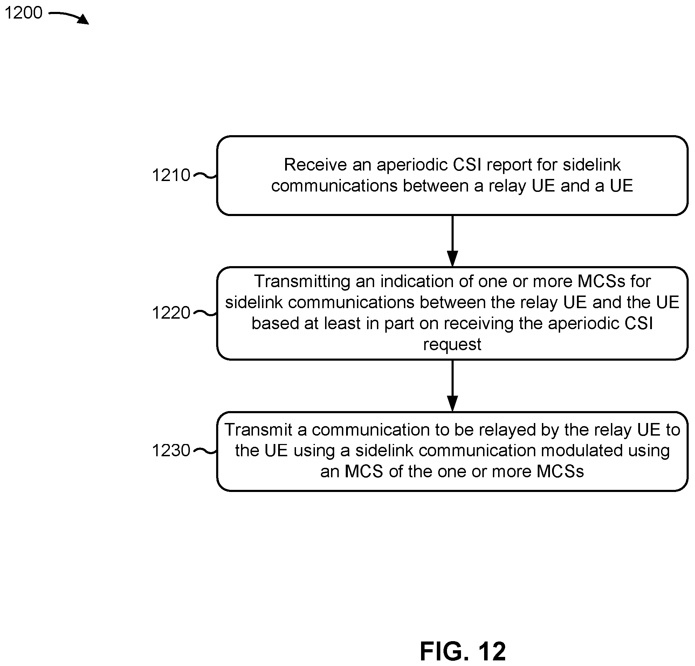

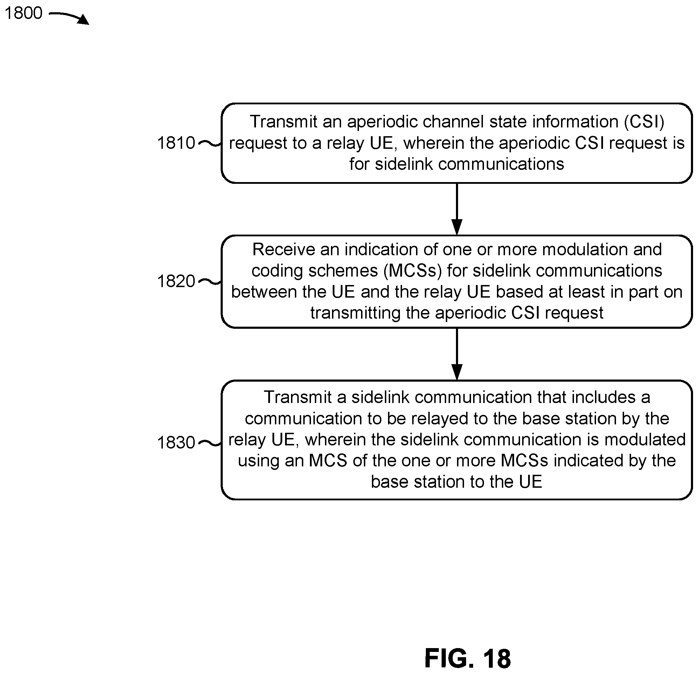

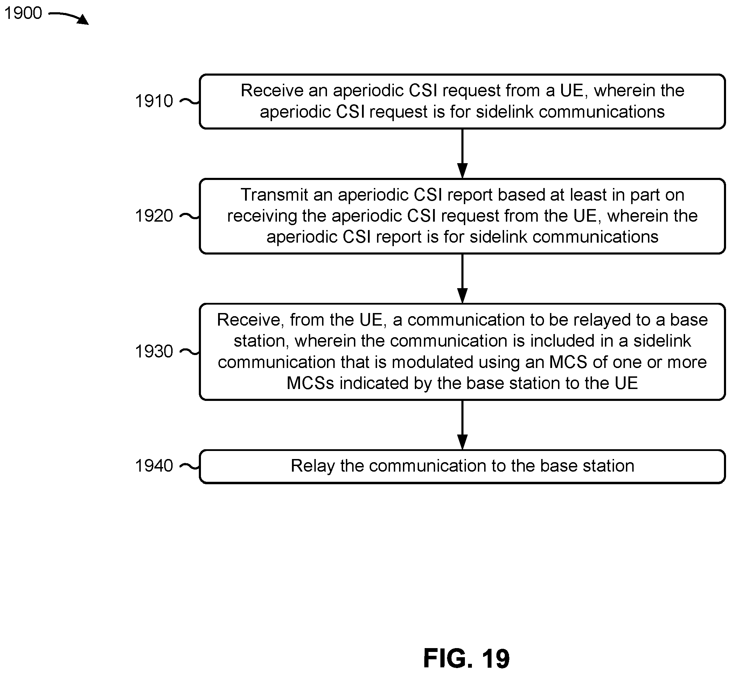

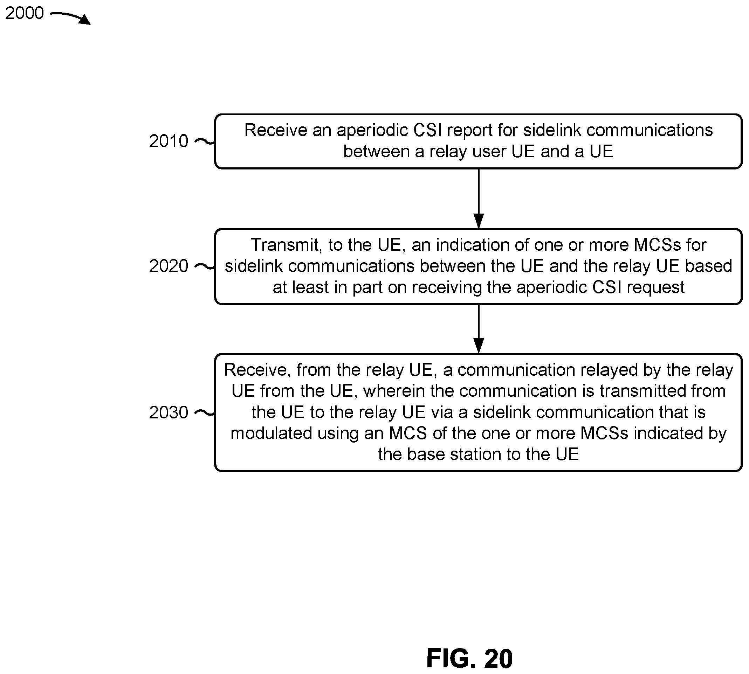

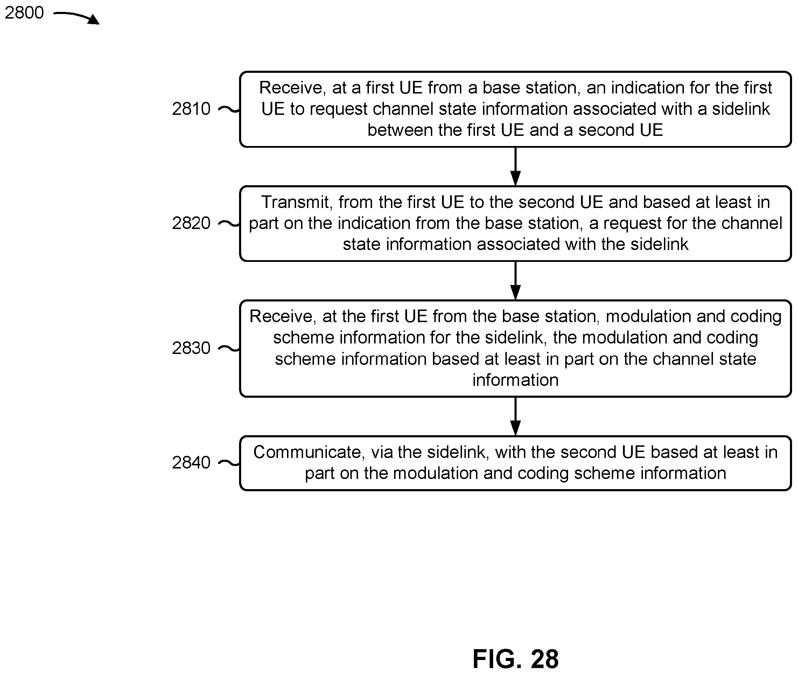

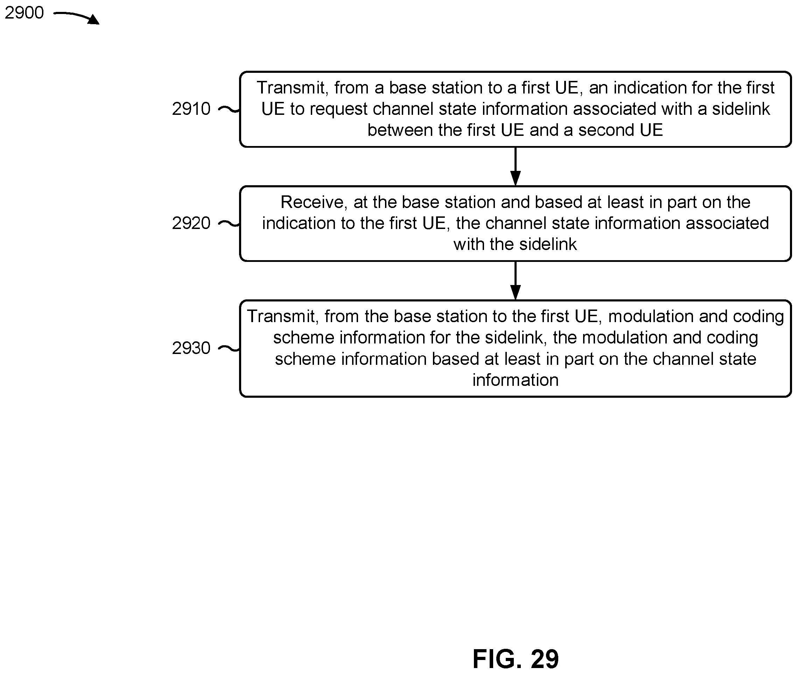

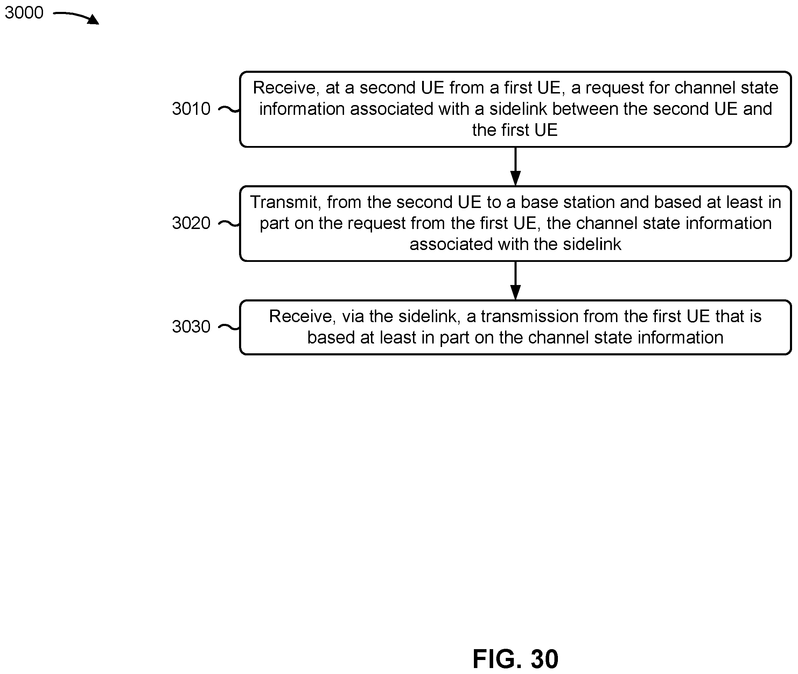

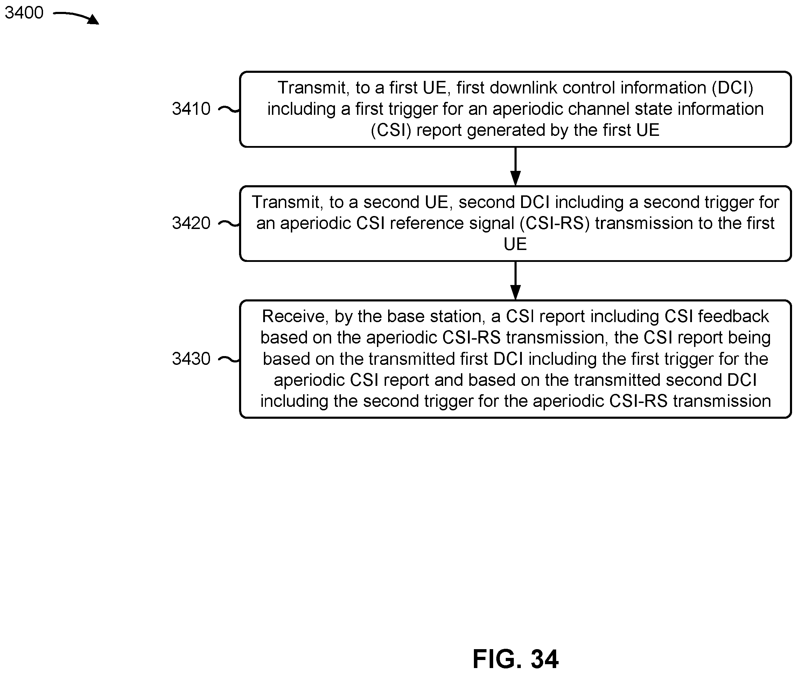

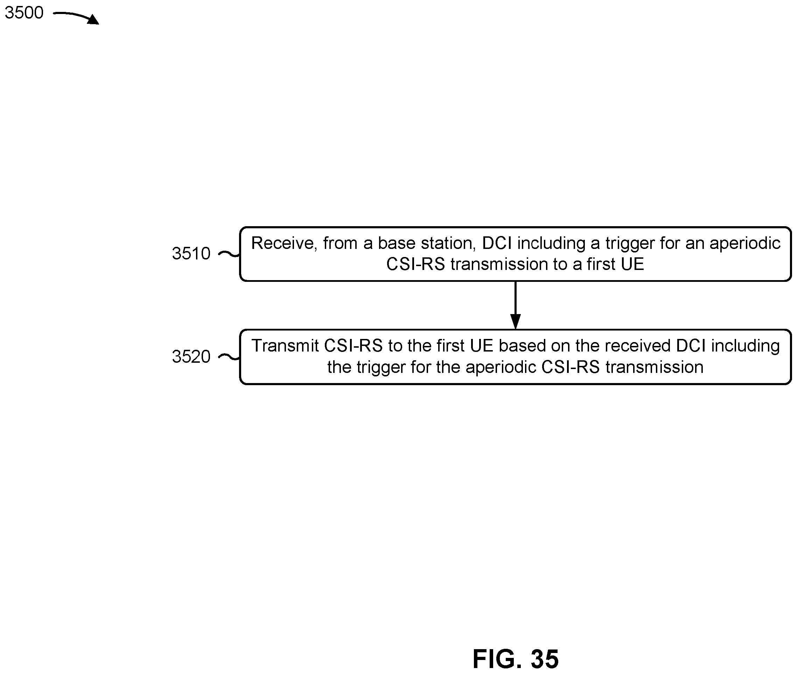

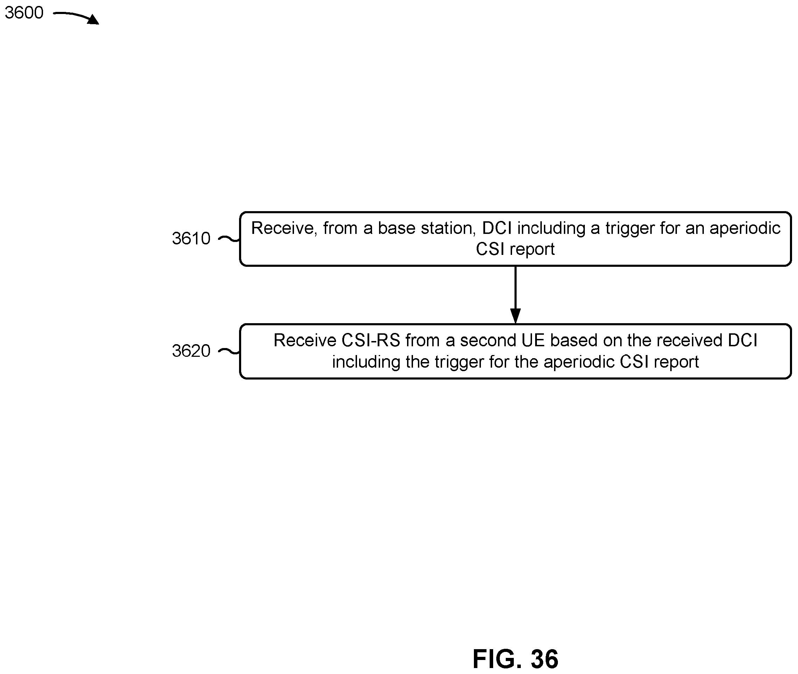

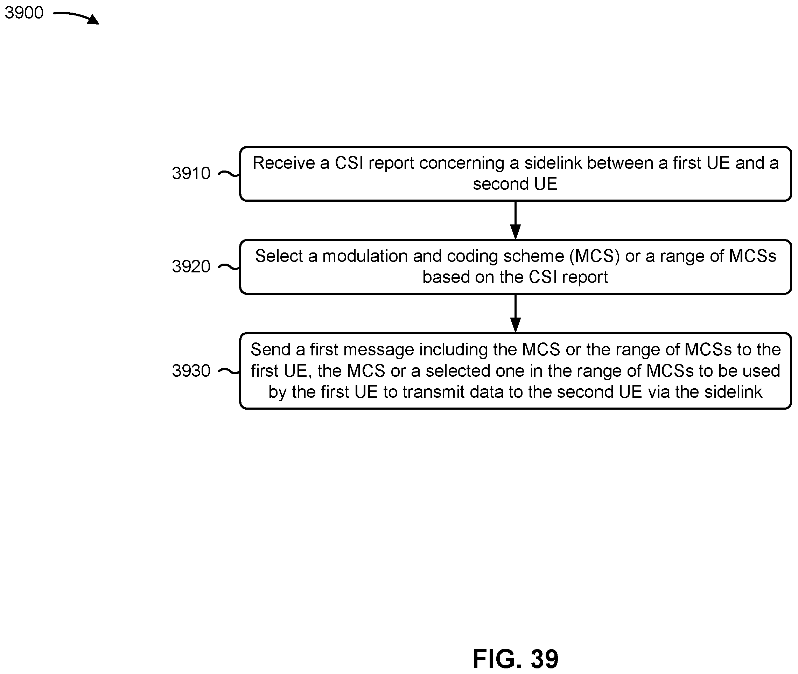

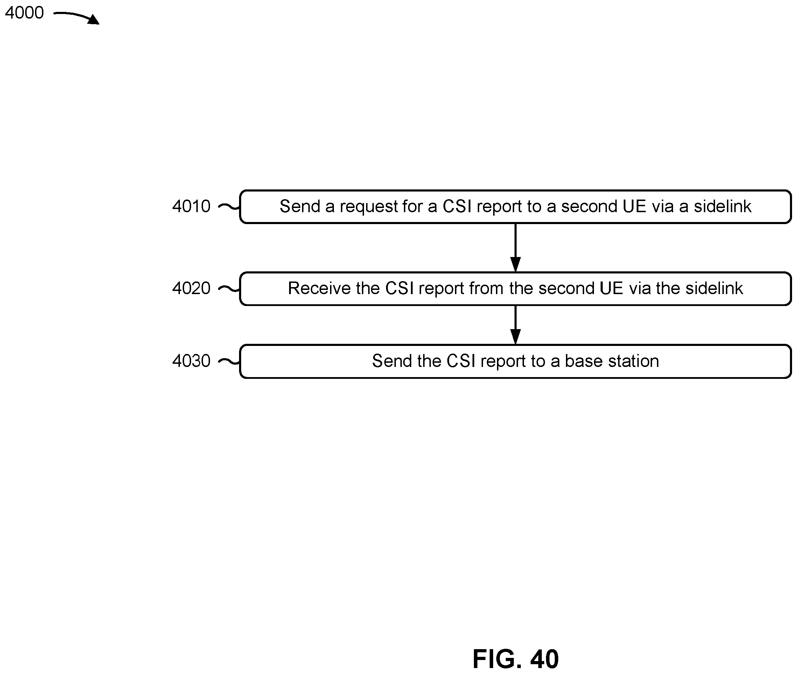

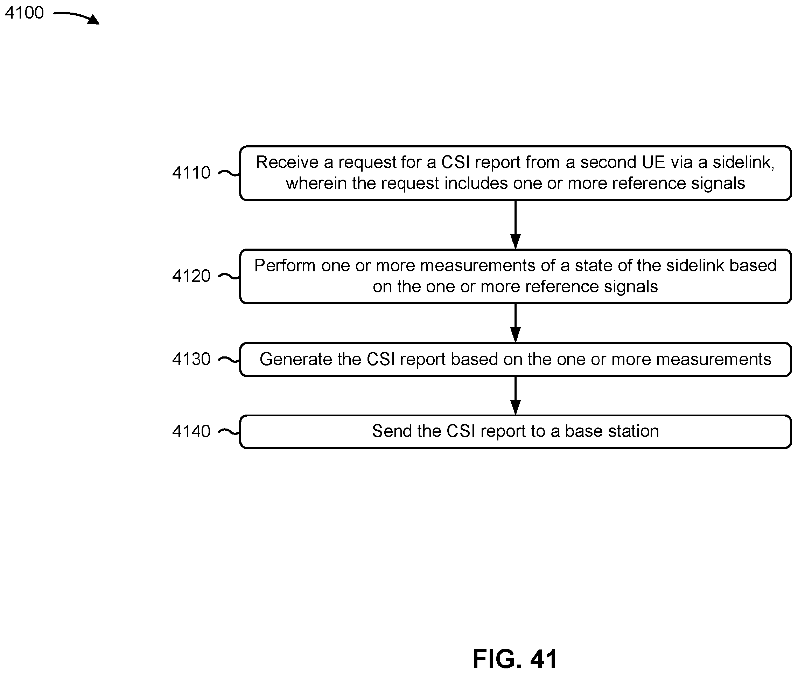

Controller/processor 240 of base station 110, controller/processor 280 of UE 120, and/or any other component(s) of Fig. 2 may perform one or more techniques associated with aperiodic channel state information (CSI) reporting and modulation and coding scheme (MCS) control with layer 2 relaying, as described in more detail elsewhere herein. For example, controller/processor 240 of base station 110, controller/processor 280 of UE 120, and/or any other component(s) of Fig. 2 may perform or direct operations of, for example, process 1000 of Fig. 10, process 1100 of Fig. 11, process 1200 of Fig. 12, process 1800 of Fig. 18, process 1900 of Fig. 19, process 2000 of Fig. 20, process 2800 of Fig. 28, process 2900 of Fig. 29, process 3000 of Fig. 30, process 3400 of Fig. 34, process 3500 of Fig. 35, process 3600 of Fig. 36, process 3900 of Fig. 39, process 4000 of Fig. 40, process 4100 of Fig. 41, and/or other processes as described herein. Memories 242 and 282 may store data and program codes for base station 110 and UE 120, respectively. In some aspects, memory 242 and/or memory 282 may comprise a non-transitory computer-readable medium storing one or more instructions for wireless communication. For example, the one or more instructions, when executed by one or more processors of the base station 110 and/or the UE 120, may perform or direct operations of, for example, process 1000 of Fig. 10, process 1100 of Fig. 11, process 1200 of Fig. 12, process 1800 of Fig. 18, process 1900 of Fig. 19, process 2000 of Fig. 20, process 2800 of Fig. 28, process 2900 of Fig. 29, process 3000 of Fig. 30, process 3400 of Fig. 34, process 3500 of Fig. 35, process 3600 of Fig. 36, process 3900 of Fig. 39, process 4000 of Fig. 40, process 4100 of Fig. 41, and/or other processes as described herein. A scheduler 246 may schedule UEs for data transmission on the downlink and/or uplink.

In some aspects, a relay UE (e.g., a first UE 120) may include means for transmitting an aperiodic CSI request to a UE (e.g., a second UE 120), wherein the aperiodic CSI request is for sidelink communications; means for receiving, from a base station (e.g., base station 110), an indication of one or more MCSs for sidelink communications between the relay UE and the UE based at least in part on transmitting the aperiodic CSI request; means for receiving, from the base station, a communication to be relayed to the UE; means for relaying the communication to the UE via a sidelink communication that is modulated using an MCS of the one or more MCSs; and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

In some aspects, a UE (e.g., a second UE 120) may include means for receiving an aperiodic CSI request from a relay UE (e.g., a first UE 120), wherein the aperiodic CSI request is for sidelink communications; means for transmitting an aperiodic CSI report based at least in part on receiving the aperiodic CSI request from the relay UE, wherein the aperiodic CSI report is for sidelink communications; means for receiving, from the relay UE, a sidelink communication that includes a communication transmitted from a base station (e.g., base station 110) to the relay UE, wherein the sidelink communication is modulated using an MCS of one or more MCSs indicated by the base station to the relay UE; and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

In some aspects, base station 110 may include means for receiving an aperiodic CSI report for sidelink communications between a relay UE and a UE; means for transmitting, to the relay UE, an indication of one or more MCSs for sidelink communications between the relay UE and the UE based at least in part on receiving the aperiodic CSI request; means for transmitting, to the relay UE, a communication to be relayed by the relay UE to the UE using a sidelink communication modulated using an MCS of the one or more MCSs; and/or the like. In some aspects, such means may include one or more components of base station 110 described in connection with Fig. 2, such as antenna 234, DEMOD 232, MIMO detector 236, receive processor 238, controller/processor 240, transmit processor 220, TX MIMO processor 230, MOD 232, antenna 234, and/or the like.

As indicated above, Fig. 2 is provided as an example. Other examples may differ from what is described with regard to Fig. 2.

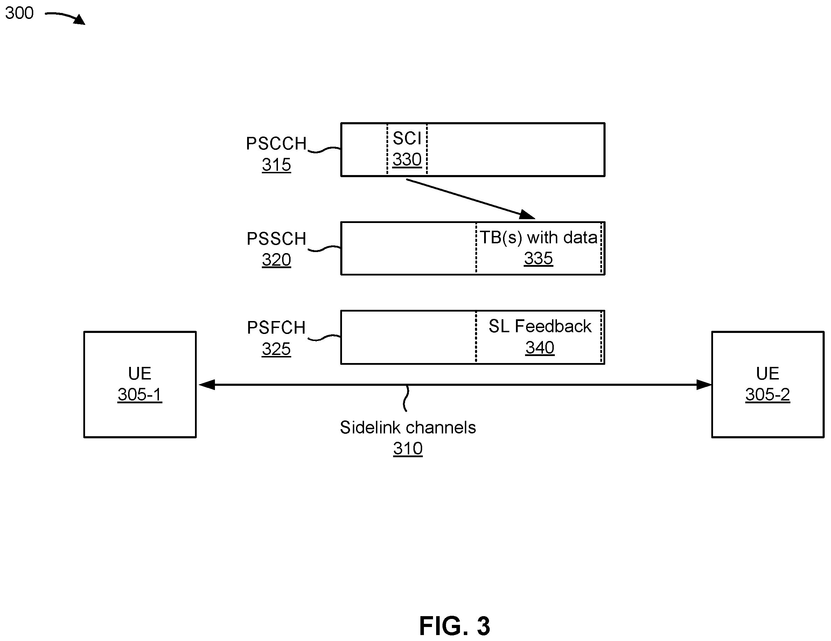

Fig. 3 is a diagram illustrating an example 300 of sidelink communications, in accordance with the present disclosure.

As shown in Fig. 3, a first UE 305-1 may communicate with a second UE 305-2 (and one or more other UEs 305) via one or more sidelink channels 310. The UEs 305-1 and 305-2 may communicate using the one or more sidelink channels 310 for P2P communications, D2D communications, V2X communications (e.g., which may include V2V communications, V2I communications, V2P communications, and/or the like), mesh networking, and/or the like. In some aspects, the UEs 305 (e.g., UE 305-1 and/or UE 305-2) may correspond to one or more other UEs described elsewhere herein, such as UE 120. In some aspects, one of the UEs (e.g., one of UE 305-1 or UE 305-2) is a UE (sometimes referred to as a remote UE) for which communications are relayed by a relay UE, and the other one of the UEs (e.g., the other one of UE 305-1 or UE 305-2) is the relay UE, as described in more detail elsewhere herein. In some aspects, the one or more sidelink channels 310 may use a PC5 interface and/or may operate in a high frequency band (e.g., the 5.9 GHz band). Additionally, or alternatively, the UEs 305 may synchronize timing of transmission time intervals (TTIs) (e.g., frames, subframes, slots, symbols, and/or the like) using global navigation satellite system (GNSS) timing.

As further shown in Fig. 3, the one or more sidelink channels 310 may include a physical sidelink control channel (PSCCH) 315, a physical sidelink shared channel (PSSCH) 320, and/or a physical sidelink feedback channel (PSFCH) 325. The PSCCH 315 may be used to communicate control information, similar to a physical downlink control channel (PDCCH) and/or a physical uplink control channel (PUCCH) used for cellular communications with a base station 110 via an access link or an access channel. The PSSCH 320 may be used to communicate data, similar to a physical downlink shared channel (PDSCH) and/or a physical uplink shared channel (PUSCH) used for cellular communications with a base station 110 via an access link or an access channel. For example, the PSCCH 315 may carry sidelink control information (SCI) 330, which may indicate various control information used for sidelink communications, such as one or more resources (e.g., time resources, frequency resources, spatial resources, and/or the like) where a transport block (TB) 335 may be carried on the PSSCH 320. The TB 335 may include data. The PSFCH 325 may be used to communicate sidelink feedback 340, such as hybrid automatic repeat request (HARQ) feedback (e.g., acknowledgement or negative acknowledgement (ACK/NACK) information), transmit power control (TPC), a scheduling request (SR), and/or the like.

In some aspects, the one or more sidelink channels 310 may use resource pools. For example, a scheduling assignment (e.g., included in SCI 330) may be transmitted in subchannels using specific resource blocks (RBs) across time. In some aspects, data transmissions (e.g., on the PSSCH 320) associated with a scheduling assignment may occupy adjacent RBs in the same subframe as the scheduling assignment (e.g., using frequency division multiplexing). In some aspects, a scheduling assignment and associated data transmissions are not transmitted on adjacent RBs.

In some aspects, a UE 305 may operate using a transmission mode where resource selection and/or scheduling is performed by the UE 305 (e.g., rather than a base station 110). In some aspects, the UE 305 may perform resource selection and/or scheduling by sensing channel availability for transmissions. For example, the UE 305 may measure a received signal strength indicator (RSSI) parameter (e.g., a sidelink-RSSI (S-RSSI) parameter) associated with various sidelink channels, may measure a reference signal received power (RSRP) parameter (e.g., a PSSCH-RSRP parameter) associated with various sidelink channels, may measure a reference signal received quality (RSRQ) parameter (e.g., a PSSCH-RSRQ parameter) associated with various sidelink channels, and/or the like, and may select a channel for transmission of a sidelink communication based at least in part on the measurement(s).

Additionally, or alternatively, the UE 305 may perform resource selection and/or scheduling using SCI 330 received in the PSCCH 315, which may indicate occupied resources, channel parameters, and/or the like. Additionally, or alternatively, the UE 305 may perform resource selection and/or scheduling by determining a channel busy rate (CBR) associated with various sidelink channels, which may be used for rate control (e.g., by indicating a maximum number of resource blocks that the UE 305 can use for a particular set of subframes).

In the transmission mode where resource selection and/or scheduling is performed by a UE 305, the UE 305 may generate sidelink grants, and may transmit the grants in SCI 330. A sidelink grant may indicate, for example, one or more parameters (e.g., transmission parameters) to be used for an upcoming sidelink transmission, such as one or more resource blocks to be used for the upcoming sidelink transmission on the PSSCH 320 (e.g., for TBs 335), one or more subframes to be used for the upcoming sidelink transmission, an MCS to be used for the upcoming sidelink transmission, and/or the like. In some aspects, a UE 305 may generate a sidelink grant that indicates one or more parameters for semi-persistent scheduling (SPS), such as a periodicity of a sidelink transmission. Additionally, or alternatively, the UE 305 may generate a sidelink grant for event-driven scheduling, such as for an on-demand sidelink message.

As indicated above, Fig. 3 is provided as an example. Other examples may differ from what is described with respect to Fig. 3.

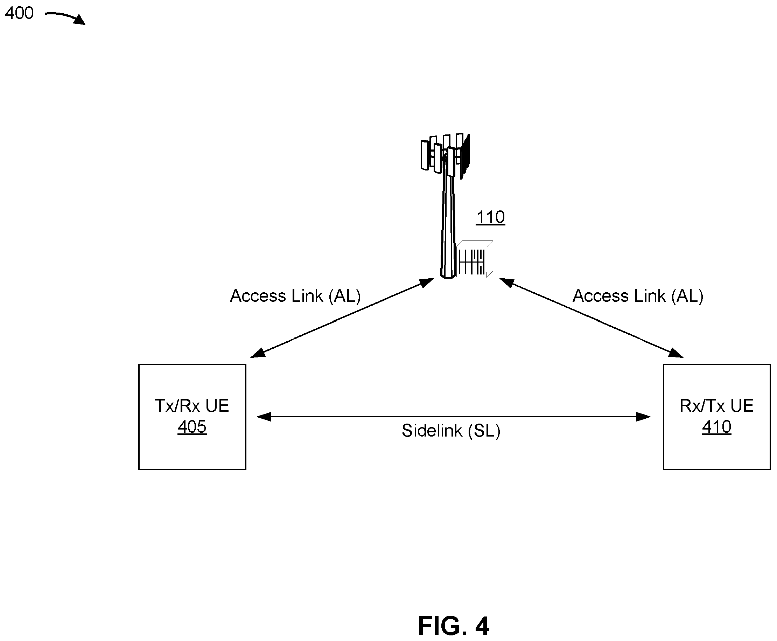

Fig. 4 is a diagram illustrating an example 400 of sidelink communications and access link communications, in accordance with the present disclosure.

As shown in Fig. 4, a transmitter (Tx) UE 405 and a receiver (Rx) UE 410 may communicate with one another via a sidelink, as described above in connection with Fig. 3. As further shown, in some sidelink modes, a base station 110 may communicate with the Tx UE 405 via a first access link. Additionally, or alternatively, in some sidelink modes, the base station 110 may communicate with the Rx UE 410 via a second access link. The Tx UE 405 and/or the Rx UE 410 may correspond to one or more UEs described elsewhere herein, such as the UE 120 of Fig. 1. In some aspects, one of the Tx UE 405 or the Rx UE 410 is a UE (sometimes referred to as a remote UE) for which communications are relayed by a relay UE, and the other one of the Tx UE 405 or the Rx UE 410 is the relay UE, as described in more detail elsewhere herein. Thus, "sidelink" may refer to a direct link between UEs 120, and "access link" may refer to a direct link between a base station 110 and a UE 120. Sidelink communications may be transmitted via the sidelink, and access link communications may be transmitted via the access link. An access link communication may be either a downlink communication (from a base station 110 to a UE 120) or an uplink communication (from a UE 120 to a base station 110).

As indicated above, Fig. 4 is provided as an example. Other examples may differ from what is described with respect to Fig. 4.

Fig. 5 is a diagram illustrating an example 500 of a relay UE that relays communications between a UE and a base station, in accordance with the present disclosure. As shown, example 500 includes a UE 505, a relay UE 510, and a base station 110. In example 500, the UE 505 is a Tx UE, and the relay UE 510 is an Rx UE, as described elsewhere herein. In some aspects, the UE 505 is one UE 120, and the relay UE 510 is another UE 120. In some aspects, the UE 505 may be referred to as a remote UE.

As shown in Fig. 5, the UE 505 may transmit a communication (e.g., data, control information, and/or the like) directly to the base station 110 as an uplink communication 515. Additionally, or alternatively, the UE 505 may transmit a communication (e.g., data, control information, and/or the like) indirectly to the base station 110 via the relay UE 510. For example, the UE 505 may transmit the communication to the relay UE 510 as a sidelink communication 520, and the relay UE 510 may relay (e.g., forward, transmit, and/or the like) the communication to the base station 110 as an uplink communication 525.

In some aspects, the UE 505 may communicate directly with the base station 110 via a direct link 530. For example, the uplink communication 515 may be transmitted via the direct link 530. A communication transmitted via the direct link 530 between the UE 505 and the base station 110 (e.g., in the uplink communication 515) does not pass through and is not relayed by the relay UE 510. In some aspects, the UE 505 may communicate indirectly with the base station 110 via an indirect link 535. For example, the sidelink communication 520 and the uplink communication 525 may be transmitted via different segments of the indirect link 535. A communication transmitted via the indirect link 535 between the UE 505 and the base station 110 (e.g., in the sidelink communication 520 and the uplink communication 525) passes through and is relayed by the relay UE 510.

Using the communication scheme shown in Fig. 5 may improve network performance and increase reliability by providing the UE 505 with link diversity for communicating with the base station 110. For millimeter wave (e.g., frequency range 2, or FR2) communications, which are susceptible to link blockage and link impairment, this link diversity may improve reliability and prevent multiple retransmissions of data that would otherwise need to be retransmitted in order to achieve a successful communication. However, techniques described herein are not limited to millimeter wave communications, and may be used for sub-6 gigahertz (e.g., frequency range 1, or FR1) communications.

In some cases, the UE 505 may transmit a communication (e.g., the same communication) to the base station 110 via both the direct link 530 and the indirect link 535. In other cases, the UE 505 may select one of the links (e.g., either the direct link 530 or the indirect link 535), and may transmit a communication to the base station 110 using only the selected link. Alternatively, the UE 505 may receive an indication of one of the links (e.g., either the direct link 530 or the indirect link 535), and may transmit a communication to the base station 110 using only the indicated link. The indication may be transmitted by the base station 110 and/or the relay UE 510. In some aspects, such selection and/or indication may be based at least in part on channel conditions, link reliability, and/or the like.

As indicated above, Fig. 5 is provided as an example. Other examples may differ from what is described with respect to Fig. 5.

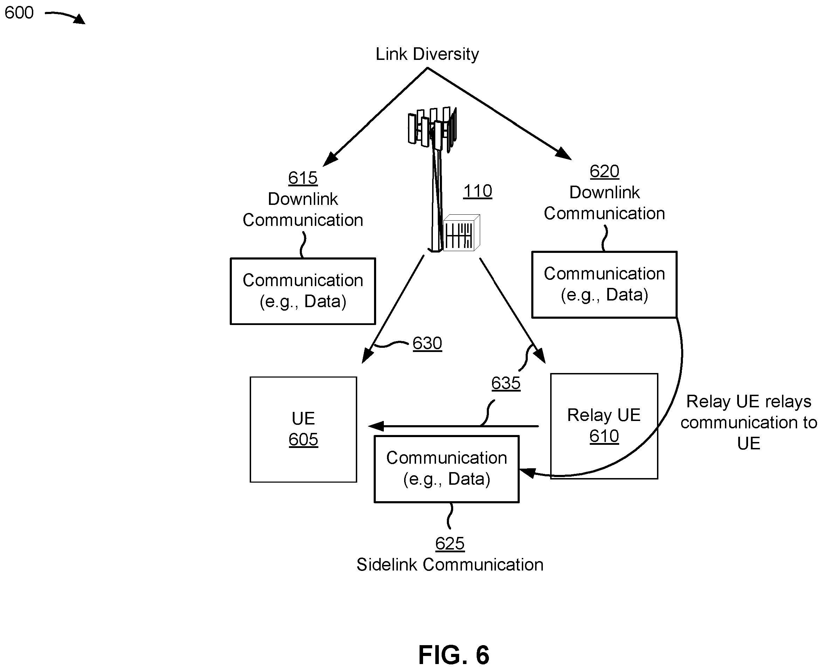

Fig. 6 is a diagram illustrating an example 600 of a relay UE that relays communications between a UE and a base station, in accordance with the present disclosure. As shown, example 600 includes a UE 605, a relay UE 610, and a base station 110. In example 600, the UE 605 is an Rx UE, and the relay UE 610 is a Tx UE. In some aspects, the UE 605 is one UE 120, and the relay UE 610 is another UE 120. In some aspects, the UE 605 may be referred to as a remote UE.

As shown in Fig. 6, the UE 605 may receive a communication (e.g., data, control information, and/or the like) directly from the base station 110 as a downlink communication 615. Additionally, or alternatively, the UE 605 may receive a communication (e.g., data, control information, and/or the like) indirectly from the base station 110 via the relay UE 610. For example, the base station 110 may transmit the communication to the relay UE 610 as a downlink communication 620, and the relay UE 610 may relay (e.g., forward, transmit, and/or the like) the communication to the UE 605 as a sidelink communication 625.

In some aspects, the UE 605 may communicate directly with the base station 110 via a direct link 630. For example, the downlink communication 615 may be transmitted via the direct link 630. A communication transmitted via the direct link 630 between the UE 605 and the base station 110 (e.g., in the downlink communication 615) does not pass through and is not relayed by the relay UE 610. In some aspects, the UE 605 may communicate indirectly with the base station 110 via an indirect link 635. For example, the downlink communication 620 and the sidelink communication 625 may be transmitted via different segments of the indirect link 635. A communication transmitted via the indirect link 635 between the UE 605 and the base station 110 (e.g., in the downlink communication 620 and the sidelink communication 625) passes through and is relayed by the relay UE 610. As described above in connection with Fig. 5, using the communication scheme shown in Fig. 6 may improve network performance and increase reliability by providing the UE 605 with link diversity for communicating with the base station 110.

In some cases, the UE 605 may receive a communication (e.g., the same communication) from the base station 110 via both the direct link 630 and the indirect link 635. In other cases, the base station 110 may select one of the links (e.g., either the direct link 630 or the indirect link 635), and may transmit a communication to the UE 605 using only the selected link. Alternatively, the base station 110 may receive an indication of one of the links (e.g., either the direct link 630 or the indirect link 635), and may transmit a communication to the UE 605 using only the indicated link. The indication may be transmitted by the UE 605 and/or the relay UE 610. In some aspects, such selection and/or indication may be based at least in part on channel conditions, link reliability, and/or the like.

As indicated above, Fig. 6 is provided as an example. Other examples may differ from what is described with respect to Fig. 6.

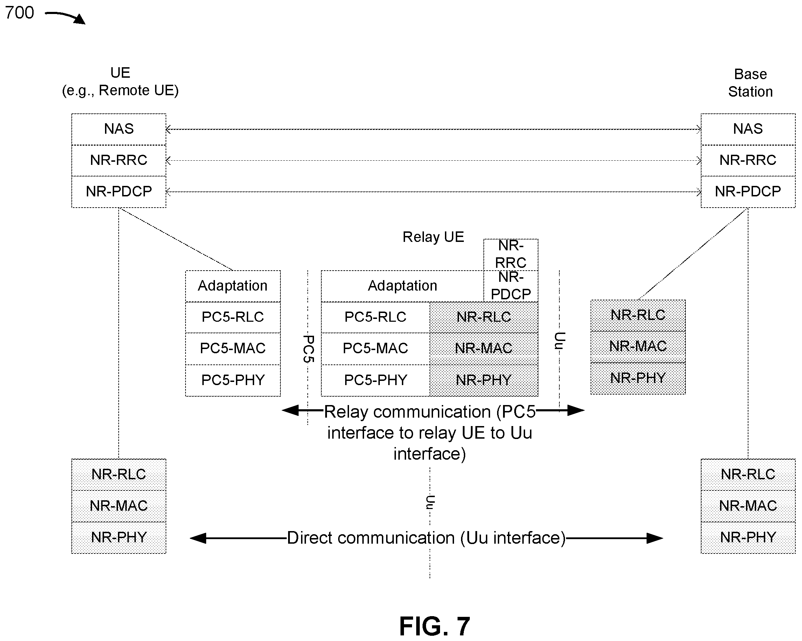

Fig. 7 is a diagram illustrating an example 700 of a protocol stack for relaying communications between a UE and a base station via a relay UE that uses layer 2 relaying, in accordance with the present disclosure.

As shown in Fig. 7, an NR protocol stack includes a non-access stratum (NAS) layer, a radio resource control (RRC) layer, a packet data convergence protocol (PDCP) layer, and/or the like. The PDCP layer may be layer 2 in the NR protocol stack and may include multiple sub-layers. For example, the PDCP layer may include an adaptation sub-layer (e.g., a service data adaptation protocol (SDAP) sub-layer), a radio link control (RLC) sub-layer, a MAC sub-layer, a physical (PHY) sub-layer, and/or the like.

When communicating directly with a base station (e.g., via a Uu interface), a UE (e.g., a remote UE) may communicate at an NR-RLC sub-layer, an NR-MAC sub-layer, and an NR-PHY layer. However, in a relay scenario, the UE may communicate via a PC5 interface (or another sidelink interface) with a relay UE. For example, the UE may include a PC5-RLC sub-layer, a PC5-MAC sub-layer, and a PC5-PHY sub-layer to communicate with a corresponding PC5-RLC sub-layer, PC5-MAC sub-layer, and PC5-PHY sub-layer of the relay UE. The relay UE may also include an NR-RLC sub-layer, an NR-MAC sub-layer, and an NR-PHY sub-layer to communicate via a Uu interface with corresponding sub-layers of the base station. Based at least in part on passing information between PC5 sub-layers and NR sub-layers, the relay UE enables layer 2 relaying between the UE and the base station.

For aperiodic CSI reporting for sidelink communications, a Tx UE may transmit an aperiodic CSI request to an Rx UE, and may transmit one or more CSI reference signals (CSI-RSs). The Rx UE may measure the CSI-RS(s) to calculate CSI, which may include a channel quality indicator (CQI) value, a precoding matrix indicator (PMI) value, a rank indicator (RI) value, a signal to interference plus noise ratio (SINR) value, a reference signal received power (RSRP) value, and/or the like. The Rx UE may transmit a CSI report to the Tx UE (e.g., in a MAC control element) to indicate the CSI calculated by the Rx UE. The Tx UE may determine one or more transmission parameters for a sidelink communication to be transmitted to the Rx UE based at least in part on the CSI. The one or more transmission parameters may include, for example, an MCS, a transport block (TB) size, a resource allocation, a transmit power, and/or the like.

However, in a sidelink transmission mode where a base station assists with scheduling and/or controlling sidelink communications, the aperiodic CSI reporting procedure described above does not enable the base station to assist with selection or control of the transmission parameter(s). As a result, one or more base station objectives may not be satisfied. For example, a base station may be unable to control a packet error rate (PER) associated with communications between the base station and a UE, and thus may not be capable of satisfying a target PER using the aperiodic CSI reporting procedure described above. Some techniques and apparatuses described herein enable a base station to satisfy one or more base station objectives and assist with scheduling and/or controlling sidelink communications between a UE and a relay UE based at least in part on an aperiodic CSI report.

As indicated above, Fig. 7 is provided as an example. Other examples may differ from what is described with respect to Fig. 7.

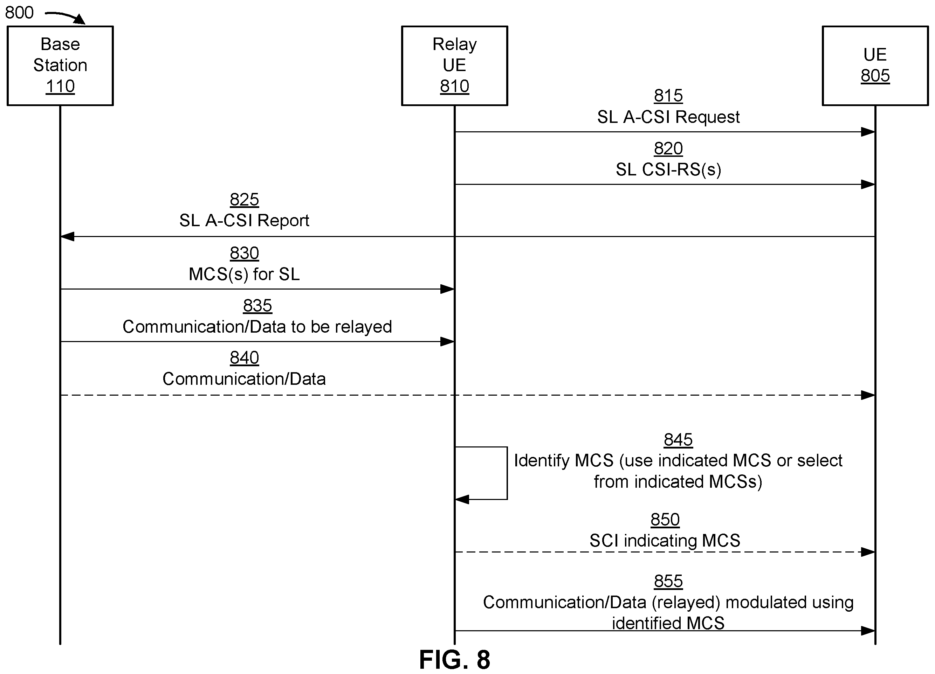

Fig. 8 is a diagram illustrating an example 800 of aperiodic CSI reporting and MCS control with layer 2 relaying, in accordance with the present disclosure. As shown in Fig. 8, a base station 110, a UE 805, and a relay UE 810 may communicate with one another. The UE 805 and the relay UE 810 may communicate with one another via a sidelink. The base station 110 and the relay UE 810 may communicate with one another via an access link. The UE 805 and the base station 110 may communicate with one another via a direct link (e.g., an access link, such as when communications between the UE 805 and the base station 110 are not relayed by the relay UE 810) and/or via an indirect link (e.g., an access link and a sidelink, such as when communications between the UE 805 and the base station 110 are relayed by the relay UE 810). In some aspects, the UE 805 and/or the relay UE 810 may be a UE described elsewhere herein in connection with Figs. 1-7. For example, the relay UE 810 may be configured to relay communications between the base station 110 and the UE 805. In some aspects, the relay UE 810 provides a layer 2 relay service for the UE 805, as described above in connection with Fig. 7. In example 800, the relay UE 810 is a Tx UE and the UE 805 is an Rx UE.

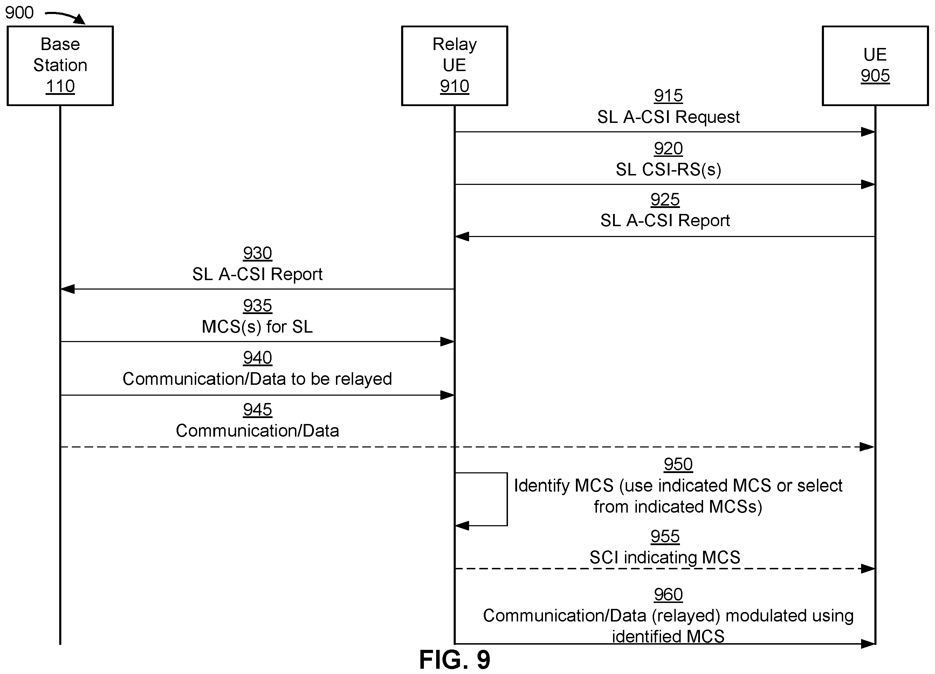

As shown by reference number 815, the relay UE 810 may transmit a sidelink (SL) aperiodic CSI (A-CSI) request to the UE 805. The SL A-CSI request may include a request for the UE 805 to measure CSI-RSs and/or to calculate CSI for sidelink communications. For example, the SL A-CSI request may include a request for the UE 805 to calculate CSI on a sidelink channel between the UE 805 and the relay UE 810 (e.g., by measuring CSI-RSs transmitted by the relay UE 810), and for the UE 805 to report the calculated CSI. In some aspects, the SL A-CSI request may instruct the UE 805 to report the calculated CSI (e.g., in an SL A-CSI report) to the base station 110, the details of which are described below. In some aspects, the SL A-CSI request may instruct the UE 805 to report the calculated CSI (e.g., in an SL A-CSI report) to the relay UE 810, the details of which are described in connection with Fig. 9. In some aspects, the SL A-CSI request may instruct the UE 805 to report the calculated CSI (e.g., in an SL A-CSI report) to both the base station 110 and the relay UE 810.

As shown by reference number 820, the relay UE 810 may transmit one or more CSI-RSs. In some aspects, the resources that carry the CSI-RSs are indicated in the SL A-CSI request. Additionally, or alternatively, the resources that carry the CSI-RSs may be indicated in a configuration message transmitted to the UE 805 (e.g., by the relay UE 810 and/or the base station 110). The UE 805 may measure the CSI-RSs transmitted by the relay UE 810 (e.g., on a sidelink channel). The UE 805 may calculate CSI for the sidelink channel based at least in part on measuring the CSI-RSs. The calculated CSI may include, for example, a CQI value, a PMI value, an RI value, a SINR value, an RSRP value, and/or the like.

As shown by reference number 825, the UE 805 may transmit an SL A-CSI report to the base station 110. The SL A-CSI report may include the CSI calculated by the UE 805 for a sidelink channel, as described above. In some aspects, the UE 805 may transmit the SL A-CSI report to the base station 110 based at least in part on an indication (e.g., from the base station 110 and/or the relay UE 810) that the SL A-CSI report is to be transmitted to the base station 110. For example, the indication may be included in the SL A-CSI request from the relay UE 810, a configuration message from the base station 110 (e.g., a radio resource control (RRC) message), and/or the like. In some aspects, the UE 805 may transmit the SL A-CSI report to the base station 110 in accordance with a wireless communication standard. The UE 805 may transmit the SL A-CSI report to the base station 110 in a MAC-CE, in a MAC payload, in uplink control information (UCI), and/or the like. In some aspects, the UE 805 may transmit the SL A-CSI report to the relay UE 810 in addition to the base station 110. The details of transmitting the SL A-CSI report to the relay UE 810 are described below in connection with Fig. 9.

As shown by reference number 830, the base station 110 may transmit an indication of one or more MCSs, for sidelink communications between the relay UE 810 and the UE 805, to the relay UE 810. The base station 110 may determine (e.g., identify, select, and/or the like) the one or more MCSs based at least in part on receiving the SL A-CSI report from the UE 805. In some aspects, the base station 110 may determine the one or more MCSs based at least in part on a configuration of the base station 110. For example, the base station 110 may determine the one or more MCSs based at least in part on a base station objective (e.g., a rule or objective stored in memory of the base station 110). In some aspects, the base station 110 may determine the one or more MCSs in order to satisfy one or more base station objectives, such as a target PER, a target block error rate (BLER), and/or the like.

In some aspects, the base station 110 may determine a single MCS, and may indicate the single MCS to the relay UE 810. In some aspects, the base station 110 may determine multiple MCSs, and may indicate the multiple MCSs to the relay UE 810. For example, the base station 110 may determine a range of MCSs (e.g., range of MCS index values), and may indicate the range of MCSs to the relay UE 810. In some aspects, the base station 110 may transmit (e.g., relay or forward) the SL A-CSI report, received from the UE 805, to the relay UE 810. The base station 110 may indicate the one or more MCSs and/or may transmit the SL A-CSI report to the relay UE 810 in a MAC-CE, in a MAC payload, in downlink control information (DCI), in a sidelink grant for the sidelink communication that is to carry the communication transmitted by the base station 110 and intended for the UE 805, and/or the like

As shown by reference number 835, the base station 110 may transmit a communication (e.g., data, control information, and/or the like), intended for the UE 805, to the relay UE 810. In some aspects, the base station 110 may indicate, to the relay UE 810, that the communication is to be relayed to the UE 805. For example, the base station 110 may use DCI, that schedules the communication, to indicate that the communication is to be relayed to the UE 805. Additionally, or alternatively, the communication may include a header or other information that indicates that the communication is to be relayed to the UE 805.

As shown by reference number 840, in some aspects, the base station 110 may also transmit the communication (e.g., the same data, the same control information, and/or the like) directly to the UE 805 (e.g., via a direct link and/or an access link, as described elsewhere herein). As described elsewhere herein, in some aspects, the base station 110 may transmit a communication (e.g., the same communication) to the UE 805 via both a direct link and an indirect link to improve link diversity. Alternatively, the base station 110 may select one of the links (e.g., either the direct link or the indirect link), and may transmit a communication to the UE 805 using only the selected link. In some aspects, the base station 110 may receive an indication of one of the links (e.g., either the direct link or the indirect link), and may transmit a communication to the UE 805 using only the indicated link. The indication may be transmitted by the UE 805 and/or the relay UE 810. In some aspects, such selection and/or indication may be based at least in part on channel conditions, channel measurements (e.g., a comparison of SL A-CSI and access link CSI, such as downlink A-CSI), link reliability, and/or the like.

As shown by reference number 845, the relay UE 810 may identify an MCS to be used for relaying the communication, received from the base station 110 and intended for the UE 805, to the UE 805. The MCS may be used for a sidelink communication that includes the communication (e.g., the control information, the data, and/or the like). As shown, if the base station 110 indicates a single MCS to the relay UE 810 (as described in connection with reference number 830), then the relay UE 810 may use the single MCS (e.g., the indicated MCS) for the sidelink communication (e.g., to modulate and/or encode the sidelink communication). As also shown, if the base station 110 indicates multiple MCSs (e.g., a range of MCSs) to the relay UE 810, then the relay UE 810 may select an MCS, of the multiple MCSs, and may use the selected MCS for the sidelink communication. In some aspects, the relay UE 810 may select the MCS based at least in part on the SL A-CSI report, which may be received from the UE 805 and/or the base station 110.

As shown by reference number 850, in some aspects, the relay UE 810 may transmit sidelink control information (SCI) to the UE 805 to schedule the sidelink communication. In this case, the relay UE 810 may indicate the identified MCS, to be used for the sidelink communication, in the SCI. In some aspects, the relay UE 810 may not transmit the SCI, in which case the UE 805 may use blind demodulation and/or blind decoding for the sidelink communication (e.g., by testing multiple MCS hypotheses).

As shown by reference number 855, the relay UE 810 may relay the communication (e.g., the data, the control information, and/or the like), received from the base station 110, to the UE 805 via a sidelink communication. As shown, the relay UE 810 may modulate the sidelink communication using the identified MCS. The UE 805 may receive the sidelink communication and may demodulate and/or decode the sidelink communication based at least in part on the MCS to obtain the communication transmitted by the base station 110 and relayed by the relay UE 810. As described above, the MCS may be indicated to the UE 805 in SCI, or the UE 805 may perform blind demodulation and/or blind decoding using multiple MCSs.

Although techniques and operations are described herein in connection with using an SL A-CSI report to assist a base station 110 with determining an MCS to be used for a sidelink communication that is to include a communication to be relayed from the base station 110 to the UE 805 via the relay UE 810, these techniques and operations may be applied to determine one or more other transmission parameters (e.g., in addition to MCS or as an alternative to MCS). For example, the techniques and operations described herein may be used to assist a base station 110 with determining a TB size, a resource allocation, a transmit power, a retransmission configuration (e.g., whether to enable or disable retransmissions or a maximum number of retransmissions, among other examples), and/or the like, to be used for a sidelink communication that is to include a communication to be relayed from the base station 110 to the UE 805 via the relay UE 810.

Using the aperiodic CSI reporting procedure described in connection with Fig. 8 enables the base station 110 to assist with scheduling and/or controlling sidelink communications by selecting and/or controlling one or more transmission parameters, such as MCS. As a result, the base station 110 may be enabled to satisfy one or more base station objectives, such as a target PER associated with communications between the base station 110 and the UE 805, a target BLER associated with communications between the base station 110 and the UE 805, and/or the like.

As indicated above, Fig. 8 is provided as an example. Other examples may differ from what is described with respect to Fig. 8.

Fig. 9 is a diagram illustrating an example 900 of aperiodic CSI reporting and MCS control with layer 2 relaying, in accordance with the present disclosure. As shown in Fig. 9, a base station 110, a UE 905, and a relay UE 910 may communicate with one another. The UE 905 and the relay UE 910 may communicate with one another via a sidelink. The base station 110 and the relay UE 910 may communicate with one another via an access link. The UE 905 and the base station 110 may communicate with one another via a direct link (e.g., an access link, such as when communications between the UE 905 and the base station 110 are not relayed by the relay UE 910) and/or via an indirect link (e.g., an access link and a sidelink, such as when communications between the UE 905 and the base station 110 are relayed by the relay UE 910). In some aspects, the UE 905 and/or the relay UE 910 may be a UE described elsewhere herein in connection with Figs. 1-7. For example, the relay UE 910 may be configured to relay communications between the base station 110 and the UE 905. In some aspects, the relay UE 910 provides a layer 2 relay service for the UE 905, as described above in connection with Fig. 7. In example 900, the relay UE 910 is a Tx UE and the UE 905 is an Rx UE.

As shown by reference number 915, the relay UE 910 may transmit an SL A-CSI request to the UE 905, as described above in connection with Fig. 8. As shown by reference number 920, the relay UE 910 may transmit one or more CSI-RSs, as described above in connection with Fig. 8.

As shown by reference number 925, the UE 905 may transmit an SL A-CSI report to the relay UE 910. The SL A-CSI report may include the CSI calculated by the UE 905 for a sidelink channel, as described above. In some aspects, the UE 905 may transmit the SL A-CSI report to the relay UE 910 based at least in part on an indication (e.g., from the base station 110 and/or the relay UE 910) that the SL A-CSI report is to be transmitted to the relay UE 910. For example, the indication may be included in the SL A-CSI request from the relay UE 910, a configuration message from the base station 110 (e.g., an RRC message), and/or the like. In some aspects, the UE 905 may transmit the SL A-CSI report to the relay UE 910 in accordance with a wireless communication standard. The UE 905 may transmit the SL A-CSI report to the relay UE 910 in a MAC-CE, in a MAC payload, in SCI, and/or the like. In some aspects, the UE 905 may transmit the SL A-CSI report to the base station 110 in addition to the relay UE 910. The details of transmitting the SL A-CSI report to the base station 110 are described above in connection with Fig. 8.

As shown by reference number 930, the relay UE 910 may transmit (e.g., relay, forward, and/or the like) the SL A-CSI report, received from the UE 905, to the base station 110. The SL A-CSI report may include the CSI calculated by the UE 905 for a sidelink channel, as described above. The relay UE 910 may transmit the SL A-CSI report to the base station 110 in a MAC-CE, in a MAC payload, in UCI, and/or the like. In some aspects, the relay UE 910 may indicate the UE 905 associated with the SL A-CSI report (e.g., using a UE identifier that identifies the UE 905).

As shown by reference number 935, the base station 110 may transmit an indication of one or more MCSs, for sidelink communications between the relay UE 910 and the UE 905, to the relay UE 910, as described above in connection with Fig. 8. The base station 110 may determine (e.g., identify, select, and/or the like) the one or more MCSs based at least in part on receiving the SL A-CSI report from the relay UE 910.

As shown by reference number 940, the base station 110 may transmit a communication (e.g., data, control information, and/or the like), intended for the UE 905, to the relay UE 910, as described above in connection with Fig. 8. As shown by reference number 945, in some aspects, the base station 110 may also transmit the communication (e.g., the same data, the same control information, and/or the like) directly to the UE 905 (e.g., via a direct link and/or an access link, as described elsewhere herein), as described above in connection with Fig. 8.

As shown by reference number 950, the relay UE 910 may identify an MCS to be used for relaying the communication, received from the base station 110 and intended for the UE 905, to the UE 905, as described above in connection with Fig. 8. As shown by reference number 955, in some aspects, the relay UE 910 may transmit SCI to the UE 905 to schedule the sidelink communication, as described above in connection with Fig. 8. As shown by reference number 960, the relay UE 910 may relay the communication (e.g., the data, the control information, and/or the like), received from the base station 110, to the UE 905 via a sidelink communication, as described above in connection with Fig. 8.

Although techniques and operations are described herein in connection with using an SL A-CSI report to assist a base station 110 with determining an MCS to be used for a sidelink communication that is to include a communication to be relayed from the base station 110 to the UE 905 via the relay UE 910, these techniques and operations may be applied to determine one or more other transmission parameters (e.g., in addition to MCS or as an alternative to MCS). For example, the techniques and operations described herein may be used to assist a base station 110 with determining a TB size, a resource allocation, a transmit power, a retransmission configuration (e.g., whether to enable or disable retransmissions or a maximum number of retransmissions, among other examples), and/or the like, to be used for a sidelink communication that is to include a communication to be relayed from the base station 110 to the UE 905 via the relay UE 910.

Using the aperiodic CSI reporting procedure described in connection with Fig. 9 enables the base station 110 to assist with scheduling and/or controlling sidelink communications by selecting and/or controlling one or more transmission parameters, such as MCS. As a result, the base station 110 may be enabled to satisfy one or more base station objectives, such as a target PER associated with communications between the base station 110 and the UE 905, a target BLER associated with communications between the base station 110 and the UE 905, and/or the like.

As indicated above, Fig. 9 is provided as an example. Other examples may differ from what is described with respect to Fig. 9.

Fig. 10 is a diagram illustrating an example process 1000 performed, for example, by a relay UE, in accordance with the present disclosure. Example process 1000 is an example where the relay UE (e.g., UE 120, relay UE 810, relay UE 910, and/or the like) performs operations associated with aperiodic CSI reporting and MCS control with layer 2 relaying.

As shown in Fig. 10, in some aspects, process 1000 may include transmitting an aperiodic CSI request to a UE, wherein the aperiodic CSI request is for sidelink communications (block 1010). For example, the relay UE (e.g., using transmit processor 264, controller/processor 280, memory 282, and/or the like) may transmit an aperiodic CSI request to a UE, as described above. In some aspects, the aperiodic CSI request is for sidelink communications.

As further shown in Fig. 10, in some aspects, process 1000 may include receiving, from a base station, an indication of one or more MCSs for sidelink communications between the relay UE and the UE based at least in part on transmitting the aperiodic CSI request (block 1020). For example, the relay UE (e.g., using receive processor 258, controller/processor 280, memory 282, and/or the like) may receive, from a base station, an indication of one or more MCSs for sidelink communications between the relay UE and the UE based at least in part on transmitting the aperiodic CSI request, as described above.

As further shown in Fig. 10, in some aspects, process 1000 may include receiving, from the base station, a communication to be relayed to the UE (block 1030). For example, the relay UE (e.g., using receive processor 258, controller/processor 280, memory 282, and/or the like) may receive, from the base station, a communication to be relayed to the UE, as described above.

As further shown in Fig. 10, in some aspects, process 1000 may include relaying the communication to the UE via a sidelink communication that is modulated using an MCS of the one or more MCSs (block 1040). For example, the relay UE (e.g., using transmit processor 264, controller/processor 280, memory 282, MOD 254, and/or the like) may relay the communication to the UE via a sidelink communication that is modulated using an MCS of the one or more MCSs, as described above.

Process 1000 may include additional aspects, such as any single aspect or any combination of aspects described below and/or in connection with one or more other processes described elsewhere herein.

In a first aspect, the relay UE relays communications between the UE and the base station.

In a second aspect, alone or in combination with the first aspect, process 1000 includes receiving an aperiodic CSI report from the UE based at least in part on transmitting the aperiodic CSI request to the UE, wherein the aperiodic CSI report is for sidelink communications; transmitting the aperiodic CSI report to the base station; and receiving, from the base station, the indication of the one or more MCSs for sidelink communications based at least in part on transmitting the aperiodic CSI report to the base station.

In a third aspect, alone or in combination with one or more of the first and second aspects, the aperiodic CSI report is transmitted to the base station in at least one of a MAC-CE, a MAC payload, uplink control information, or a combination thereof.

In a fourth aspect, alone or in combination with one or more of the first through third aspects, the indication of the one or more MCSs is received from the base station in at least one of a MAC-CE, a MAC payload, downlink control information, a sidelink grant for the sidelink communication, or a combination thereof.

In a fifth aspect, alone or in combination with one or more of the first through fourth aspects, the relay UE provides a layer 2 relay service for the UE.

In a sixth aspect, alone or in combination with one or more of the first through fifth aspects, the one or more MCSs include multiple MCSs or a range of MCSs, and the relay UE selects the MCS, used to modulate the sidelink communication, from the multiple MCSs or the range of MCSs.

In a seventh aspect, alone or in combination with one or more of the first through sixth aspects, the one or more MCSs include a single MCS, and the relay UE uses the single MCS as the MCS used to modulate the sidelink communication.

Although Fig. 10 shows example blocks of process 1000, in some aspects, process 1000 may include additional blocks, fewer blocks, different blocks, or differently arranged blocks than those depicted in Fig. 10. Additionally, or alternatively, two or more of the blocks of process 1000 may be performed in parallel.

Fig. 11 is a diagram illustrating an example process 1100 performed, for example, by a UE, in accordance with the present disclosure. Example process 1100 is an example where the UE (e.g., UE 120, UE 805, UE 905, and/or the like) performs operations associated with aperiodic CSI reporting and MCS control with layer 2 relaying.

As shown in Fig. 11, in some aspects, process 1100 may include receiving an aperiodic CSI request from a relay UE, wherein the aperiodic CSI request is for sidelink communications (block 1110). For example, the UE (e.g., using receive processor 258, controller/processor 280, memory 282, and/or the like) may receive an aperiodic CSI request from a relay UE, as described above. In some aspects, the aperiodic CSI request is for sidelink communications.

As further shown in Fig. 11, in some aspects, process 1100 may include transmitting an aperiodic CSI report based at least in part on receiving the aperiodic CSI request from the relay UE, wherein the aperiodic CSI report is for sidelink communications (block 1120). For example, the UE (e.g., using transmit processor 264, controller/processor 280, memory 282, and/or the like) may transmit an aperiodic CSI report based at least in part on receiving the aperiodic CSI request from the relay UE, as described above. In some aspects, the aperiodic CSI report is for sidelink communications.

As further shown in Fig. 11, in some aspects, process 1100 may include receiving, from the relay UE, a sidelink communication that includes a communication transmitted from a base station to the relay UE, wherein the sidelink communication is modulated using an MCS of one or more MCSs indicated by the base station to the relay UE (block 1130). For example, the UE (e.g., using receive processor 258, transmit processor 264, controller/processor 280, memory 282, DEMOD 254, and/or the like) may receive, from the relay UE, a sidelink communication that includes a communication transmitted from a base station to the relay UE, as described above. In some aspects, the sidelink communication is modulated using an MCS of one or more MCSs indicated by the base station to the relay UE.

Process 1100 may include additional aspects, such as any single aspect or any combination of aspects described below and/or in connection with one or more other processes described elsewhere herein.

In a first aspect, the relay UE relays communications between the UE and the base station.

In a second aspect, alone or in combination with the first aspect, the aperiodic CSI report is transmitted to the relay UE.

In a third aspect, alone or in combination with one or more of the first and second aspects, the aperiodic CSI report is transmitted to the base station.

In a fourth aspect, alone or in combination with one or more of the first through third aspects, the aperiodic CSI report is transmitted to the base station in at least one of a MAC-CE, a MAC payload, uplink control information, or a combination thereof.

In a fifth aspect, alone or in combination with one or more of the first through fourth aspects, the relay UE provides a layer 2 relay service for the UE.

In a sixth aspect, alone or in combination with one or more of the first through fifth aspects, the MCS is indicated to the UE in sidelink control information received from the relay UE.

Although Fig. 11 shows example blocks of process 1100, in some aspects, process 1100 may include additional blocks, fewer blocks, different blocks, or differently arranged blocks than those depicted in Fig. 11. Additionally, or alternatively, two or more of the blocks of process 1100 may be performed in parallel.

Fig. 12 is a diagram illustrating an example process 1200 performed, for example, by a base station, in accordance with the present disclosure. Example process 1200 is an example where the base station (e.g., base station 110 and/or the like) performs operations associated with aperiodic CSI reporting and MCS control with layer 2 relaying.

As shown in Fig. 12, in some aspects, process 1200 may include receiving an aperiodic CSI report for sidelink communications between a relay UE and a UE (block 1210). For example, the base station (e.g., using receive processor 238, controller/processor 240, memory 242, and/or the like) may receive an aperiodic CSI report for sidelink communications between a relay UE and a UE, as described above.

As further shown in Fig. 12, in some aspects, process 1200 may include transmitting, to the relay UE, an indication of one or more MCSs for sidelink communications between the relay UE and the UE based at least in part on receiving the aperiodic CSI request (block 1220). For example, the base station (e.g., using transmit processor 220, controller/processor 240, memory 242, and/or the like) may transmit, to the relay UE, an indication of one or more MCSs for sidelink communications between the relay UE and the UE based at least in part on receiving the aperiodic CSI request, as described above.

As further shown in Fig. 12, in some aspects, process 1200 may include transmitting, to the relay UE, a communication to be relayed by the relay UE to the UE using a sidelink communication modulated using an MCS of the one or more MCSs (block 1230). For example, the base station (e.g., using transmit processor 220, controller/processor 240, memory 242, and/or the like) may transmit, to the relay UE, a communication to be relayed by the relay UE to the UE using a sidelink communication modulated using an MCS of the one or more MCSs, as described above.

Process 1200 may include additional aspects, such as any single aspect or any combination of aspects described below and/or in connection with one or more other processes described elsewhere herein.

In a first aspect, the relay UE relays communications between the UE and the base station.

In a second aspect, alone or in combination with the first aspect, the aperiodic CSI report is received from the relay UE.

In a third aspect, alone or in combination with one or more of the first and second aspects, the aperiodic CSI report is received from the UE.

In a fourth aspect, alone or in combination with one or more of the first through third aspects, the aperiodic CSI report is received in at least one of a MAC-CE, a MAC payload, uplink control information, or a combination thereof.

In a fifth aspect, alone or in combination with one or more of the first through fourth aspects, the indication of the one or more MCSs is transmitted in at least one of a MAC-CE, a MAC payload, downlink control information, a sidelink grant for the sidelink communication, or a combination thereof.

In a sixth aspect, alone or in combination with one or more of the first through fifth aspects, process 1200 includes determining the one or more MCSs based at least in part on the aperiodic CSI report and a configuration of the base station.

In a seventh aspect, alone or in combination with one or more of the first through sixth aspects, the relay UE provides a layer 2 relay service for the UE.

In an eighth aspect, alone or in combination with one or more of the first through seventh aspects, process 1200 includes transmitting the communication directly to the UE.

Although Fig. 12 shows example blocks of process 1200, in some aspects, process 1200 may include additional blocks, fewer blocks, different blocks, or differently arranged blocks than those depicted in Fig. 12. Additionally, or alternatively, two or more of the blocks of process 1200 may be performed in parallel.

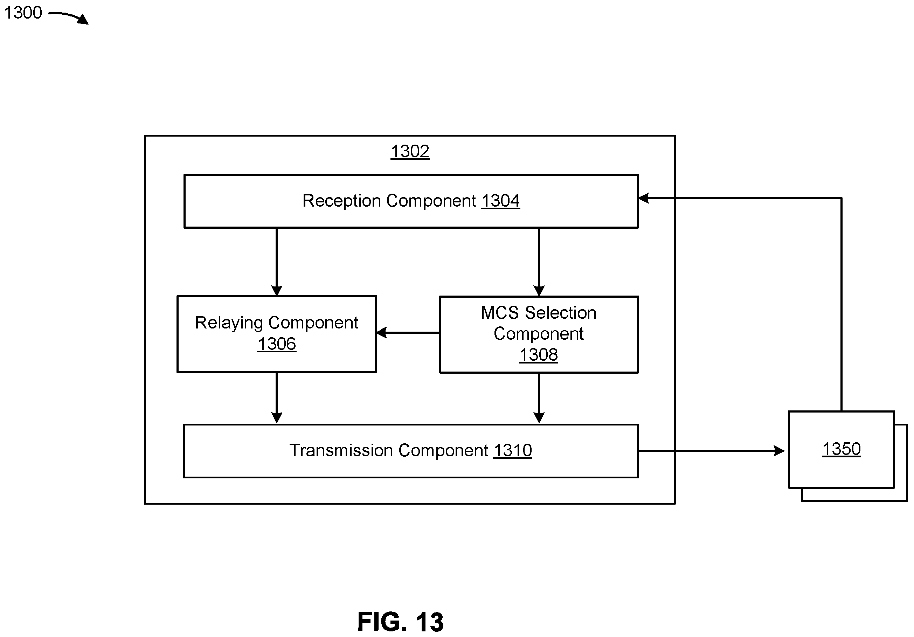

Fig. 13 is a conceptual data flow diagram 1300 illustrating a data flow between different components in an example apparatus 1302. The apparatus 1302 may be a relay UE. In some aspects, the apparatus 1302 includes a reception component 1304, a relaying component 1306, an MCS selection component 1308, and/or a transmission component 1310. As shown, the apparatus 1302 may communicate with another apparatus 1350 (e.g., a UE, a base station, and/or another wireless communication device) using the reception component 1304 and/or the transmission component 1310.

The transmission component 1310 may transmit an aperiodic CSI request to a first apparatus 1350-1 (e.g., a UE). The aperiodic CSI request may be for sidelink communications. The reception component 1304 may receive, from a second apparatus 1350-2 (e.g., a base station), an indication of one or more MCSs for sidelink communications between the apparatus 1302 and the first apparatus 1350-1 based at least in part on transmitting the aperiodic CSI request. The reception component 1304 may receive, from the second apparatus 1350-2 (e.g., the base station), a communication to be relayed to the first apparatus 1350-1 (e.g., the UE). The relaying component 1306, which may be integrated into and/or a part of the transmission component 1310 in some aspects, may relay the communication to the first apparatus 1350-1 (e.g., the UE) via a sidelink communication that is modulated using an MCS of the one or more MCSs. The MCS selection component may select an MCS, for the sidelink communication, from the one or more indicated MCSs.

In some aspects, the reception component 1304 may receive an aperiodic CSI report from the first apparatus 1350-1 (e.g., the UE) based at least in part on transmitting the aperiodic CSI request to the first apparatus 1350-1 (e.g., the UE). The aperiodic CSI report may be for sidelink communications. In this case, the transmission component 1310 may transmit the aperiodic CSI report to the second apparatus 1350-2 (e.g., the base station). The reception component 1304 may receive, from the second apparatus 1350-2 (e.g., the base station), the indication of the one or more MCSs for sidelink communications based at least in part on transmitting the aperiodic CSI report to the base station.

The apparatus may include additional components that perform each of the blocks of the algorithm in the aforementioned process 1000 of Fig. 10 and/or the like. Each block in the aforementioned process 1000 of Fig. 10 and/or the like may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

The number and arrangement of components shown in Fig. 13 are provided as an example. In practice, there may be additional components, fewer components, different components, or differently arranged components than those shown in Fig. 13. Furthermore, two or more components shown in Fig. 13 may be implemented within a single component, or a single component shown in Fig. 13 may be implemented as multiple, distributed components. Additionally, or alternatively, a set of components (e.g., one or more components) shown in Fig. 13 may perform one or more functions described as being performed by another set of components shown in Fig. 13.

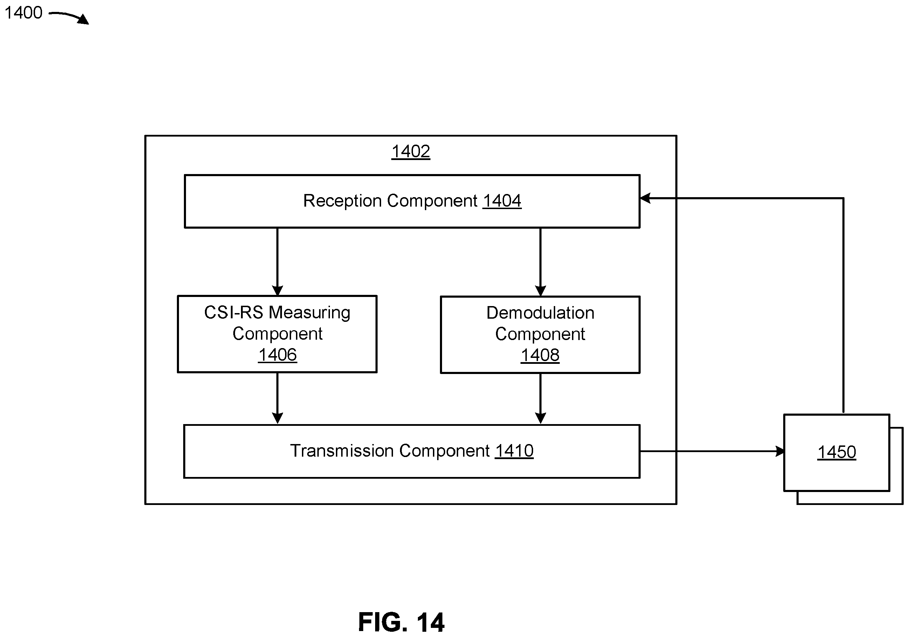

Fig. 14 is a conceptual data flow diagram 1400 illustrating a data flow between different components in an example apparatus 1402. The apparatus 1402 may be a UE. In some aspects, the apparatus 1402 includes a reception component 1404, a CSI-RS measuring component 1406, a demodulation component 1408, and/or a transmission component 1410. As shown, the apparatus 1402 may communicate with another apparatus 1450 (e.g., a relay UE, a base station, and/or another wireless communication device) using the reception component 1404 and/or the transmission component 1410.

The reception component 1404 may receive an aperiodic CSI request from a first apparatus (e.g., a relay UE). The aperiodic CSI request may be for sidelink communications. The CSI-RS measuring component 1406, which may be integrated into and/or a part of the reception component 1404 in some aspects, may measure CSI-RSs transmitted by the first apparatus (e.g., the relay UE) to generate an aperiodic CSI report. The transmission component 1410 may transmit the aperiodic CSI report based at least in part on receiving the aperiodic CSI request from the relay UE and/or measuring the CSI-RSs. The aperiodic CSI report may be for sidelink communications. The reception component 1404 may receive, from the first apparatus (e.g., the relay UE), a sidelink communication that includes a communication transmitted from a second apparatus (e.g., a base station) to the first apparatus (e.g., the relay UE). The sidelink communication may be modulated using an MCS of one or more MCSs indicated by the second apparatus (e.g., the base station) to the first apparatus (e.g., the relay UE). The demodulation component may demodulate and/or decode the sidelink communication based at least in part on the MCS, which may be indicated to the apparatus 1402 via the first apparatus (e.g., the relay UE) and/or received by the apparatus 1402 using the reception component 1404.

The apparatus may include additional components that perform each of the blocks of the algorithm in the aforementioned process 1100 of Fig. 11 and/or the like. Each block in the aforementioned process 1100 of Fig. 11 and/or the like may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

The number and arrangement of components shown in Fig. 14 are provided as an example. In practice, there may be additional components, fewer components, different components, or differently arranged components than those shown in Fig. 14. Furthermore, two or more components shown in Fig. 14 may be implemented within a single component, or a single component shown in Fig. 14 may be implemented as multiple, distributed components. Additionally, or alternatively, a set of components (e.g., one or more components) shown in Fig. 14 may perform one or more functions described as being performed by another set of components shown in Fig. 14.

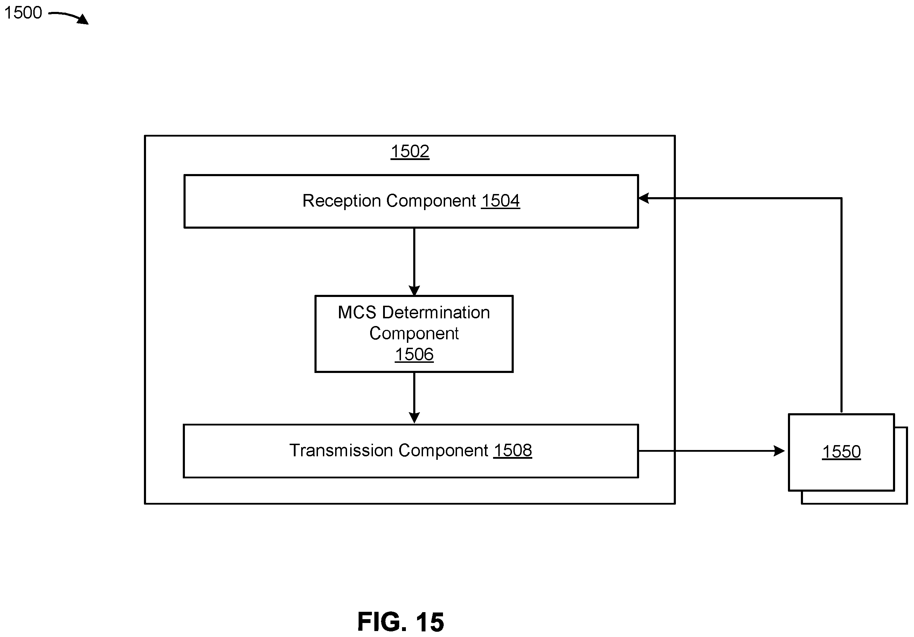

Fig. 15 is a conceptual data flow diagram 1500 illustrating a data flow between different components in an example apparatus 1502. The apparatus 1502 may be a base station. In some aspects, the apparatus 1502 includes a reception component 1504, an MCS determination component 1506, and/or a transmission component 1508. As shown, the apparatus 1502 may communicate with another apparatus 1550 (e.g., a UE, a relay UE, and/or another wireless communication device) using the reception component 1504 and/or the transmission component 1508.

The reception component 1504 may receive an aperiodic CSI report for sidelink communications between a first apparatus 1550-1 (e.g., a relay UE) and a second apparatus 1550-2 (e.g., a UE). The MCS determination component 1506 may determine one or more MCSs based at least in part on the aperiodic CSI report and/or one or more configurations, objectives, and/or rules stored by the apparatus 1502. The transmission component 1508 may transmit, to the first apparatus 1550-1 (e.g., the relay UE), an indication of one or more MCSs for sidelink communications between the first apparatus 1550-1 (e.g., the relay UE) and the second apparatus 1550-2 (e.g., the UE) based at least in part on receiving the aperiodic CSI request and/or determining the one or more MCSs. The transmission component 1508 may transmit, to the first apparatus 1550-1 (e.g., the relay UE), a communication to be relayed by the first apparatus 1550-1 (e.g., the relay UE) to the second apparatus 1550-2 (e.g., the UE) using a sidelink communication modulated using an MCS of the one or more MCSs.

The apparatus may include additional components that perform each of the blocks of the algorithm in the aforementioned process 1200 of Fig. 12 and/or the like. Each block in the aforementioned process 1200 of Fig. 12 and/or the like may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

The number and arrangement of components shown in Fig. 15 are provided as an example. In practice, there may be additional components, fewer components, different components, or differently arranged components than those shown in Fig. 15. Furthermore, two or more components shown in Fig. 15 may be implemented within a single component, or a single component shown in Fig. 15 may be implemented as multiple, distributed components. Additionally, or alternatively, a set of components (e.g., one or more components) shown in Fig. 15 may perform one or more functions described as being performed by another set of components shown in Fig. 15.

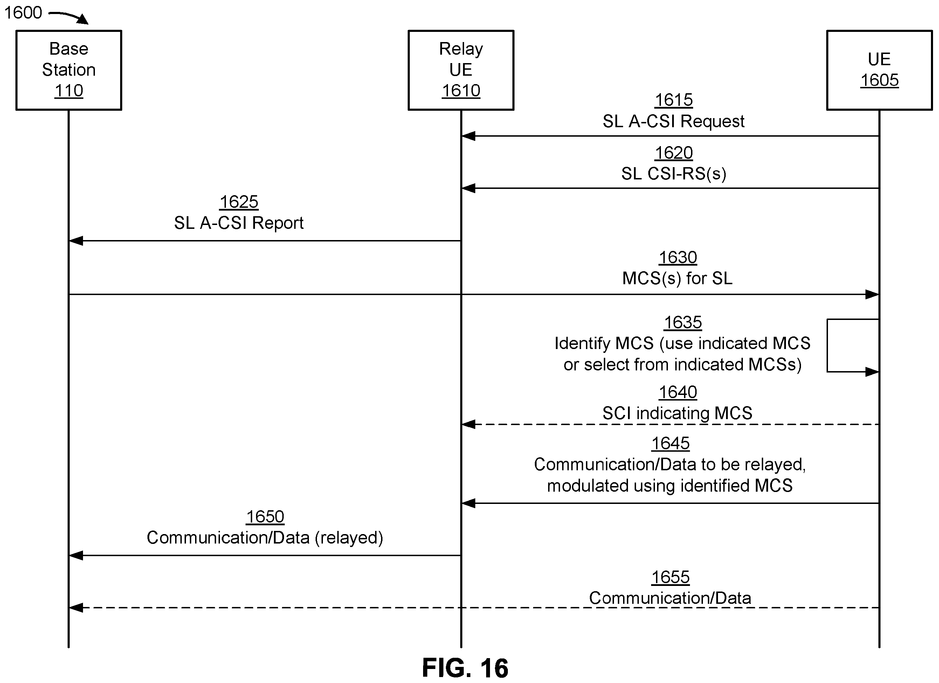

Fig. 16 is a diagram illustrating an example 1600 of aperiodic CSI reporting and MCS control with layer 2 relaying, in accordance with the present disclosure. As shown in Fig. 16, a base station 110, a UE 1605, and a relay UE 1610 may communicate with one another. The UE 1605 and the relay UE 1610 may communicate with one another via a sidelink. The base station 110 and the relay UE 1610 may communicate with one another via an access link. The UE 1605 and the base station 110 may communicate with one another via a direct link (e.g., an access link, such as when communications between the UE 1605 and the base station 110 are not relayed by the relay UE 1610) and/or via an indirect link (e.g., an access link and a sidelink, such as when communications between the UE 1605 and the base station 110 are relayed by the relay UE 1610). In some aspects, the UE 1605 and/or the relay UE 1610 may be a UE described elsewhere herein in connection with Figs. 1-7. For example, the relay UE 1610 may be configured to relay communications between the base station 110 and the UE 1605. In some aspects, the relay UE 1610 provides a layer 2 relay service for the UE 1605, as described above in connection with Fig. 7. In example 1600, the UE 1605 is a Tx UE and the relay UE 1610 is an Rx UE.

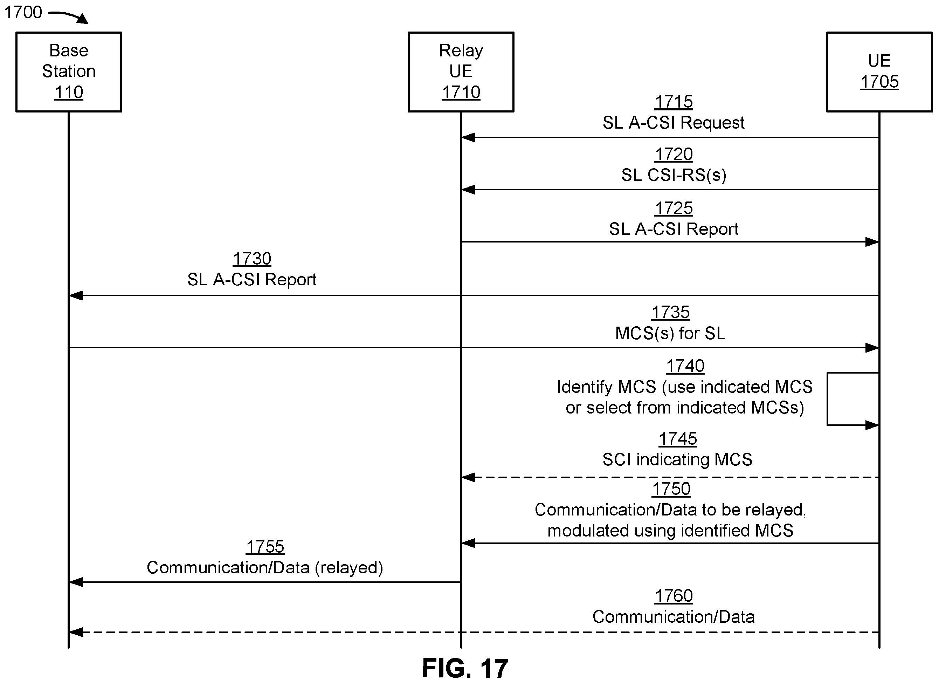

As shown by reference number 1615, the UE 1605 may transmit an SL A-CSI request to the relay UE 1610. The SL A-CSI request may include a request for the relay UE 1610 to measure CSI-RSs and/or to calculate CSI for sidelink communications. For example, the SL A-CSI request may include a request for the relay UE 1610 to calculate CSI for a sidelink channel between the relay UE 1610 and the UE 1605 (e.g., by measuring CSI-RSs transmitted by the UE 1605), and for the relay UE 1610 to report the calculated CSI. In some aspects, the SL A-CSI request may instruct the relay UE 1610 to report the calculated CSI (e.g., in an SL A-CSI report) to the base station 110, the details of which are described below. In some aspects, the SL A-CSI request may instruct the relay UE 1610 to report the calculated CSI (e.g., in an SL A-CSI report) to the UE 1605, the details of which are described in connection with Fig. 17. In some aspects, the SL A-CSI request may instruct the relay UE 1610 to report the calculated CSI (e.g., in an SL A-CSI report) to both the base station 110 and the UE 1605.

As shown by reference number 1620, the UE 1605 may transmit one or more CSI-RSs. In some aspects, the resources that carry the CSI-RSs are indicated in the SL A-CSI request. Additionally, or alternatively, the resources that carry the CSI-RSs may be indicated in a configuration message transmitted to the relay UE 1610 (e.g., by the UE 1605 and/or the base station 110). The relay UE 1610 may measure the CSI-RSs transmitted by the UE 1605 (e.g., on a sidelink channel). The relay UE 1610 may calculate CSI for the sidelink channel based at least in part on measuring the CSI-RSs. The calculated CSI may include, for example, a CQI value, a PMI value, an RI value, a SINR value, an RSRP value, and/or the like.

As shown by reference number 1625, the relay UE 1610 may transmit an SL A-CSI report to the base station 110. The SL A-CSI report may include the CSI calculated by the relay UE 1610 for a sidelink channel, as described above. In some aspects, the relay UE 1610 may transmit the SL A-CSI report to the base station 110 based at least in part on an indication (e.g., from the base station 110 and/or the UE 1605) that the SL A-CSI report is to be transmitted to the base station 110. For example, the indication may be included in the SL A-CSI request from the UE 1605, a configuration message from the base station 110 (e.g., an RRC message), and/or the like. In some aspects, the relay UE 1610 may transmit the SL A-CSI report to the base station 110 in accordance with a wireless communication standard. The relay UE 1610 may transmit the SL A-CSI report to the base station 110 in a MAC-CE, in a MAC payload, in UCI, and/or the like. In some aspects, the relay UE 1610 may transmit the SL A-CSI report to the UE 1605 in addition to the base station 110. The details of transmitting the SL A-CSI report to the UE 1605 are described below in connection with Fig. 17.

As shown by reference number 1630, the base station 110 may transmit an indication of one or more MCSs, for sidelink communications between the UE 1605 and the relay UE 1610, to the UE 1605. The base station 110 may determine (e.g., identify, select, and/or the like) the one or more MCSs based at least in part on receiving the SL A-CSI report from the relay UE 1610. In some aspects, the base station 110 may determine the one or more MCSs based at least in part on a configuration of the base station 110. For example, the base station 110 may determine the one or more MCSs based at least in part on a base station objective (e.g., a rule or objective stored in memory of the base station 110). In some aspects, the base station 110 may determine the one or more MCSs in order to satisfy one or more base station objectives, such as a target PER, a target BLER, and/or the like.

In some aspects, the base station 110 may determine a single MCS, and may indicate the single MCS to the UE 1605. In some aspects, the base station 110 may determine multiple MCSs, and may indicate the multiple MCSs to the UE 1605. For example, the base station 110 may determine a range of MCSs (e.g., range of MCS index values), and may indicate the range of MCSs to the UE 1605. In some aspects, the base station 110 may transmit (e.g., relay or forward) the SL A-CSI report, received from the relay UE 1610, to the UE 1605. The base station 110 may indicate the one or more MCSs and/or may transmit the SL A-CSI report to the UE 1605 in a MAC-CE, in a MAC payload, in DCI, in a sidelink grant for the sidelink communication that is to carry a communication (e.g., data, control information, and/or the like) transmitted by the UE 1605 and intended for the base station 110, and/or the like.

As shown by reference number 1635, the UE 1605 may identify an MCS to be used for transmitting a communication (e.g., data, control information, and/or the like), intended for the base station 110, to the relay UE 1610. The MCS may be used for a sidelink communication that includes the communication (e.g., the control information, the data, and/or the like). As shown, if the base station 110 indicates a single MCS to the UE 1605 (as described in connection with reference number 1630), then the UE 1605 may use the single MCS (e.g., the indicated MCS) for the sidelink communication (e.g., to modulate and/or encode the sidelink communication). As also shown, if the base station 110 indicates multiple MCSs (e.g., a range of MCSs) to the UE 1605, then the UE 1605 may select an MCS, of the multiple MCSs, and may use the selected MCS for the sidelink communication. In some aspects, the UE 1605 may select the MCS based at least in part on the SL A-CSI report, which may be received from the relay UE 1610 and/or the base station 110.

As shown by reference number 1640, in some aspects, the UE 1605 may transmit sidelink control information (SCI) to the relay UE 1610 to schedule the sidelink communication. In this case, the UE 1605 may indicate the identified MCS, to be used for the sidelink communication, in the SCI. In some aspects, the UE 1605 may not transmit the SCI, in which case the relay UE 1610 may use blind demodulation and/or blind decoding for the sidelink communication (e.g., by testing multiple MCS hypotheses).

As shown by reference number 1645, the UE 1605 may transmit a communication (e.g., data, control information, and/or the like), intended for the base station 110, to the relay UE 1610. The communication (e.g., the data, the control information, and/or the like) may be transmitted in a sidelink communication. In some aspects, the UE 1605 may indicate, to the relay UE 1610, that the communication is to be relayed to the base station 110. For example, the UE 1605 may use SCI, that schedules the communication, to indicate that the communication is to be relayed to the base station 110. Additionally, or alternatively, the communication may include a header or other information that indicates that the communication is to be relayed to the base station 110. As shown, the UE 1605 may modulate the sidelink communication using the identified MCS. The relay UE 1610 may receive the sidelink communication and may demodulate and/or decode the sidelink communication based at least in part on the MCS to obtain the communication to be relayed to the base station 110. As described above, the MCS may be indicated to the relay UE 1610 in SCI, or the relay UE 1610 may perform blind demodulation and/or blind decoding using multiple MCSs.

As shown by reference number 1650, the relay UE 1610 may relay the communication (e.g., the data, the control information, and/or the like), received from the UE 1605 in the sidelink communication, to the base station 110. For example, the relay UE 1610 may transmit the communication (e.g., the data, the control information, and/or the like), received in a sidelink communication from the UE 1605, to the base station 110 in an uplink communication.

As shown by reference number 1655, in some aspects, the UE 1605 may also transmit the communication (e.g., the same data, the same control information, and/or the like) directly to the base station 110 (e.g., via a direct link and/or an access link, as described elsewhere herein). As described elsewhere herein, in some aspects, the UE 1605 may transmit a communication (e.g., the same communication) to the base station 110 via both a direct link and an indirect link to improve link diversity. Alternatively, the UE 1605 may select one of the links (e.g., either the direct link or the indirect link), and may transmit a communication to the base station 110 using only the selected link. In some aspects, the UE 1605 may receive an indication of one of the links (e.g., either the direct link or the indirect link), and may transmit a communication to the base station 110 using only the indicated link. The indication may be transmitted by the base station 110 and/or the relay UE 1610. In some aspects, such selection and/or indication may be based at least in part on channel conditions, channel measurements (e.g., a comparison of SL A-CSI and access link CSI, such as downlink A-CSI), link reliability, and/or the like.

Although techniques and operations are described herein in connection with using an SL A-CSI report to assist a base station 110 with determining an MCS to be used for a sidelink communication that is to include a communication to be relayed from the UE 1605 to the base station 110 via the relay UE 1610, these techniques and operations may be applied to determine one or more other transmission parameters (e.g., in addition to MCS or as an alternative to MCS). For example, the techniques and operations described herein may be used to assist a base station 110 with determining a TB size, a resource allocation, a transmit power, a retransmission configuration (e.g., whether to enable or disable retransmissions or a maximum number of retransmissions, among other examples), and/or the like, to be used for a sidelink communication that is to include a communication to be relayed from the UE 1605 to the base station 110 via the relay UE 1610.

Using the aperiodic CSI reporting procedure described in connection with Fig. 16 enables the base station 110 to assist with scheduling and/or controlling sidelink communications by selecting and/or controlling one or more transmission parameters, such as MCS. As a result, the base station 110 may be enabled to satisfy one or more base station objectives, such as a target PER associated with communications between the base station 110 and the UE 1605, a target BLER associated with communications between the base station 110 and the UE 1605, and/or the like.

As indicated above, Fig. 16 is provided as an example. Other examples may differ from what is described with respect to Fig. 16.

Fig. 17 is a diagram illustrating an example 1700 of aperiodic CSI reporting and MCS control with layer 2 relaying, in accordance with the present disclosure. As shown in Fig. 17, a base station 110, a UE 1705, and a relay UE 1710 may communicate with one another. The UE 1705 and the relay UE 1710 may communicate with one another via a sidelink. The base station 110 and the relay UE 1710 may communicate with one another via an access link. The UE 1705 and the base station 110 may communicate with one another via a direct link (e.g., an access link, such as when communications between the UE 1705 and the base station 110 are not relayed by the relay UE 1710) and/or via an indirect link (e.g., an access link and a sidelink, such as when communications between the UE 1705 and the base station 110 are relayed by the relay UE 1710). In some aspects, the UE 1705 and/or the relay UE 1710 may be a UE described elsewhere herein in connection with Figs. 1-7. For example, the relay UE 1710 may be configured to relay communications between the base station 110 and the UE 1705. In some aspects, the relay UE 1710 provides a layer 2 relay service for the UE 1705, as described above in connection with Fig. 7. In example 1700, the UE 1705 is a Tx UE and the relay UE 1710 is an Rx UE.

As shown by reference number 1715, the UE 1705 may transmit an SL A-CSI request to the relay UE 1710, as described above in connection with Fig. 16. As shown by reference number 1720, the UE 1705 may transmit one or more CSI-RSs, as described above in connection with Fig. 16.

As shown by reference number 1725, the relay UE 1710 may transmit an SL A-CSI report to the UE 1705. The SL A-CSI report may include the CSI calculated by the relay UE 1710 for a sidelink channel, as described above. In some aspects, the relay UE 1710 may transmit the SL A-CSI report to the UE 1705 based at least in part on an indication (e.g., from the base station 110 and/or the UE 1705) that the SL A-CSI report is to be transmitted to the UE 1705. For example, the indication may be included in the SL A-CSI request from the UE 1705, a configuration message from the base station 110 (e.g., an RRC message), and/or the like. In some aspects, the relay UE 1710 may transmit the SL A-CSI report to the UE 1705 in accordance with a wireless communication standard. The relay UE 1710 may transmit the SL A-CSI report to the base station 110 in a MAC-CE, in a MAC payload, in SCI, and/or the like. In some aspects, the relay UE 1710 may transmit the SL A-CSI report to the base station 110 in addition to the UE 1705. The details of transmitting the SL A-CSI report to the base station 110 are described above in connection with Fig. 16.

As shown by reference number 1730, the UE 1705 may transmit (e.g., relay, forward, and/or the like) the SL A-CSI report, received from the relay UE 1710, to the base station 110. The SL A-CSI report may include the CSI calculated by the relay UE 1710 for a sidelink channel, as described above. The UE 1705 may transmit the SL A-CSI report to the base station 110 in a MAC-CE, in a MAC payload, in UCI, and/or the like. In some aspects, the UE 1705 may indicate the relay UE 1710 associated with the SL A-CSI report (e.g., using a UE identifier that identifies the relay UE 1710).

As shown by reference number 1735, the base station 110 may transmit an indication of one or more MCSs, for sidelink communications between the UE 1705 and the relay UE 1710, to the UE 1705, as described above in connection with Fig. 16. The base station 110 may determine (e.g., identify, select, and/or the like) the one or more MCSs based at least in part on receiving the SL A-CSI report from the UE 1705.

As shown by reference number 1740, the UE 1705 may identify an MCS to be used for transmitting a communication (e.g., data, control information, and/or the like), intended for the base station 110, to the relay UE 1710, as described above in connection with Fig. 16. As shown by reference number 1745, in some aspects, the UE 1705 may transmit SCI to the relay UE 1710 to schedule the sidelink communication, as described above in connection with Fig. 16. As shown by reference number 1750, the UE 1705 may transmit a communication (e.g., data, control information, and/or the like), intended for the base station 110, to the relay UE 1710 via a sidelink communication, as described above in connection with Fig. 16.

As shown by reference number 1755, the relay UE 1710 may relay the communication (e.g., the data, the control information, and/or the like), received from the UE 1705 in the sidelink communication, to the base station 110, as described above in connection with Fig. 16. As shown by reference number 1760, in some aspects, the UE 1705 may also transmit the communication (e.g., the same data, the same control information, and/or the like) directly to the base station 110 (e.g., via a direct link and/or an access link, as described elsewhere herein), as described above in connection with Fig. 16.

Although techniques and operations are described herein in connection with using an SL A-CSI report to assist a base station 110 with determining an MCS to be used for a sidelink communication that is to include a communication to be relayed from the UE 1705 to the base station 110 via the relay UE 1710, these techniques and operations may be applied to determine one or more other transmission parameters (e.g., in addition to MCS or as an alternative to MCS). For example, the techniques and operations described herein may be used to assist a base station 110 with determining a TB size, a resource allocation, a transmit power, a retransmission configuration (e.g., whether to enable or disable retransmissions or a maximum number of retransmissions, among other examples), and/or the like, to be used for a sidelink communication that is to include a communication to be relayed from the UE 1705 to the base station 110 via the relay UE 1710.

Using the aperiodic CSI reporting procedure described in connection with Fig. 17 enables the base station 110 to assist with scheduling and/or controlling sidelink communications by selecting and/or controlling one or more transmission parameters, such as MCS. As a result, the base station 110 may be enabled to satisfy one or more base station objectives, such as a target PER associated with communications between the base station 110 and the UE 1705, a target BLER associated with communications between the base station 110 and the UE 1705, and/or the like.

As indicated above, Fig. 17 is provided as an example. Other examples may differ from what is described with respect to Fig. 17.

Fig. 18 is a diagram illustrating an example process 1800 performed, for example, by a UE, in accordance with the present disclosure. Example process 1800 is an example where the UE (e.g., UE 120, UE 1605, UE 1705 and/or the like) performs operations associated with aperiodic CSI reporting and MCS control with layer 2 relaying.

As shown in Fig. 18, in some aspects, process 1800 may include transmitting an aperiodic CSI request to a relay UE, wherein the aperiodic CSI request is for sidelink communications (block 1810). For example, the UE (e.g., using transmit processor 264, controller/processor 280, memory 282, and/or the like) may transmit an aperiodic CSI request to a relay UE, as described above. In some aspects, the aperiodic CSI request is for sidelink communications.

As further shown in Fig. 18, in some aspects, process 1800 may include receiving, from a base station, an indication of one or more MCSs for sidelink communications between the UE and the relay UE based at least in part on transmitting the aperiodic CSI request (block 1820). For example, the UE (e.g., using receive processor 258, controller/processor 280, memory 282, and/or the like) may receive, from a base station, an indication of one or more MCSs for sidelink communications between the UE and the relay UE based at least in part on transmitting the aperiodic CSI request, as described above.

As further shown in Fig. 18, in some aspects, process 1800 may include transmitting, to the relay UE, a sidelink communication that includes a communication to be relayed to the base station by the relay UE, wherein the sidelink communication is modulated using an MCS of the one or more MCSs indicated by the base station to the UE (block 1830). For example, the UE (e.g., using transmit processor 264, controller/processor 280, memory 282, and/or the like) may transmit, to the relay UE, a sidelink communication that includes a communication to be relayed to the base station by the relay UE, as described above. In some aspects, the sidelink communication is modulated using an MCS of the one or more MCSs indicated by the base station to the UE.

Process 1800 may include additional aspects, such as any single aspect or any combination of aspects described below and/or in connection with one or more other processes described elsewhere herein.

In a first aspect, the relay UE relays communications between the UE and the base station.

In a second aspect, alone or in combination with the first aspect, process 1800 includes transmitting, to the base station, an uplink communication that includes the communication.

In a third aspect, alone or in combination with one or more of the first and second aspects, process 1800 includes receiving an aperiodic CSI report from the relay UE based at least in part on transmitting the aperiodic CSI request to the relay UE, wherein the aperiodic CSI report is for sidelink communications; transmitting the aperiodic CSI report to the base station; and receiving, from the base station, the indication of the one or more MCSs for sidelink communications based at least in part on transmitting the aperiodic CSI report to the base station.

In a fourth aspect, alone or in combination with one or more of the first through third aspects, the aperiodic CSI report is transmitted to the base station in at least one of a MAC control element, a MAC payload, uplink control information, or a combination thereof.

In a fifth aspect, alone or in combination with one or more of the first through fourth aspects, the indication of the one or more MCSs is received from the base station in at least one of a MAC control element, a MAC payload, downlink control information, a sidelink grant for the sidelink communication, or a combination thereof.

In a sixth aspect, alone or in combination with one or more of the first through fifth aspects, the relay UE provides a layer 2 relay service for the UE.

In a seventh aspect, alone or in combination with one or more of the first through sixth aspects, the one or more MCSs include multiple MCSs or a range of MCSs, and the UE selects the MCS, used to modulate the sidelink communication, from the multiple MCSs or the range of MCSs.

In an eighth aspect, alone or in combination with one or more of the first through seventh aspects, the one or more MCSs include a single MCS, and the UE uses the single MCS as the MCS used to modulate the sidelink communication.

Although Fig. 18 shows example blocks of process 1800, in some aspects, process 1800 may include additional blocks, fewer blocks, different blocks, or differently arranged blocks than those depicted in Fig. 18. Additionally, or alternatively, two or more of the blocks of process 1800 may be performed in parallel.

Fig. 19 is a diagram illustrating an example process 1900 performed, for example, by a relay UE, in accordance with the present disclosure. Example process 1900 is an example where the relay UE (e.g., UE 120, relay UE 1605, relay UE 1705, and/or the like) performs operations associated with techniques for aperiodic CSI reporting and MCS control with layer 2 relaying.

As shown in Fig. 19, in some aspects, process 1900 may include receiving an aperiodic CSI request from a UE, wherein the aperiodic CSI request is for sidelink communications (block 1910). For example, the relay UE (e.g., using receive processor 258, controller/processor 280, memory 282, and/or the like) may receive an aperiodic CSI request from a UE, as described above. In some aspects, the aperiodic CSI request is for sidelink communications.

As further shown in Fig. 19, in some aspects, process 1900 may include transmitting an aperiodic CSI report based at least in part on receiving the aperiodic CSI request from the UE, wherein the aperiodic CSI report is for sidelink communications (block 1920). For example, the relay UE (e.g., using transmit processor 264, controller/processor 280, memory 282, and/or the like) may transmit an aperiodic CSI report based at least in part on receiving the aperiodic CSI request from the UE, as described above. In some aspects, the aperiodic CSI report is for sidelink communications.

As further shown in Fig. 19, in some aspects, process 1900 may include receiving, from the UE, a communication to be relayed to a base station, wherein the communication is included in a sidelink communication that is modulated using an MCS of one or more MCSs indicated by the base station to the UE (block 1930). For example, the relay UE (e.g., using receive processor 258, controller/processor 280, memory 282, and/or the like) may receive, from the UE, a communication to be relayed to a base station, as described above. In some aspects, the communication is included in a sidelink communication that is modulated using an MCS of one or more MCSs indicated by the base station to the UE.

As further shown in Fig. 19, in some aspects, process 1900 may include relaying the communication to the base station (block 1940). For example, the relay UE (e.g., using receive processor 258, transmit processor 264, controller/processor 280, memory 282, and/or the like) may relay the communication to the base station, as described above.

Process 1900 may include additional aspects, such as any single aspect or any combination of aspects described below and/or in connection with one or more other processes described elsewhere herein.

In a first aspect, the relay UE relays communications between the UE and the base station.

In a second aspect, alone or in combination with the first aspect, the aperiodic CSI report is transmitted to the UE.

In a third aspect, alone or in combination with one or more of the first and second aspects, the aperiodic CSI report is transmitted to the base station.

In a fourth aspect, alone or in combination with one or more of the first through third aspects, the aperiodic CSI report is transmitted to the base station in at least one of a MAC control element, a MAC payload, uplink control information, or a combination thereof.

In a fifth aspect, alone or in combination with one or more of the first through fourth aspects, the relay UE provides a layer 2 relay service for the UE.

In a sixth aspect, alone or in combination with one or more of the first through fifth aspects, the MCS is indicated to the relay UE in sidelink control information received from the UE.

Although Fig. 19 shows example blocks of process 1900, in some aspects, process 1900 may include additional blocks, fewer blocks, different blocks, or differently arranged blocks than those depicted in Fig. 19. Additionally, or alternatively, two or more of the blocks of process 1900 may be performed in parallel.

Fig. 20 is a diagram illustrating an example process 2000 performed, for example, by a base station, in accordance with the present disclosure. Example process 2000 is an example where the base station (e.g., base station 110 and/or the like) performs operations associated with techniques for aperiodic CSI reporting and MCS control with layer 2 relaying.

As shown in Fig. 20, in some aspects, process 2000 may include receiving an aperiodic CSI report for sidelink communications between a relay UE and a UE (block 2010). For example, the base station (e.g., using receive processor 238, controller/processor 240, memory 242, and/or the like) may receive an aperiodic CSI report for sidelink communications between a relay UE and a UE, as described above.

As further shown in Fig. 20, in some aspects, process 2000 may include transmitting, to the UE, an indication of one or more MCSs for sidelink communications between the UE and the relay UE based at least in part on receiving the aperiodic CSI request (block 2020). For example, the base station (e.g., using transmit processor 220, controller/processor 240, memory 242, and/or the like) may transmit, to the UE, an indication of one or more MCSs for sidelink communications between the UE and the relay UE based at least in part on receiving the aperiodic CSI request, as described above.

As further shown in Fig. 20, in some aspects, process 2000 may include receiving, from the relay UE, a communication relayed by the relay UE from the UE, wherein the communication is transmitted from the UE to the relay UE via a sidelink communication that is modulated using an MCS of the one or more MCSs indicated by the base station to the UE (block 2030). For example, the base station (e.g., using receive processor 238, controller/processor 240, memory 242, and/or the like) may receive, from the relay UE, a communication relayed by the relay UE from the UE, as described above. In some aspects, the communication is transmitted from the UE to the relay UE via a sidelink communication that is modulated using an MCS of the one or more MCSs indicated by the base station to the UE.

Process 2000 may include additional aspects, such as any single aspect or any combination of aspects described below and/or in connection with one or more other processes described elsewhere herein.

In a first aspect, the relay UE relays communications between the UE and the base station.

In a second aspect, alone or in combination with the first aspect, the aperiodic CSI report is received from the UE.

In a third aspect, alone or in combination with one or more of the first and second aspects, the aperiodic CSI report is received from the relay UE.

In a fourth aspect, alone or in combination with one or more of the first through third aspects, the aperiodic CSI report is received in at least one of a MAC control element, a MAC payload, uplink control information, or a combination thereof.

In a fifth aspect, alone or in combination with one or more of the first through fourth aspects, the indication of the one or more MCSs is transmitted in at least one of a MAC control element, a MAC payload, downlink control information, a sidelink grant for the sidelink communication, or a combination thereof.

In a sixth aspect, alone or in combination with one or more of the first through fifth aspects, process 2000 includes determining the one or more MCSs based at least in part on the aperiodic CSI report and a configuration of the base station.

In a seventh aspect, alone or in combination with one or more of the first through sixth aspects, the relay UE provides a layer 2 relay service for the UE.

In an eighth aspect, alone or in combination with one or more of the first through seventh aspects, process 2000 includes receiving the communication directly from the UE.

Although Fig. 20 shows example blocks of process 2000, in some aspects, process 2000 may include additional blocks, fewer blocks, different blocks, or differently arranged blocks than those depicted in Fig. 20. Additionally, or alternatively, two or more of the blocks of process 2000 may be performed in parallel.

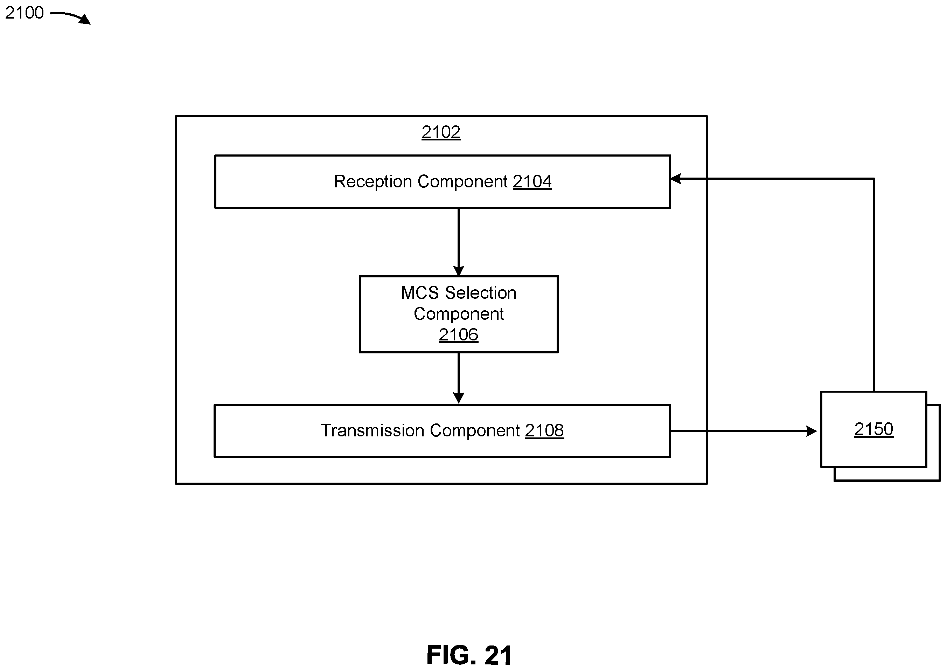

Fig. 21 is a conceptual data flow diagram 2100 illustrating a data flow between different components in an example apparatus 2102. The apparatus 2102 may be a UE. In some aspects, the apparatus 2102 includes a reception component 2104, an MCS selection component 2106, and/or a transmission component 2108. As shown, the apparatus 2102 may communicate with another apparatus 2150 (e.g., a relay UE, a base station, and/or another wireless communication device) using the reception component 2104 and/or the transmission component 2108.

The transmission component 2108 may transmit an aperiodic CSI request to a first apparatus 2150-1 (e.g., a relay UE). The aperiodic CSI request may be for sidelink communications. The reception component 2104 may receive, from a second apparatus 2150-2 (e.g., a base station), an indication of one or more MCSs for sidelink communications between the apparatus 2102 and the first apparatus 2150-1 (e.g., the relay UE) based at least in part on transmitting the aperiodic CSI request. The transmission component 2108 may transmit, to the first apparatus 2150-1 (e.g., the relay UE), a sidelink communication that includes a communication to be relayed to the second apparatus 2150-2 (e.g., the base station) by the first apparatus 2150-1. The sidelink communication may be modulated using an MCS of the one or more MCSs indicated by the base station to the UE. The MCS selection component 2106 may select an MCS, for the sidelink communication, from the one or more indicated MCSs.

In some aspects, the reception component 2104 may receive an aperiodic CSI report from the first apparatus 2150-1 (e.g., the relay UE) based at least in part on transmitting the aperiodic CSI request to the first apparatus 2150-1 (e.g., the relay UE). The aperiodic CSI report may be for sidelink communications. In this case, the transmission component 2108 may transmit the aperiodic CSI report to the second apparatus 2150-2 (e.g., the base station). The reception component 2104 may receive, from the second apparatus 2150-2 (e.g., the base station), the indication of the one or more MCSs for sidelink communications based at least in part on transmitting the aperiodic CSI report to the base station.

The apparatus may include additional components that perform each of the blocks of the algorithm in the aforementioned process 1800 of Fig. 18 and/or the like. Each block in the aforementioned process 1800 of Fig. 18 and/or the like may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

The number and arrangement of components shown in Fig. 21 are provided as an example. In practice, there may be additional components, fewer components, different components, or differently arranged components than those shown in Fig. 21. Furthermore, two or more components shown in Fig. 21 may be implemented within a single component, or a single component shown in Fig. 21 may be implemented as multiple, distributed components. Additionally, or alternatively, a set of components (e.g., one or more components) shown in Fig. 21 may perform one or more functions described as being performed by another set of components shown in Fig. 21.

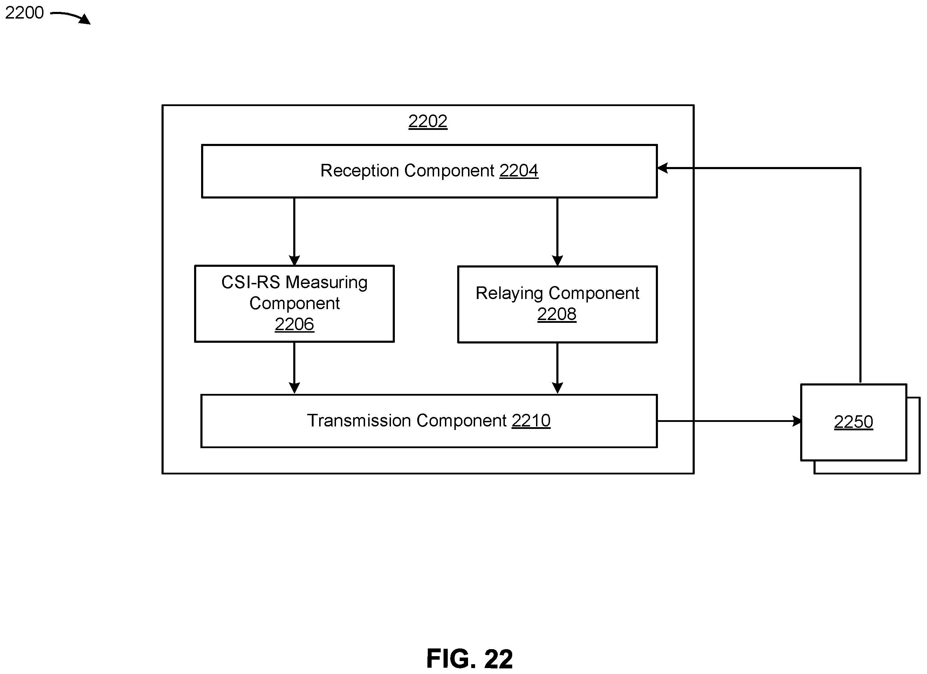

Fig. 22 is a conceptual data flow diagram 2200 illustrating a data flow between different components in an example apparatus 2202. The apparatus 2202 may be a relay UE. In some aspects, the apparatus 2202 includes a reception component 2204, a CSI-RS measuring component 2206, a relaying component 2208, and/or a transmission component 2210. As shown, the apparatus 2202 may communicate with another apparatus 2250 (e.g., a UE, a base station, and/or another wireless communication device) using the reception component 2204 and/or the transmission component 2210.

The reception component 2204 may receive an aperiodic CSI request from a first apparatus 2250-1 (e.g., a UE). The aperiodic CSI request may be for sidelink communications. The CSI-RS measuring component 2206, which may be integrated into and/or a part of the reception component 2204 in some aspects, may measure CSI-RSs transmitted by the first apparatus 2250-1 (e.g., the UE) to generate an aperiodic CSI report. The transmission component 2210 may transmit the aperiodic CSI report based at least in part on receiving the aperiodic CSI request from the relay UE and/or measuring the CSI-RSs. The aperiodic CSI report may be for sidelink communications. The reception component 2204 may receive, from the first apparatus 2250-1 (e.g., the UE), a communication to be relayed to a second apparatus 2250-2 (e.g., a base station). The communication may be included in a sidelink communication that is modulated using an MCS of one or more MCSs indicated by the second apparatus 2250-2 to the first apparatus 2250-1. The relaying component 2208, which may be integrated into and/or a part of the transmission component 2210, may relay the communication to the second apparatus 2250-2 (e.g., the base station).

The apparatus may include additional components that perform each of the blocks of the algorithm in the aforementioned process 1900 of Fig. 19 and/or the like. Each block in the aforementioned process 1900 of Fig. 19 and/or the like may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

The number and arrangement of components shown in Fig. 22 are provided as an example. In practice, there may be additional components, fewer components, different components, or differently arranged components than those shown in Fig. 22. Furthermore, two or more components shown in Fig. 22 may be implemented within a single component, or a single component shown in Fig. 22 may be implemented as multiple, distributed components. Additionally, or alternatively, a set of components (e.g., one or more components) shown in Fig. 22 may perform one or more functions described as being performed by another set of components shown in Fig. 22.

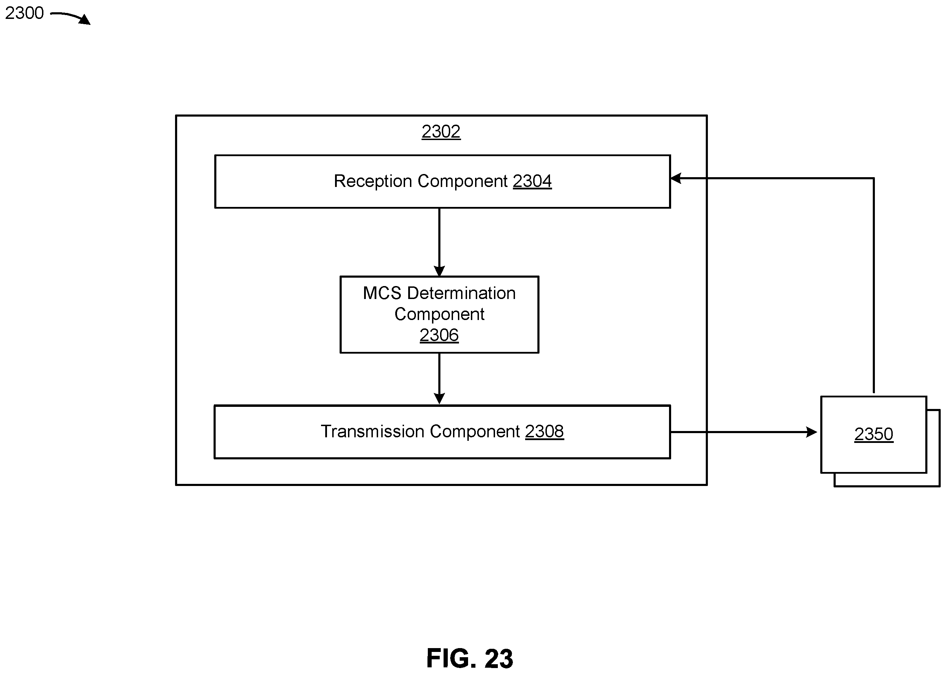

Fig. 23 is a conceptual data flow diagram 2300 illustrating a data flow between different components in an example apparatus 2302. The apparatus 2302 may be a base station. In some aspects, the apparatus 2302 includes a reception component 2304, an MCS determination component 2306, and/or a transmission component 2308. As shown, the apparatus 2302 may communicate with another apparatus 2350 (e.g., a UE, a relay UE, and/or another wireless communication device) using the reception component 2304 and/or the transmission component 2308.

The reception component 2304 may receive an aperiodic CSI report for sidelink communications between a first apparatus 2350-1 (e.g., a UE) and a second apparatus 2350-2 (e.g., a relay UE). The MCS determination component 2306 may determine one or more MCSs based at least in part on the aperiodic CSI report and/or one or more configurations, objectives, and/or rules stored by the apparatus 2302. The transmission component 2308 may transmit, to the first apparatus 2350-1 (e.g., the UE), an indication of one or more MCSs for sidelink communications between the first apparatus 2350-1 (e.g., the UE) and the second apparatus 2350-2 (e.g., the relay UE) based at least in part on receiving the aperiodic CSI request and/or determining the one or more MCSs. The reception component 2304 may receive, from the second apparatus 2350-2 (e.g., the relay UE), a communication relayed by the second apparatus 2350-2 (e.g., the relay UE) from the first apparatus 2350-1 (e.g., the UE), wherein the communication is transmitted from the first apparatus 2350-1 (e.g., the UE) to the second apparatus 2350-2 (e.g., the relay UE) via a sidelink communication that is modulated using an MCS of the one or more MCSs indicated by the apparatus 2302 to the first apparatus 2350-1 (e.g., the UE).

The apparatus may include additional components that perform each of the blocks of the algorithm in the aforementioned process 2000 of Fig. 20 and/or the like. Each block in the aforementioned process 2000 of Fig. 20 and/or the like may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

The number and arrangement of components shown in Fig. 23 are provided as an example. In practice, there may be additional components, fewer components, different components, or differently arranged components than those shown in Fig. 23. Furthermore, two or more components shown in Fig. 23 may be implemented within a single component, or a single component shown in Fig. 23 may be implemented as multiple, distributed components. Additionally, or alternatively, a set of components (e.g., one or more components) shown in Fig. 23 may perform one or more functions described as being performed by another set of components shown in Fig. 23.

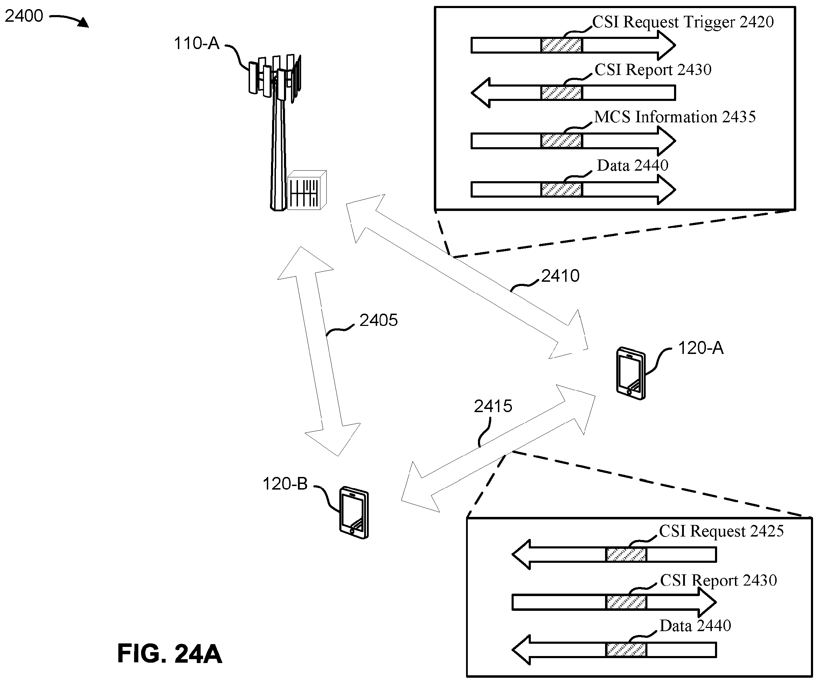

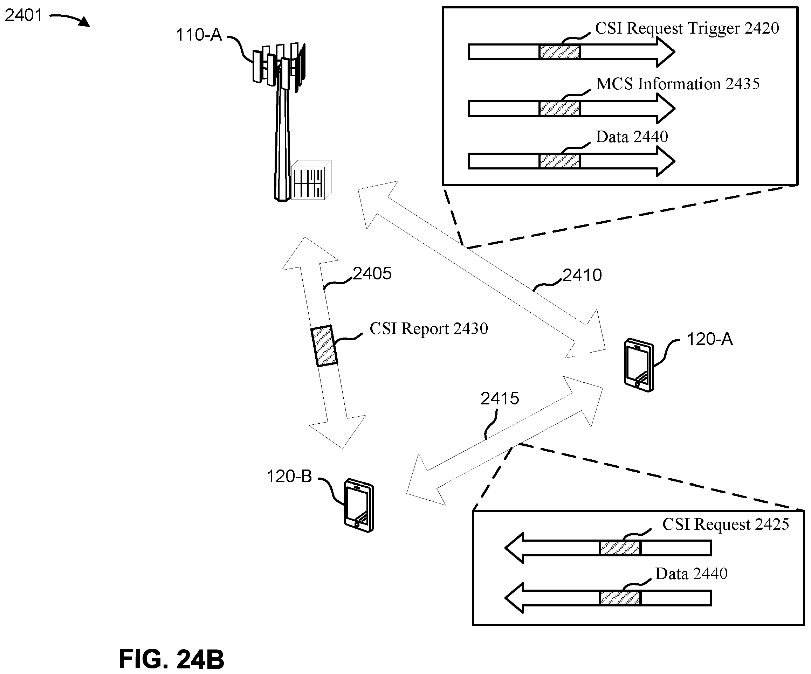

Figs. 24A and 24B illustrate examples of wireless communications systems 2400 and 2401 that provide for base station support for sidelink CSI reporting in accordance with aspects of the present disclosure. In some examples, the wireless communications systems 2400 and 2401 may implement aspects of wireless communications system 100. Figs. 24A and 24B illustrate a base station 110-a, a UE 120-a, and a UE 120-b, which may be examples of corresponding devices as described herein. The base station 110-a may communicate with UE 120-a and UE 120-b via a communication link 2410 and a communication link 2405, respectively, which may be examples of Uu links. The UE 120-a and the UE 120-b may communicate via communication link 2415, which may be an example of a sidelink, such as a PC5 link. For example, the UE 120-a may serve as a relay UE for the UE 120-b, and the UE 120-a may relay communications from the base station 110-a to the UE 120-b or from the UE 120-b to the base station 110-a.

In some implementations, the base station 110-a may receive information regarding CSI associated with the communication link 2415 (e.g., as determined by the UE 120-b) and may use the CSI associated with the communication link 2415 to assist the UE 120-a in MCS selection. Additionally or alternatively, the base station 110-a may use the CSI associated with the communication link 2415 to more effectively schedule communications to the UE 120-b based on the priority of the communication and the channel qualities of the communication links.

In some cases, wireless communications systems 2400 and 2401 may be examples of NR systems and may support high frequency radio frequency bands (e.g., FR2 radio frequency bands). For example, communication link 2405, communication link 2410, and communication link 2415 may support communications in high frequency bands, such as mmW communications. Such communications may be associated with a higher achievable throughput but may more susceptible to sudden changes in link quality due to path loss, fading, movement, or obstruction, or any combination thereof, than communications in lower frequency bands.

For example, the base station 110-a and the UE 120-b may communicate over the communication link 2405, and the quality of the communication link 2405 may be susceptible to changes in the radio environment between the base station 110-a and the UE 120-b. In some cases, movement of the UE 120-b, the presence of an obstacle between the base station 110-a and the UE 120-b, or the presence of interference, or any combination thereof, may degrade the quality of the communication link 2405, which may result in a lower received signal strength or a lower signal-to-noise ratio (SNR) at the receiving device (e.g., the UE 120-b). Such link degradation may increase the likelihood of communication failures between the base station 110-a and the UE 120-b and may potentially result in a radio link failure (RLF) event or a beam failure event. In such events, communications between the base station 110-a and the UE 120-b may cease until the completion of a re-connection or recovery procedure.

In some cases, the wireless communications systems 2400 and 2401 may support sidelink communication, such as a communication link 2415, to increase the link diversity between the base station 110-a and the UE 120-b. By increasing link diversity between the base station 110-a and the UE 120-b, the base station 110-a and the UE 120-b may experience a greater likelihood that at least one link has a sufficient link quality to support successful communications between the base station 110-a and the UE 120-b at any given time. For example, the base station 110-a may support link selection or aggregation, or a combination thereof, to increase the likelihood of successful communications with the UE 120-b. For instance, the base station 110-a may select or aggregate one or more communication links over which the base station 110-a may communicate with the UE 120-b based on channel quality associated with each communication link. In some cases, the base station 110-a may determine to communicate directly with the UE 120-b via communication link 2405 based on the channel quality associated with the communication link 2405 and the priority of the communication. In some other cases, the base station 110-a may determine to communicate indirectly with the UE 120-b via a UE 120-a based on the channel quality associated with the relay link and the priority of the communication link. In some aspects of the present disclosure, "relay link" may refer to a combination or an aggregation of the communication link 2410 and the communication link 2415.

As a result, the base station 110-a, the UE 120-a, and the UE 120-b may each support dual connectivity (e.g., each may communicate with two different nodes). In some cases, such dual connectivity may be different from carrier aggregation and may be associated with two simultaneous protocol stacks, as described in more detail with reference to Fig. 7.

The base station 110-a may configure the communication link 2405, the communication link 2410 (e.g., the Uu links), and the communication link 2415 (e.g., the sidelink or PC5 link) via RRC signaling, such as by an NR-RRC signaling entity. For example, the base station 110-a may configure Uu links and sidelinks and configure an appropriate bearer to logical channel mapping and priority assignment. In some cases, the bearer may be a split-bearer and the base station 110-a may support split-bearer PDCP functionality to provide the link diversity, which may improve system reliability. Further, the base station 110-a may support PDCP duplication, which may increase redundancy and therefore also increase system reliability. In some cases, the base station 110-a may employ split-bearer PDCP functionality for both signaling bearers (e.g., RRC signaling bearers) and data bearers (e.g., physical channel bearers).

Upon configuring the communication link 2405, the communication link 2410, and the communication link 2415, the base station 110-a may schedule communications (e.g., data transmissions) to the UE 120-b based on the link quality associated with each of the communication links as well as the resource availability of the channel (e.g., the logical channel) configured for each communication link. The base station 110-a may schedule communications to the UE 120-b via the communication link 2405 or the relay link one at a time or simultaneously. In some cases, the base station 110-a may schedule communications over communication link 2405, communication link 2410, and communication link 2415. In some other cases, the UE 120-a and the UE 120-b may autonomously schedule communications over the communication link 2415 (e.g., without base station 110-a control). In addition to scheduling the communications on a communication link, or on an aggregation of communication links, the base station 110-a may select a one or more time division duplexing (TDD) configurations, a transmit and a receive beam (e.g., in the case that the wireless communications systems 2400 and 2401 support directional transmissions, such as beamforming), and a carrier frequency associated with the selected communication link or aggregation of communication links.

In some cases, the base station 110-a may have insight (e.g., information) of the link quality associated with communication link 2405 and the communication link 2410 (e.g., the Uu links) over which the base station 110-a may communicate (e.g., via CSI reporting related to the communication links 2405, 2410. The base station 110-a may use such insight when setting an MCS for communication links 2405, 2410, or when determining whether to communicate with the UE 120-b directly via communication link 2405 or indirectly via the relay link.

To gain insight into the channel quality associated with the communication link 2415, the base station 110-a may trigger a related CSI measurement procedure. For example, the base station 110-a may transmit an indication to the UE 120-a to transmit a CSI request to the UE 120-b. The UE 120-b may generate a CSI report including CSI associated with the communication link 2415 based on receiving the CSI request from the UE 120-a. The base station 110-a may obtain the CSI associated with the communication link 2415 and may use the CSI (e.g., the channel quality) associated with the communication link 2415 to more effectively schedule communications to the UE 120-b or to assist the UE 120-a in MCS selection, or both.

For example, as shown in Fig. 24A, the base station 110-a may transmit a CSI request trigger 2420 to the UE 120-a via the communication link 2410. The CSI request trigger 2420 may include an indication for the UE 120-a to request CSI associated with the communication link 2415 between the UE 120-a and the UE 120-b. In some examples, the CSI request trigger 2420 may indicate one or more components (e.g., CSI metrics) for UE 120-b to include in a CSI report 2430. The UE 120-a, based on receiving the CSI request trigger 2420, may transmit a CSI request 2425 to the UE 120-b via the communication link 2415. The CSI request 2425 may include a request for the CSI associated with the communication link 2415. In some examples, the CSI request 2425 may indicate the one or more components that the UE 120-b may include in the CSI report 2430 (e.g., the one or more components requested by the base station 110-a). In some cases, the UE 120-a may transmit the CSI request 2425 to the UE 120-b via layer 2 signaling. For example, the UE 120-a may transmit the CSI request 2425 to the UE 120-b via MAC layer signaling or RLC layer signaling, or any combination thereof. In some cases, the UE 120-a may additionally transmit one or more CSI-RSs to facilitate channel estimation (e.g., CSI measurement) associated with the communication link 2415.

The UE 120-b, based on receiving the CSI request 2425, may measure the CSI associated with the communication link 2415 (e.g., measure the one or more CSI-RSs) and may generate a CSI report 2430 including the CSI associated with the communication link 2415. In some examples, the UE 120-b may include the one or more components that were requested by the base station 110-a, and in turn requested by the UE 120-a, within the CSI report 2430. In some implementations, the UE 120-b may transmit the CSI report 2430 to the UE 120-a via the communication link 2415. The UE 120-b may transmit the CSI report 2430 via layer 2 signaling, such as via a MAC CE. The UE 120-a, which may be a relay UE for the UE 120-b, may transmit (i.e., relay) the CSI report 2430 to the base station 110-a via the communication link 2410. As a result, the base station 110-a may obtain the CSI (e.g., the channel knowledge) associated with the communication link 2415.

In some examples, the base station 110-a may use the CSI associated with the communication link 2415 to determine the channel quality of the communication link 2415, and may use the knowledge of the channel quality of the communication link 2415 to determine whether to transmit data 2440 to the UE 120-b directly via the communication link 2405 or indirectly via the UE 120-a (i.e., via the communication link 2410 and the communication link 2415, which may be referred to as a relay link). Additionally or alternatively, the base station 110-a may use the knowledge of the CSI of the communication link 2415 to assist the UE 120-a in selecting an MCS that the UE 120-a may use for communications with the UE 120-b, such as transmitting the data 2440 to the UE 120-b. For example, the base station 110-a may determine MCS information 2435 based on the CSI included in the CSI report 2430 and may transmit the MCS information 2435 to the UE 120-a to assist the UE 120-a in MCS selection.

The MCS information 2435 may include a variety of indications, configurations, or parameters, or any combination thereof, for the UE 120-a to use in MCS selection. In some implementations, the base station 110-a may determine an MCS for the UE 120-a to use based on the CSI associated with the communication link 2415, and may transmit an indication of the MCS in the MCS information 2435. In some other implementations, the base station 110-a may determine a range of MCSs that the UE 120-a may use based on the CSI associated with the communication link 2415. In such examples, the UE 120-a may determine an MCS from the range of MCSs based on the CSI associated with the communication link 2415, a separate indication, or a capability of the UE 120-a, or any combination thereof.

Additionally or alternatively, the base station 110-a may include one or more parameters associated with MCS selection in the MCS information 2435 that the UE 120-a may use to determine an MCS. The parameters that the base station 110-a may include within the MCS information 2435 may be any variety of indications, rules, or configurations, or any combination thereof, that the UE 120-a may employ to determine an MCS to use for communications with the UE 120-b. In some aspects, the UE 120-a may use the MCS information 2435 to determine an MCS from a pre-configured range of MCSs at the UE 120-a. In some examples, the base station 110-a, via the MCS information 2435, may provide an outer loop to control the error rate associated with communications over the communication link 2415. In other words, the base station 110-a may support an outer loop to control the MCS used by the UE 120-a, which may help achieve a target error rate over the communication link 2415.

According to the claimed invention, the MCS information 2435 includes an offset value that the UE 120-a uses to select an MCS. According to the claimed invention, the UE 120-a is configured with or otherwise determines an MCS-to-CSI mapping, and the MCS-to-CSI mapping nominally indicates a first MCS based on the CSI associated with the communication link 2415. For instance, the first MCS may correspond to a first index value associated with the CSI (e.g., the UE 120-a may use an MCS-to-CSI mapping index table). In such examples, the offset may correspond to a number of indices relative to the first index value associated with the first MCS. The UE 120-a thus determines a second index value based on the offset from the first index value (e.g., by determining the first MCS value and then accounting for the offset, or by applying the offset to shift one or more aspects of the MCS-to-CSI mapping (such as columns of a related table) and then applying the shifted mapping to the CSI associated with the communication link 2415), and the UE 120-a determines a second MCS based on the second index value. In some examples, the base station 110-a may provide the offset to increase or decrease the MCS to achieve higher reliability (e.g., the base station 110-a may adjust or control the MCS determined by the UE 120-a). For example, the base station 110-a may determine, based on the measured CSI associated with the communication link 2415 or based on previous communication, that the UE 120-a may use an MCS that is suboptimal for the communication link 2415 and the data 2440 (e.g., an MCS that may result in an error rate different than a target or threshold error rate). As a result, the base station 110-a may indicate the offset to adjust the MCS that the UE 120-a determines to use for transmissions to the UE 120-b, which may reduce the error rate and increase the reliability of communications between the UE 120-a and the UE 120-b. The UE 120-a may receive the MCS information 2435 and determine an MCS accordingly.

In some aspects, the base station 110-a may determine to communicate with the UE 120-b via the relay link (e.g., using UE 120-a as a relay). For example, the base station 110-a may determine to transmit the data 2440 to the UE 120-b by relaying the data 2440 via the UE 120-a. For instance, in some examples, the base station 110-a may determine that the communication link 2410 and the communication link 2415 are associated with a higher channel quality than the communication link 2405 and, accordingly, may determine that the UE 120-b will have a greater likelihood of successfully receiving the data 2440 via the relay link. The UE 120-a may receive the data 2440 from the base station 110-a and may transmit (i.e., relay) the data 2440 to the UE 120-b. As described herein, the UE 120-a may transmit the data 2440 to the UE 120-b using an MCS based on the MCS information 2435. As a result, the base station 110-a may facilitate communication scheduling and MCS selection, which may increase the reliability and efficiency of communications between the base station 110-a and the UE 120-b. As yet another example, in some cases, the base station 110-a may not transmit the data 2440 to the UE 120-a, but the data 2440 may instead be generated by the UE 120-a - that is, the base station 110-a may support MCS determinations for communications via the communication link 2415, even if data communicated via the communication link 2415 does not originate at the base station 110-a.

Further, at least one of the base station 110-a, the UE 120-a, or the UE 120-b, or any combination thereof, may perform radio link management (RLM) procedures for each of the communication link 2405, the communication link 2410, and the communication link 2415. In some cases, at least one of the base station 110-a, the UE 120-a, or the UE 120-b, or any combination thereof, may declare RLF based on determining that both of the communication link 2405 and the relay link (e.g., communication link 2410 and communication link 2415) toward the UE 120-b fail.

As shown in Fig. 24B, the UE 120-b may transmit the CSI report 2430 to the base station 110-a instead of (or alternatively in addition to) transmitting the CSI report 2430 to the UE 120-a. Transmitting the CSI report 2430 to the base station 110-a instead of (or alternatively in addition to) transmitting the CSI report 2430 to the UE 120-a may reduce the signaling overhead (e.g., may reduce the total number of transmissions) associated with the base station 110-a obtaining CSI for the communication link 2415. For example, the base station 110-a may transmit a CSI request trigger 2420 to the UE 120-a via the communication link 2410, and the UE 120-a, based on receiving the CSI request trigger 2420, may transmit a CSI request 2425 to the UE 120-b to initiate a CSI measurement of the communication link 2415, as described in more detail with reference to Fig. 24A.

The UE 120-b may receive the CSI request 2425 and may generate a CSI report 2430. For example, the UE 120-b may receive the CSI request 2425 and may measure one or more CSI-RSs transmitted by the UE 120-a, as described in more detail with reference to Fig. 24A. In some implementations, the UE 120-b may transmit the CSI report 2430 to the base station 110-a via the communication link 2405. As a result, the UE 120-b may provide the base station 110-a with the CSI associated with the communication link 2415, and the UE 120-a may refrain from monitoring for and relaying the CSI report 2430 to the base station 110-a, which may reduce the total number of transmissions, and therefore the resource usage, associated with scheduling and transmitting data 2440.

The base station 110-a may receive the CSI report 2430 and determine (identify) therefrom the CSI associated with the communication link 2415. The base station 110-a may use the CSI associated with the communication link 2415 to schedule data 2440 to the UE 120-b and/or to assist the UE 120-a in MCS selection. In some examples, the UE 120-b may refrain from transmitting the CSI report 2430 to the UE 120-a, and the UE 120-a may rely on MCS information 2435 from the base station 110-a to determine an MCS. For example, the base station 110-a may determine MCS information 2435 and transmit the MCS information 2435 to the UE 120-a. The MCS information 2435 may include an indication of an MCS, an indication of a range of MCSs, or one or more parameters, indications, configurations, or rules, or any combination thereof, that the UE 120-a may use to determine an MCS for transmissions to the UE 120-b, as described in more detail with reference to Fig. 24A. In cases when the MCS information 2435 includes a range of MCSs or one or more parameters, indications, configurations, or rules, or any combination thereof, the UE 120-a (without the CSI associated with the communication link 2415) may determine an MCS based on the MCS information 2435 and a different parameter than the CSI included in the CSI report 2430, such as the error rate (e.g., the packet error rate) or previously determined CSI associated with the communication link 2415.

In some aspects, the base station 110-a may determine to communicate with the UE 120-b via the relay link (e.g., using UE 120-a as a relay). For example, the base station 110-a may determine to transmit the data 2440 to the UE 120-b via the UE 120-a. As a result, the base station 110-a may transmit the data 2440 to the UE 120-a via the communication link 2410, and the UE 120-a may transmit (i.e., relay) the data 2440 to the UE 120-b. As described herein, the UE 120-a may transmit the data 2440 to the UE 120-b with an MCS based on the MCS information 2435 received from the base station 110-a. As a result, the base station 110-a may facilitate communication scheduling and MCS selection, which may increase the reliability and efficiency of communications between the base station 110-a and the UE 120-b. In some other aspects, the base station 110-a may not transmit the data 2440 to the UE 120-a, but the data 2440 may instead be generated by the UE 120-a - that is, the base station 110-a may support MCS determinations for communications via the communication link 2415, even if data communicated via the communication link 2415 does not originate at the base station 110-a.

Further, at least one of the base station 110-a, the UE 120-a, or the UE 120-b, or any combination thereof, may perform RLM procedures for each of the communication link 2405, the communication link 2410, and the communication link 2415. In some cases, at least one of the base station 110-a, the UE 120-a, or the UE 120-b, or any combination thereof, may declare RLF based on determining that both of the communication link 2405 and the relay link (e.g., communication link 2410 and communication link 2415) toward the UE 120-b fail.

Thus, the techniques described herein may enable the base station 110-a to determine the channel quality (e.g., channel knowledge) associated with the communication link 2415, and the base station 110-a may use the determined channel quality to improve scheduling decisions or to assist the UE 120-a in selecting a more optimal MCS, or both. For example, by implementing the described techniques, the base station 110-a may avoid inaccurately estimating or approximating the channel quality associated with the communication link 2415. Further, some implementations of the present disclosure may enable the base station 110-a to assist the UE 120-a regarding the selection of an MCS to use for transmitting communications to the UE 120-b based on current channel conditions, which may beneficially avoid the UE 120-a determining an MCS based on one or more parameters that fail to account for current channel conditions or otherwise making a less optimal MCS determination.

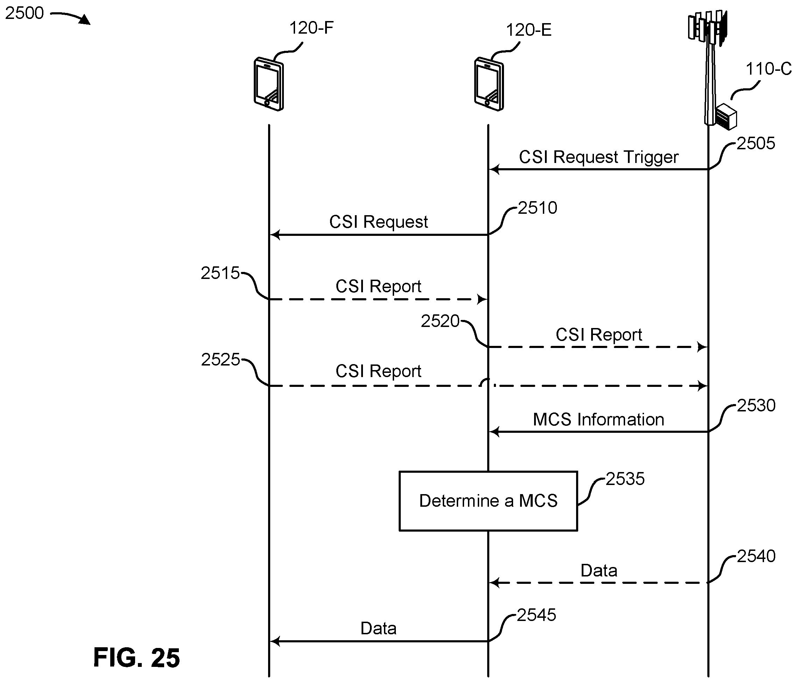

As indicated above, Figs. 24A and 25B are provided as examples. Other examples may differ from what is described with respect to Figs 24A and 24B.

Fig. 25 illustrates an example of a process flow 2500 that provides for base station support for sidelink CSI reporting in accordance with aspects of the present disclosure. In some examples, the process flow 2500 may implement aspects of wireless communications system 100. The process flow 2500 illustrates communication between a base station 110-c, a UE 120-e, and a UE 120-f, which may be examples of corresponding devices as described herein. In some cases, the UE 120-e may be a relay UE for the UE 120-f.

At 2505, the base station 110-c may transmit a CSI request trigger to the UE 120-e. In some examples, the CSI request trigger may include an indication for the UE 120-e to request CSI associated with a sidelink between the UE 120-e and the UE 120-f. In some aspects, the indication for the UE 120-e to request the CSI may indicate one or more components of a CSI report. For example, the base station 110-c may indicate the one or more components of the CSI report that the UE 120-e is to request from the UE 120-f (e.g., such that the UE 120-f may include the indicated one or more components in the CSI report).

At 2510, the UE 120-e may transmit a CSI request to the UE 120-f. In other words, the UE 120-e may transmit, from the UE 120-e to the UE 120-f based on the indication from the base station 110-c, the request for the CSI associated with the sidelink. In some aspects, the request for the CSI associated with the sidelink may indicate the one or more components indicated (requested) by the base station 110-c. In some cases, the UE 120-e may transmit the CSI request to the UE 120-f via layer 2 signaling, such as via MAC layer signaling or RLC layer signaling. The UE 120-f may receive the CSI request and may generate a CSI report based on receiving the CSI request. In some aspects, the UE 120-f may include the one or more components in the CSI report based on receiving an indication of the one or more components from the request for the CSI from the UE 120-e.

At 2515, the UE 120-f may, in some implementations, transmit the CSI report to the UE 120-e. For example, the UE 120-f may transmit, to the UE 120-e, the CSI report including the CSI associated with the sidelink. At 2520, the UE 120-e may, in such implementations when the UE 120-f transmits the CSI report to the UE 120-e, transmit the CSI report to the base station 110-c. In some examples, the UE 120-e may transmit the CSI report to the base station 110-c and may expect to receive MCS information from the base station 110-c based on transmitting the CSI report to the base station 110-c.

At 2525, the UE 120-f may, additionally or alternatively, transmit the CSI report to the base station 110-c. For example, the UE 120-f may transmit, from the UE 120-f to the base station 110-c based on the CSI request from the UE 120-e, the CSI associated with the sidelink. In some examples, the UE 120-f may refrain from transmitting the CSI report to the base station 110-c if the UE 120-f transmits the CSI report to the UE 120-e at 2515.

At 2530, the base station 110-c may transmit MCS information to the UE 120-e. The MCS information may include an indication of an MCS or a range of MCSs for the UE 120-e to use for communications to the UE 120-f, as described in more detail in connection with Figs. 24A and 24B. Additionally or alternatively, the MCS information may include one or more parameters, indications, rules, or configurations, or any combination thereof, that the UE 120-e may use to determine an MCS. For example, the MCS information may include an offset associated with an MCS-to-CSI mapping that the UE 120-e may use to determine an MCS, as described in more detail in connection with Figs. 24A and 24B.

At 2535, the UE 120-e may determine an MCS. In some examples, the MCS information may include an indication of an MCS, and the UE 120-e may determine to use the MCS indicated by the MCS information. In some other examples, the MCS information may indicate a range of MCSs and the UE 120-e may determine an MCS from the range of MCSs based on at least one of the CSI associated with the sidelink, another indication, or a capability of the UE 120-e, or any combination thereof. Additionally or alternatively, the UE 120-e may determine an MCS based on one or more parameters, indications, rules, or configurations, or any combination thereof, included in the MCS information, such as an offset associated with an MCS-to-CSI mapping.

At 2540, the base station 110-c may, in some implementations, transmit data to the UE 120-e for the UE 120-e to relay to the UE 120-f. At 2545, the UE 120-e may transmit the data to the UE 120-f using the MCS determined at 2535. As a result, the UE 120-f may have a greater likelihood of successfully receiving the data.

As indicated above, Fig. 25 is provided as an example. Other examples may differ from what is described with respect to Fig. 25.

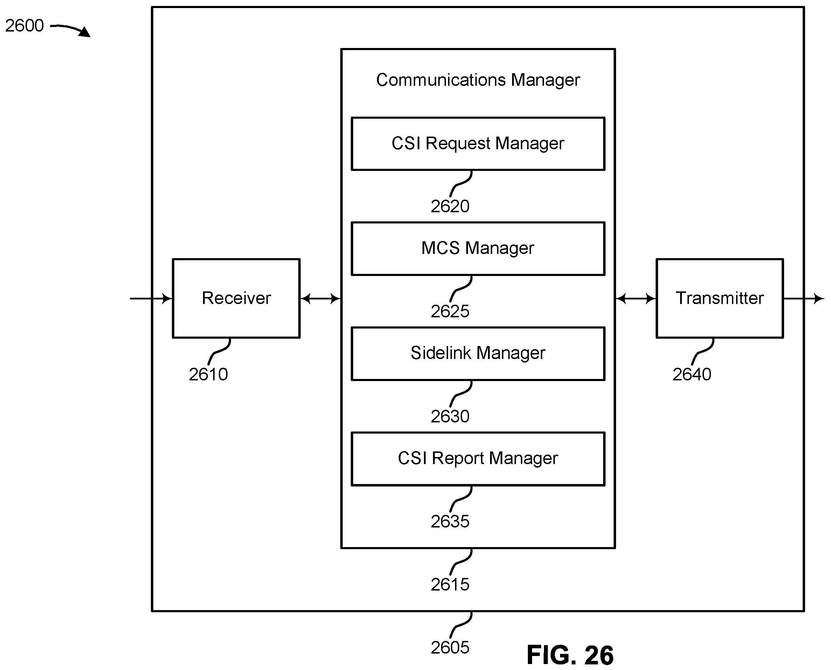

Fig. 26 shows a block diagram 2600 of a device 2605 that provides for base station support for sidelink CSI reporting in accordance with aspects of the present disclosure. The device 2605 may be an example of aspects of a UE 120 as described herein. For example, the device 2605 may be a relay UE or a receiving UE. The device 2605 may include a receiver 2610, a communications manager 2615, and a transmitter 2640. The device 2605 may also include a processor. Each of these components may be in communication with one another (e.g., via one or more buses).

The receiver 2610 may receive information such as packets, user data, or control information associated with various information channels (e.g., control channels, data channels, and information related to base station support for sidelink CSI reporting, etc.). Information may be passed on to other components of the device 2605. The receiver 2610 may be an example of aspects of a transceiver described elsewhere herein. The receiver 2610 may utilize a single antenna or a set of antennas.

The communications manager 2615 may include a CSI request manager 2620, an MCS manager 2625, a sidelink manager 2630, and a CSI report manager 2635.

In some examples, the device 2605 may function as a relay UE. The CSI request manager 2620 may receive, at the first UE from a base station, an indication for the first UE to request CSI associated with a sidelink between the first UE and a second UE and transmit, from the first UE to the second UE and based on the indication from the base station, a request for the CSI associated with the sidelink. The MCS manager 2625 may receive, at the first UE from the base station, MCS information for the sidelink, the MCS information based on the CSI. The sidelink manager 2630 may communicate, via the sidelink, with the second UE based on the MCS information.

In some other examples, the device 2605 may function as a receiving UE. The CSI request manager 2620 may receive, at the second UE from a first UE, a request for CSI associated with a sidelink between the second UE and the first UE. The CSI report manager 2635 may transmit, from the second UE to a base station and based on the request from the first UE, the CSI associated with the sidelink. The sidelink manager 2630 may receive, via the sidelink, a transmission from the first UE that is based on the CSI.

The transmitter 2640 may transmit signals generated by other components of the device 2605. In some examples, the transmitter 2640 may be co-located with a receiver 2610 in a transceiver module. For example, the transmitter 2640 may be a transceiver described elsewhere herein. The transmitter 2640 may utilize a single antenna or a set of antennas.

As indicated above, Fig. 26 is provided as an example. Other examples may differ from what is described with respect to Fig. 26.

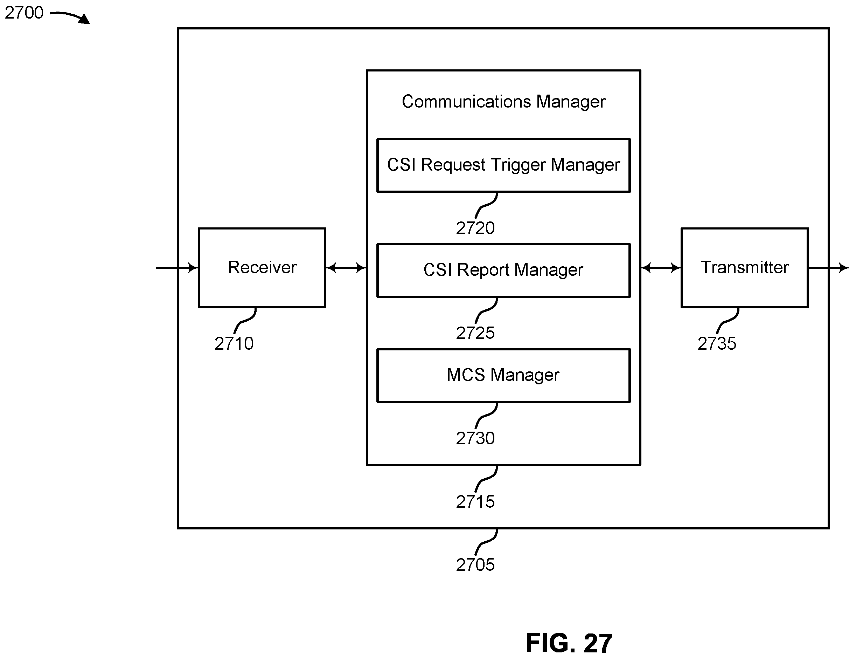

Fig. 27 shows a block diagram 2700 of a device 2705 that provides for base station support for sidelink CSI reporting in accordance with aspects of the present disclosure. The device 2705 may be an example of aspects of a base station 110 as described herein. The device 2705 may include a receiver 2710, a communications manager 2715, and a transmitter 2735. The device 2705 may also include a processor. Each of these components may be in communication with one another (e.g., via one or more buses).

The receiver 2710 may receive information such as packets, user data, or control information associated with various information channels (e.g., control channels, data channels, and information related to base station support for sidelink CSI reporting, etc.). Information may be passed on to other components of the device 2705. The receiver 2710 may be an example of aspects of a transceiver described elsewhere herein. The receiver 2710 may utilize a single antenna or a set of antennas.

The communications manager 2715 may include a CSI request trigger manager 2720, a CSI report manager 2725, and an MCS manager 2730.

The CSI request trigger manager 2720 may transmit, from the base station to a first UE, an indication for the first UE to request CSI associated with a sidelink between the first UE and a second UE. The CSI report manager 2725 may receive, at the base station and based on the indication to the first UE, the CSI associated with the sidelink. The MCS manager 2730 may transmit, from the base station to the first UE, MCS information for the sidelink, the MCS information based on the CSI.

The transmitter 2735 may transmit signals generated by other components of the device 2705. In some examples, the transmitter 2735 may be co-located with a receiver 2710 in a transceiver module. For example, the transmitter 2735 may be an example of aspects of a transceiver described elsewhere herein. The transmitter 2735 may utilize a single antenna or a set of antennas.

As indicated above, Fig. 27 is provided as an example. Other examples may differ from what is described with respect to Fig. 27.

Fig. 28 is a diagram illustrating an example process 2800 performed, for example, by a first UE, in accordance with the present disclosure. Example process 2800 is an example where the first UE (e.g., UE 120, a relay UE, or the like) performs operations associated with base station support for sidelink channel state information reporting.

As shown in Fig. 28, in some aspects, process 2800 may include receiving, at the first UE from a base station, an indication for the first UE to request channel state information associated with a sidelink between the first UE and a second UE (block 2810). For example, the first UE (e.g., using receiver 2610, depicted in Fig. 26) may receive, at the first UE from a base station, an indication for the first UE to request channel state information associated with a sidelink between the first UE and a second UE, as described above.

As further shown in Fig. 28, in some aspects, process 2800 may include transmitting, from the first UE to the second UE and based at least in part on the indication from the base station, a request for the channel state information associated with the sidelink (block 2820). For example, the first UE (e.g., using transmitter 2640, depicted in Fig. 26) may transmit, from the first UE to the second UE and based at least in part on the indication from the base station, a request for the channel state information associated with the sidelink, as described above.

As further shown in Fig. 28, in some aspects, process 2800 may include receiving, at the first UE from the base station, modulation and coding scheme information for the sidelink, the modulation and coding scheme information based at least in part on the channel state information (block 2830). For example, the first UE (e.g., using receiver 2610, depicted in Fig. 26) may receive, at the first UE from the base station, modulation and coding scheme information for the sidelink, the modulation and coding scheme information based at least in part on the channel state information, as described above.

As further shown in Fig. 28, in some aspects, process 2800 may include communicating, via the sidelink, with the second UE based at least in part on the modulation and coding scheme information (block 2840). For example, the first UE (e.g., using receiver 2610, transmitter 2640, or communications manager 2615, depicted in Fig. 26) may communicate, via the sidelink, with the second UE based at least in part on the modulation and coding scheme information, as described above.

Process 2800 may include additional aspects, such as any single aspect or any combination of aspects described below and/or in connection with one or more other processes described elsewhere herein.

In a first aspect, process 2800 includes receiving, at the first UE from the second UE, a channel state information report comprising the channel state information, and determining a modulation and coding scheme based at least in part on the channel state information.

In a second aspect, alone or in combination with the first aspect, process 2800 includes transmitting, to the base station from the first UE, the channel state information report, wherein receiving the modulation and coding scheme information from the base station is based at least in part on transmitting the channel state information report to the base station.

In a third aspect, alone or in combination with one or more of the first and second aspects, transmitting the channel state information report to the base station comprises relaying the channel state information report from the second UE to the base station.

In a fourth aspect, alone or in combination with one or more of the first through third aspects, the modulation and coding scheme information comprises one or more parameters for modulation and coding scheme selection, and determining the modulation and coding scheme is based at least in part on the one or more parameters and the channel state information.

In a fifth aspect, alone or in combination with one or more of the first through fourth aspects, the one or more parameters comprise an offset, and process 2800 further includes applying the offset to a mapping between the channel state information and a set of modulation and coding schemes, wherein the mapping associates a first modulation and coding scheme of the set with the channel state information, and determining the modulation and coding scheme comprises selecting a second modulation and coding scheme from the set based at least in part on applying the offset.

In a sixth aspect, alone or in combination with one or more of the first through fifth aspects, the modulation and coding scheme information indicates a modulation and coding scheme, and the communicating comprises sending a transmission to the second UE using the indicated modulation and coding scheme.

In a seventh aspect, alone or in combination with one or more of the first through sixth aspects, the modulation and coding scheme information indicates a range of modulation and coding schemes.

In an eighth aspect, alone or in combination with one or more of the first through seventh aspects, process 2800 includes receiving, at the first UE from the second UE, a channel state information report comprising the channel state information, and selecting a modulation and coding scheme from the range of modulation and coding schemes based at least in part on the channel state information, wherein the communicating comprises sending a transmission to the second UE using the selected modulation and coding scheme.

In a ninth aspect, alone or in combination with one or more of the first through eighth aspects, the indication for the first UE to request the channel state information indicates one or more components of a channel state information report.

In a tenth aspect, alone or in combination with one or more of the first through ninth aspects, the request for the channel state information indicates the one or more components of the channel state information report.

In an eleventh aspect, alone or in combination with one or more of the first through tenth aspects, process 2800 includes receiving, at the first UE from the second UE, the channel state information within the channel state information report comprising the one or more components.

In a twelfth aspect, alone or in combination with one or more of the first through eleventh aspects, the request for the channel state information is transmitted from the first UE to the second UE via layer 2 signaling.

In a thirteenth aspect, alone or in combination with one or more of the first through twelfth aspects, the layer 2 signaling comprises media access control layer signaling, radio link control layer signaling, or any combination thereof.

In a fourteenth aspect, alone or in combination with one or more of the first through thirteenth aspects, the first UE is a relay UE for the second UE.

Although Fig. 28 shows example blocks of process 2800, in some aspects, process 2800 may include additional blocks, fewer blocks, different blocks, or differently arranged blocks than those depicted in Fig. 28. Additionally, or alternatively, two or more of the blocks of process 2800 may be performed in parallel.

Fig. 29 is a diagram illustrating an example process 2900 performed, for example, by a base station, in accordance with the present disclosure. Example process 2900 is an example where the base station (e.g., base station 110) performs operations associated with base station support for sidelink channel state information reporting.

As shown in Fig. 29, in some aspects, process 2900 may include transmitting, from the base station to a first UE, an indication for the first UE to request channel state information associated with a sidelink between the first UE and a second UE (block 2910). For example, the base station (e.g., using transmitter 2735, depicted in Fig. 27) may transmit, from the base station to a first UE, an indication for the first UE to request channel state information associated with a sidelink between the first UE and a second UE, as described above.

As further shown in Fig. 29, in some aspects, process 2900 may include receiving, at the base station and based at least in part on the indication to the first UE, the channel state information associated with the sidelink (block 2920). For example, the base station (e.g., using receiver 2710, depicted in Fig. 27) may receive, at the base station and based at least in part on the indication to the first UE, the channel state information associated with the sidelink, as described above.

As further shown in Fig. 29, in some aspects, process 2900 may include transmitting, from the base station to the first UE, modulation and coding scheme information for the sidelink, the modulation and coding scheme information based at least in part on the channel state information (block 2930). For example, the base station (e.g., using transmitter 2735, depicted in Fig. 27) may transmit, from the base station to the first UE, modulation and coding scheme information for the sidelink, the modulation and coding scheme information based at least in part on the channel state information, as described above.

Process 2900 may include additional aspects, such as any single aspect or any combination of aspects described below and/or in connection with one or more other processes described elsewhere herein.

In a first aspect, receiving the channel state information associated with the sidelink comprises receiving, at the base station from the first UE, a channel state information report comprising the channel state information.

In a second aspect, alone or in combination with the first aspect, the channel state information report is from a perspective of the second UE and comprises a relayed message from the first UE.

In a third aspect, alone or in combination with one or more of the first and second aspects, receiving the channel state information associated with the sidelink comprises receiving, at the base station from the second UE, a channel state information report comprising the channel state information.

In a fourth aspect, alone or in combination with one or more of the first through third aspects, process 2900 includes determining a modulation and coding scheme based at least in part on the channel state information associated with the sidelink, wherein the modulation and coding scheme information indicates the determined modulation and coding scheme.

In a fifth aspect, alone or in combination with one or more of the first through fourth aspects, process 2900 includes determining a range of modulation and coding schemes based at least in part on the channel state information associated with the sidelink, wherein the modulation and coding scheme information indicates the determined range of modulation and coding schemes.

In a sixth aspect, alone or in combination with one or more of the first through fifth aspects, the modulation and coding scheme information comprises one or more parameters for modulation and coding scheme selection.

In a seventh aspect, alone or in combination with one or more of the first through sixth aspects, the one or more parameters comprise an offset associated with a mapping between the channel state information and a set of modulation and coding schemes.

In an eighth aspect, alone or in combination with one or more of the first through seventh aspects, the indication for the first UE to request channel state information indicates one or more components of a channel state information report.

In a ninth aspect, alone or in combination with one or more of the first through eighth aspects, the channel state information is received within the channel state information report comprising the one or more components.

In a tenth aspect, alone or in combination with one or more of the first through ninth aspects, the first UE is a relay UE for the second UE.

Although Fig. 29 shows example blocks of process 2900, in some aspects, process 2900 may include additional blocks, fewer blocks, different blocks, or differently arranged blocks than those depicted in Fig. 29. Additionally, or alternatively, two or more of the blocks of process 2900 may be performed in parallel.

Fig. 30 is a diagram illustrating an example process 3000 performed, for example, by a second UE, in accordance with the present disclosure. Example process 3000 is an example where the second UE (e.g., a UE 120, a remote UE, or the like) performs operations associated with base station support for sidelink channel state information reporting.

As shown in Fig. 30, in some aspects, process 3000 may include receiving, at the second UE from a first UE, a request for channel state information associated with a sidelink between the second UE and the first UE (block 3010). For example, the second UE (e.g., using receiver 2610, depicted in Fig. 26) may receive, at the second UE from a first UE, a request for channel state information associated with a sidelink between the second UE and the first UE, as described above.

As further shown in Fig. 30, in some aspects, process 3000 may include transmitting, from the second UE to a base station and based at least in part on the request from the first UE, the channel state information associated with the sidelink (block 3020). For example, the second UE (e.g., using transmitter 2640, depicted in Fig. 26) may transmit, from the second UE to a base station and based at least in part on the request from the first UE, the channel state information associated with the sidelink, as described above.

As further shown in Fig. 30, in some aspects, process 3000 may include receiving, via the sidelink, a transmission from the first UE that is based at least in part on the channel state information (block 3030). For example, the second UE (e.g., using receiver 2610, depicted in Fig. 26) may receive, via the sidelink, a transmission from the first UE that is based at least in part on the channel state information, as described above.

Process 3000 may include additional aspects, such as any single aspect or any combination of aspects described below and/or in connection with one or more other processes described elsewhere herein.

In a first aspect, the transmission is associated with a modulation and coding scheme based at least in part on the channel state information.

In a second aspect, alone or in combination with the first aspect, the request for the channel state information is received at the second UE from the first UE via layer 2 signaling.

In a third aspect, alone or in combination with one or more of the first and second aspects, the layer 2 signaling comprises media access control layer signaling, radio link control layer signaling, or any combination thereof.

In a fourth aspect, alone or in combination with one or more of the first through third aspects, process 3000 includes exchanging layer 3 signaling between the second UE and the base station.

In a fifth aspect, alone or in combination with one or more of the first through fourth aspects, the first UE is a relay UE for the second UE.

Although Fig. 30 shows example blocks of process 3000, in some aspects, process 3000 may include additional blocks, fewer blocks, different blocks, or differently arranged blocks than those depicted in Fig. 30. Additionally, or alternatively, two or more of the blocks of process 3000 may be performed in parallel.

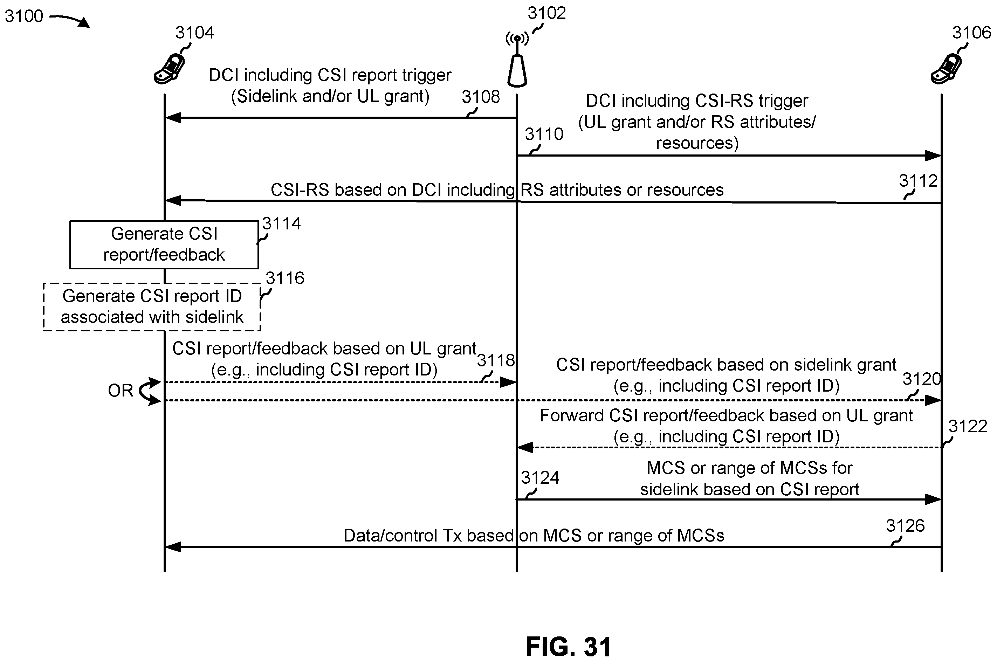

Fig. 31 is a call flow diagram 3100 illustrating communications between a base station 3102, a first UE 3104, and a second UE 3106. At 3108, the base station 3102 transmits, to the first UE 3104, first DCI including a first trigger for generating a CSI report by the first UE 3104 and receiving the CSI report from either the first UE 3104 or the second UE 3106. The first DCI may include a sidelink grant for transmitting the CSI report from the first UE 3104 to the second UE 3106 and/or an uplink grant for transmitting the CSI report from the first UE 3104 to the base station 3102. At 3110, the base station 3102 transmits, to the second UE 3106, second DCI including a second trigger for causing the second UE 3106 to transmit CSI-RS to the first UE 3104 for generating the CSI report by the first UE 3104. The second DCI may include an uplink grant for transmitting the CSI report from the second UE 3106 to the base station 3102. The second DCI may also include reference signal (RS) attributes or resources for transmitting the CSI-RS from the second UE 3106 to the first UE 3104. In aspects, the first DCI including the first trigger and the second DCI including the second trigger may be transmitted from the base station 3102 concurrently or in any order. At 3112, the second UE 3106 transmits the CSI-RS to the first UE 3104 in response to receiving the second DCI including the second trigger and the RS attributes or resources from the base station 3102.

At 3114, the first UE 3104 generates CSI feedback for the CSI report based on receiving the first trigger for the CSI report from the base station 3102 and receiving the CSI-RS from the second UE 3106. At 3116, the first UE 3104 may generate a CSI report ID associated with the sidelink connection between the first UE 3104 and the second UE 3106. The first UE 3104 may transmit the CSI report including the CSI feedback and the CSI report ID either at 3118 to the base station 3102 based on the uplink grant or at 3120 to the second UE 3106 based on the sidelink grant. In other configurations, the CSI report may be transmitted at 3118 and 3120 to both the base station 3102 and the second UE 3106. If the CSI report is transmitted to the second UE 3106 at 3120, the second UE 3106 may forward the CSI report including the CSI feedback and the CSI report ID, at 3122, to the base station 3102 based on the uplink grant included in the second DCI.

Upon receiving the CSI report from the first UE 3104 or the second UE 3106, the base station 3102 may determine an MCS or a range of MCSs, which is/are transmitted, at 3124, to the second UE 3106. The MCS or the range of MCSs may be used by the second UE 3106 for a sidelink transmission based on the CSI report. For example, at 3126, data and/or control information may be transmitted from the second UE 3106 to the first UE 3104 based on the MCS or the range of MCSs determined by the base station 3102 and based on the CSI report generated by the first UE 3104.

As indicated above, Fig. 31 is provided as an example. Other examples may differ from what is described with respect to Fig. 31.

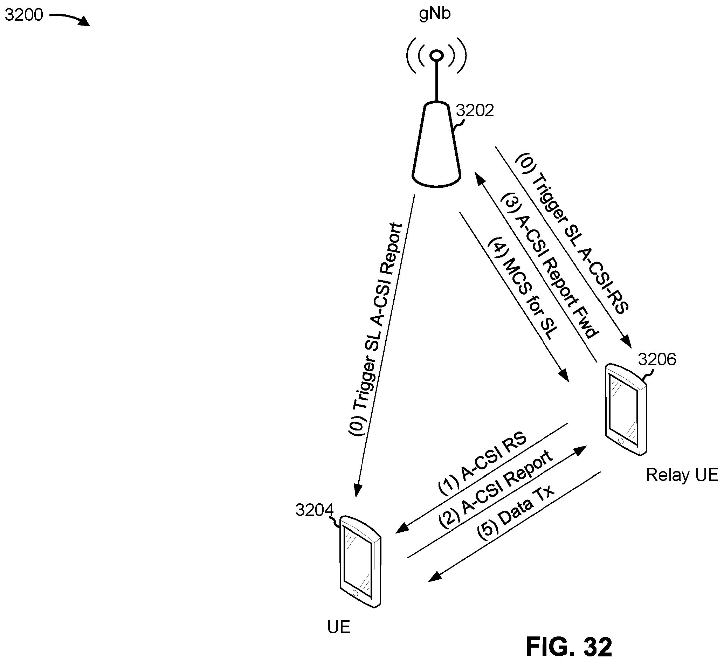

Fig. 32 illustrates a communication system 3200 for triggering an A-CSI report from a relay UE 3206. Sidelink A-CSI reporting may be triggered by the base station 3202 through the Uu interface based on DCI transmitted from the base station 3202 to the UE 3204. The DCI transmitted from the base station 3202 may also include information for the relay UE 3206 for triggering A-CSI-RS transmitted from the relay UE 3206 to the UE 3204, as the RS used for measuring the sidelink by the UE 3204 needs to be transmitted from an opposite side of the sidelink as that of the UE 3204 which is to generate the A-CSI report. The DCI/trigger transmitted from the base station 3202 to the UE 3204 may include a sidelink grant for transmitting the A-CSI report from the UE 3204 to the relay UE 3206. The DCI/trigger for transmitting the A-CSI-RS from the relay UE 3206 to the UE 3204 may further include a UL grant for the relay UE 3206 to transmit the A-CSI report to the base station 3202 after the A-CSI report is generated/received.

More specifically, Step 0 performed by the communication system 3200 may be split into two parts. First, the base station 3202 may be provisioned for signaling the UE 3204 to generate the A-CSI report. However, in order for the UE 3204 to perform measurements on the sidelink and generate the A-CSI report, the UE 3204 needs to receive an RS. Since communication between the base station 3202 and the UE 3204 is based on the Uu interface, the base station 3202 may not transmit the required RS. Instead, the second part of Step 0 is for the base station 3202 to trigger the relay UE 3206 to transmit the RS to the UE 3204 over the PC5 interface. The trigger(s) for the relay UE 3206 and/or the UE 3204 may indicate time and frequency resources for which the A-CSI-RS is to be transmitted and received for performing measurements on the sidelink channel by the UE 3204.

Upon being signaled by the base station 3202 to generate the A-CSI report, the UE 3204 may be configured for receiving the A-CSI-RS from the relay UE 3206. Accordingly, at Step 1 the A-CSI-RS may be transmitted from the relay UE 3206 to the UE 3204 based on the trigger received from the base station 3202. The trigger may be indicative of RS attributes and resources (e.g., time and frequency resources) to be used for transmitting the A-CSI-RS. The UE 3204, upon receiving the A-CSI-RS, may measure a quality of the sidelink based on the A-CSI-RS and generate the A-CSI report. At Step 2, the UE 3204 may transmit the generated A-CSI report to the relay UE 3206 (e.g., based on the sidelink grant received via the DCI).

The relay UE 3206 may be configured (e.g., based on receiving the A-CSI-RS trigger and/or the UL grant via the DCI) to forward the A-CSI report to the base station 3202 upon receiving the A-CSI report from the UE 3204. At Step 3, the relay UE 3206 may forward the A-CSI report to the base station 3202. The forwarded A-CSI report may include a report identifier (ID) that indicates to the base station 3202 the sidelink for which the forwarded A-CSI report corresponds. For example, in some configurations the UE 3204 may be in communication with a plurality of relay UEs over a plurality of different sidelinks, such that the report ID may be used to indicate which of the plurality of different sidelinks the forwarded A-CSI report is associated with. The base station 3202 may determine, based on the A-CSI report forwarded from the relay UE 3206, an MCS or a range of MCSs for subsequent transmission on the corresponding sidelink. The MCS or the range of MCSs may be determined by the base station 3202 based on a configuration parameter that is associated with information included in the forwarded A-CSI report.

The base station 3202 may signal the relay UE 3206 based on determinations associated with the information included in the forwarded A-CSI report. For example, at Step 4, the base station 3202 may signal the relay UE 3206 regarding the MCS or the range of MCSs that were determined based on the forwarded A-CSI report. In aspects, the signaling by the base station 3202 may be performed in configurations other than an RLC configuration, such as by PHY layer signaling (e.g., DCI) or via the MAC-CE. The relay UE 3206 may utilize the signaled information for the MCS or the range of MCSs to transmit data and/or control information from the relay UE 3206 to the UE 3204. For example, in Step 5 the relay UE 3206 transmits data to the UE 3204 over the sidelink based on the signaled information received from the base station 3202, which is further based on information included in the A-CSI report received from the relay UE 3206.

As indicated above, Fig. 32 is provided as an example. Other examples may differ from what is described with respect to Fig. 32.

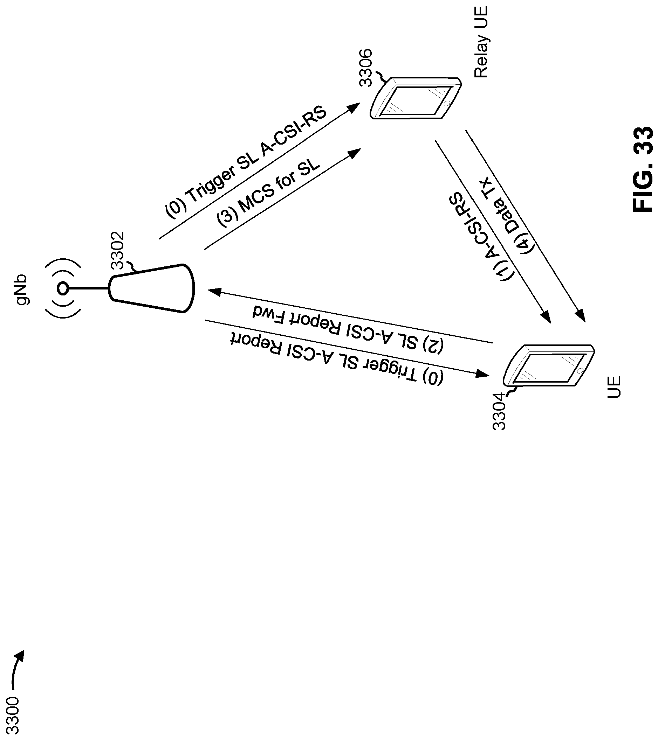

Fig. 33 illustrates a communication system 3300 for triggering an A-CSI report from a UE 3304. Sidelink A-CSI reporting may be triggered by the base station 3302 through the Uu interface based on DCI transmitted from the base station 3302 to the UE 3304. The DCI transmitted from the base station 3302 may also include information for the relay UE 3306 for triggering A-CSI-RS transmitted from the relay UE 3306 to the UE 3304, as the RS used for measuring the sidelink by the UE 3304 needs to be transmitted from an opposite side of the sidelink as that of the UE 3304 which is to generate the A-CSI report. The DCI/trigger transmitted from the base station 3302 to the UE 3304 may include a UL grant for the UE 3304 to transmit the A-CSI report directly to the base station 3302 after the A-CSI report is generated by the UE 3304. A grant for transmitting the A-CSI report may not be included in the DCI/trigger for the relay UE 3306, as the A-CSI report may be forwarded directly from the UE 3304 to the base station 3302 in accordance with a flow of the communication system 3300.

More specifically, Step 0 performed by the communication system 3300 may be split into two parts. First, the base station 3302 may be provisioned for signaling the UE 3304 to generate the A-CSI report. However, in order for the UE 3304 to perform measurements on the sidelink and generate the A-CSI report, the UE 3304 needs to receive an RS. Since communication between the base station 3302 and the UE 3304 is based on the Uu interface, the base station 3302 may not transmit the required RS. Instead, the second part of Step 0 is for the base station 3302 to trigger the relay UE 3306 to transmit the RS to the UE 3304 over the PC5 interface. The trigger(s) for the relay UE 3306 and/or the UE 3304 may indicate time and frequency resources for which the A-CSI-RS is to be transmitted and received for performing measurements on the sidelink channel by the UE 3304.

Upon being signaled by the base station 3302 to generate the A-CSI report, the UE 3304 may be configured for receiving the A-CSI-RS from the relay UE 3306. Accordingly, at Step 1 the A-CSI-RS may be transmitted from the relay UE 3306 to the UE 3304 based on the trigger received from the base station 3302. The trigger may be indicative of RS attributes and resources (e.g., time and frequency resources) to be used for transmitting the A-CSI-RS. The UE 3304, upon receiving the A-CSI-RS, may measure a quality of the sidelink based on the A-CSI-RS and generate the A-CSI report. At Step 2, the UE 3304 may transmit the generated A-CSI report to the base station 3302 (e.g., based on the UL grant received via the DCI).

The UE 3304 may be configured (e.g., based on receiving the A-CSI report trigger and/or the UL grant via the DCI) to forward the A-CSI report to the base station 3302 after generating the A-CSI report. At Step 2, the UE 3304 may forward the A-CSI report to the base station 3302. The forwarded A-CSI report may include a report ID that indicates to the base station 3302 the sidelink for which the forwarded A-CSI report corresponds. For example, in some configurations the UE 3304 may be in communication with a plurality of relay UEs over a plurality of different sidelinks, such that the report ID may be used to indicate which of the plurality of different sidelinks the forwarded A-CSI report is associated with. The base station 3302 may determine, based on the A-CSI report forwarded from the UE 3304, an MCS or a range of MCSs for subsequent transmission on the corresponding sidelink. The MCS or the range of MCSs may be determined by the base station 3302 based on a configuration parameter that is associated with information included in the forwarded A-CSI report.

The base station 3302 may signal the relay UE 3306 based on determinations associated with the information included in the forwarded A-CSI report. For example, at Step 3, the base station 3302 may signal the relay UE 3306 regarding the MCS or the range of MCSs that were determined based on the forwarded A-CSI report. In aspects, the signaling by the base station 3302 may be performed in configurations other than an RLC configuration, such as by PHY layer signaling (e.g., DCI) or via the MAC-CE. The relay UE 3306 may utilize the signaled information for the MCS or the range of MCSs to transmit data and/or control information from the relay UE 3306 to the UE 3304. For example, in Step 4 the relay UE 3306 transmits data to the UE 3304 over the sidelink based on the signaled information received from the base station 3302, which is further based on information included in the A-CSI report received from the UE 3304.

As indicated above, Fig. 33 is provided as an example. Other examples may differ from what is described with respect to Fig. 33.

Fig. 34 is a diagram illustrating an example process 3400 performed, for example, by a base station, in accordance with the present disclosure. Example process 3400 is an example where the base station (e.g., base station 110) performs operations associated with UE report triggering by base station for sidelink A-CSI.

As shown in Fig. 34, in some aspects, process 3400 may include transmitting, to a first UE, first DCI including a first trigger for an aperiodic CSI report generated by the first UE (block 3410). For example, the base station (e.g., using a transmission component or a transmitter of a base station described herein) may transmit, to a first UE, first DCI including a first trigger for an aperiodic CSI report generated by the first UE, as described above.

As further shown in Fig. 34, in some aspects, process 3400 may include transmitting, to a second UE, second DCI including a second trigger for an aperiodic CSI-RS transmission to the first UE (block 3420). For example, the base station (e.g., using a transmission component or a transmitter of a base station described herein) may transmit, to a second UE, second DCI including a second trigger for an aperiodic CSI-RS transmission to the first UE, as described above.

As further shown in Fig. 34, in some aspects, process 3400 may include receiving a CSI report including CSI feedback based on the aperiodic CSI-RS transmission, the CSI report being based on the transmitted first DCI including the first trigger for the aperiodic CSI report and based on the transmitted second DCI including the second trigger for the aperiodic CSI-RS transmission (block 3430). For example, the base station (e.g., using a reception component or a receiver of a base station described herein) may receive a CSI report including CSI feedback based on the aperiodic CSI-RS transmission, the CSI report being based on the transmitted first DCI including the first trigger for the aperiodic CSI report and based on the transmitted second DCI including the second trigger for the aperiodic CSI-RS transmission, as described above.

Process 3400 may include additional aspects, such as any single aspect or any combination of aspects described below and/or in connection with one or more other processes described elsewhere herein.

In a first aspect, the first DCI includes an uplink grant for the CSI report, and the CSI report is received from the first UE based on the uplink grant.

In a second aspect, alone or in combination with the first aspect, the second DCI includes an uplink grant for the CSI report, and the CSI report generated by the first UE is received from the second UE based on the uplink grant.

In a third aspect, alone or in combination with one or more of the first and second aspects, process 3400 includes transmitting at least one MCS to the second UE, the at least one MCS being based on the received CSI report.

In a fourth aspect, alone or in combination with one or more of the first through third aspects, the CSI report is received with a CSI report ID associated with a sidelink connection between the first UE and the second UE.

In a fifth aspect, alone or in combination with one or more of the first through fourth aspects, the second trigger includes at least one of RS attributes or resources for the aperiodic CSI-RS transmission to the first UE by the second UE.

Although Fig. 34 shows example blocks of process 3400, in some aspects, process 3400 may include additional blocks, fewer blocks, different blocks, or differently arranged blocks than those depicted in Fig. 34. Additionally, or alternatively, two or more of the blocks of process 3400 may be performed in parallel.

Fig. 35 is a diagram illustrating an example process 3500 performed, for example, by a second UE, in accordance with the present disclosure. Example process 3500 is an example where the second UE (e.g., a UE 120, a relay UE, or the like) performs operations associated with UE report triggering by base station for sidelink A-CSI.

As shown in Fig. 35, in some aspects, process 3500 may include receiving, from a base station, DCI including a trigger for an aperiodic CSI-RS transmission to a first UE (block 3510). For example, the second UE (e.g., using a reception component or a receiver of a UE described herein) may receive, from a base station, DCI including a trigger for an aperiodic CSI-RS transmission to a first UE, as described above.

As further shown in Fig. 35, in some aspects, process 3500 may include transmitting CSI-RS to the first UE based on the received DCI including the trigger for the aperiodic CSI-RS transmission (block 3520). For example, the second UE (e.g., using a transmission component or a transmitter of a UE described herein) may transmit CSI-RS to the first UE based on the received DCI including the trigger for the aperiodic CSI-RS transmission, as described above.

Process 3500 may include additional aspects, such as any single aspect or any combination of aspects described below and/or in connection with one or more other processes described elsewhere herein.

In a first aspect, process 3500 includes receiving, from the base station, at least one MCS for sidelink communication with the first UE, the at least one MCS being associated with the transmitted CSI-RS, and transmitting a sidelink communication to the first UE, the sidelink communication being based on the at least one MCS.

In a second aspect, alone or in combination with the first aspect, the DCI includes an uplink grant for transmitting a CSI report, and process 3500 includes receiving, from the first UE, a CSI report including CSI feedback based on the transmitted CSI-RS, and transmitting the received CSI report to the base station, wherein the received at least one MCS is based on the transmitted CSI report.

In a third aspect, alone or in combination with one or more of the first and second aspects, the CSI report is transmitted to the base station with a CSI report ID associated with a sidelink connection between the first UE and the second UE.

In a fourth aspect, alone or in combination with one or more of the first through third aspects, the received DCI including the trigger includes at least one of RS attributes or resources for transmitting the CSI-RS to the first UE, and the CSI-RS is transmitted to the first UE based on the at least one of the RS attributes or the resources.

Although Fig. 35 shows example blocks of process 3500, in some aspects, process 3500 may include additional blocks, fewer blocks, different blocks, or differently arranged blocks than those depicted in Fig. 35. Additionally, or alternatively, two or more of the blocks of process 3500 may be performed in parallel.

Fig. 36 is a diagram illustrating an example process 3600 performed, for example, by a first UE, in accordance with the present disclosure. Example process 3600 is an example where the first UE (e.g., a UE 120, a remote UE, or the like) performs operations associated with UE report triggering by base station for sidelink A-CSI.

As shown in Fig. 36, in some aspects, process 3600 may include receiving, from a base station, DCI including a trigger for an aperiodic CSI report (block 3610). For example, the first UE (e.g., using a reception component or a receiver of a UE described herein) may receive, from a base station, DCI including a trigger for an aperiodic CSI report, as described above.

As further shown in Fig. 36, in some aspects, process 3600 may include receiving CSI-RS(s) from a second UE based on the received DCI including the trigger for the aperiodic CSI report (block 3620). For example, the first UE (e.g., using a reception component or a receiver of a UE described herein) may receive CSI-RS(s) from a second UE based on the received DCI including the trigger for the aperiodic CSI report, as described above.

Process 3600 may include additional aspects, such as any single aspect or any combination of aspects described below and/or in connection with one or more other processes described elsewhere herein.

In a first aspect, process 3600 includes generating, by the first UE, CSI feedback based on the received CSI-RS, and transmitting the aperiodic CSI report including the CSI feedback to at least one of the second UE or the base station.

In a second aspect, alone or in combination with the first aspect, the DCI includes a sidelink grant for transmitting the aperiodic CSI report to the second UE, and the aperiodic CSI report is transmitted to the second UE based on the sidelink grant.

In a third aspect, alone or in combination with one or more of the first and second aspects, the DCI includes an uplink grant for transmitting the aperiodic CSI report to the base station, and the aperiodic CSI report is transmitted to the base station based on the uplink grant.

In a fourth aspect, alone or in combination with one or more of the first through third aspects, the aperiodic CSI report is transmitted to the base station with a CSI report ID associated with a sidelink connection between the first UE and the second UE.

In a fifth aspect, alone or in combination with one or more of the first through fourth aspects, process 3600 includes receiving a sidelink communication from the second UE, the sidelink communication having an MCS based on the transmitted aperiodic CSI report.

Although Fig. 36 shows example blocks of process 3600, in some aspects, process 3600 may include additional blocks, fewer blocks, different blocks, or differently arranged blocks than those depicted in Fig. 36. Additionally, or alternatively, two or more of the blocks of process 3600 may be performed in parallel.

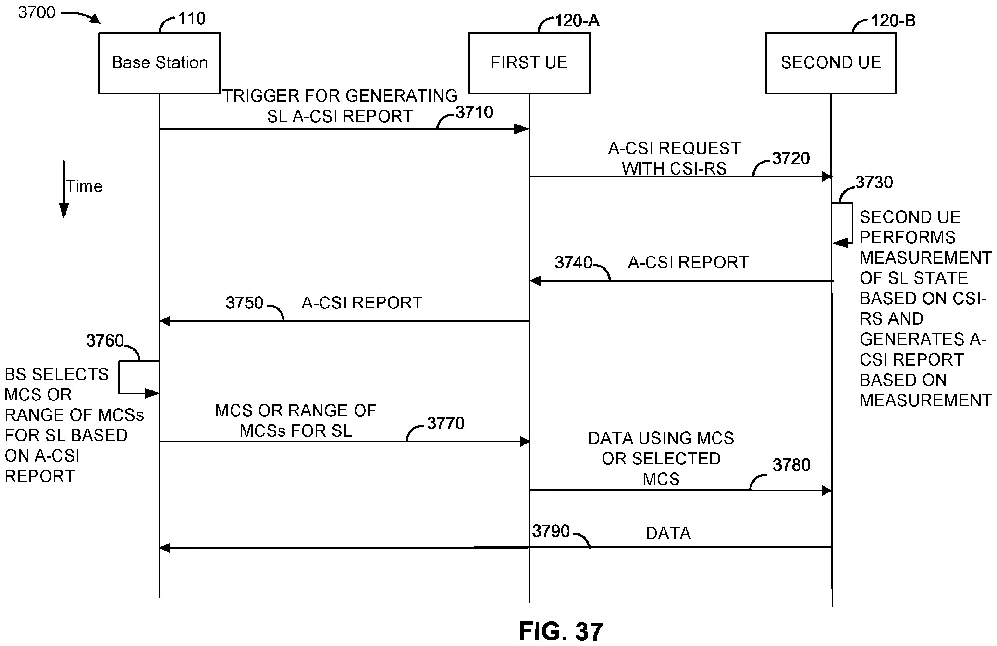

Fig. 37 illustrates an example signaling and data transmission timeline related to a method 3700 of determining an MCS for transmission of data via a sidelink according to some aspects. According to the method 3700, the base station 110 sends a message 3710 including a trigger to initiate a process of generating an aperiodic CSI (A-CSI) report to the first UE 120-A via a cellular communication link. An aperiodic CSI report is one that is triggered, in contrast to one that is periodic (occurs at defined regular intervals) or one that is semipersistent (occurs at defined regular intervals but may be temporarily suspended). Although an A-CSI report is described herein, it shall be understood that the method 3700 may be applicable to periodic or semipersistent CSI reporting.

In some implementations, the message 3710 specifies the type of the CSI report (e.g., to include CQI, PMI, RI, or other measurement information). In some implementations, the message 3710 is sent to the first UE 120-A via a DCI message or a MAC message. In some implementations, the message 3710 may include a grant of radio resources for the first UE 120-A to send the CSI report to the base station via a cellular communication link.

Further, according to the method 3700, the first UE 120-A receives the message 3710 including the trigger to initiate the process of generating the CSI report, and sends a request 3720 for the A-CSI report to the second UE 120-B via a sidelink in response to the message 3710. In some implementations, the request 3720 specifies the type of CSI report (e.g., to include CQI, PMI, RI, etc. measurement information). In some implementations, the A-CSI report request 3720 includes one or more reference signals (e.g., one or more CSI-RSs). The one or more reference signals may be in one or more resource blocks (RBs) used in transmitting the request 3720 to the second UE 120-B.

Further, according to the method 3700, the second UE 120-B receives the request 3720 for the A-CSI report including the one or more reference signals (e.g., CSI-RS), and performs one or more measurements of a state of a sidelink based on the one or more reference signals (at 3730). In some implementations, the one or more measurements may be based on the type of the A-CSI report (e.g., CQI, PMI, RI, measurements, etc.). Also, at 3730, the second UE 120-B generates the A-CSI report based on the one or more measurements. Then, according to the method 3700, the second UE 120-B sends the A-CSI report 3740 to the first UE 120-A via a sidelink.

Further, according to the method 3700, the first UE 120-A then receives the A-CSI report from the second UE 120-B via a sidelink, and sends (forwards) the A-CSI report 3750 to the base station 110 via a cellular communication link. In some implementations, the A-CSI report 3750 is sent to the base station 110 via a UCI message or a MAC uplink message. In some implementations, the first UE 120-A sends the A-CSI report 3750 using the radio resources granted by the base station 110 via the message 3710.

Further, according to the method 3700, the base station 110 receives the A-CSI report 3750 from the first UE 120-A via a cellular communication link, and selects an MCS or a range of MCSs based on the A-CSI report (at 3760). As an example, if the A-CSI report indicates that the state of the sidelink is characterized as having relatively poor channel conditions, the base station 110 may select MCS-2 or a range of MCS-1 to MCS-3. If, on the other hand, the A-CSI report indicates that the state of the sidelink is characterized as having relatively good channel conditions, the base station 110 may select MCS-7 or a range of MCS-7 to MCS-9. Then, according to the method 3700, the base station 110 sends a message 3770 including the MCS or the range of MCSs to the first UE 120-A via a cellular communication link. In some implementations, the message 3770 may be sent via a DCI message or a downlink MAC message.

Further, according to the method 3700, the first UE 120-A receives the message 3770, and transmits the data 3780 using the MCS or a selected one of the range of MCSs to the second UE 120-B via the sidelink. If, in this example, the second UE 120-B is operating as a relay UE, then, according to the method 3700, the second UE 120-B forwards or sends the data 3790 to the base station 110 via a cellular communication link.

As indicated above, Fig. 37 is provided as an example. Other examples may differ from what is described with respect to Fig. 37.

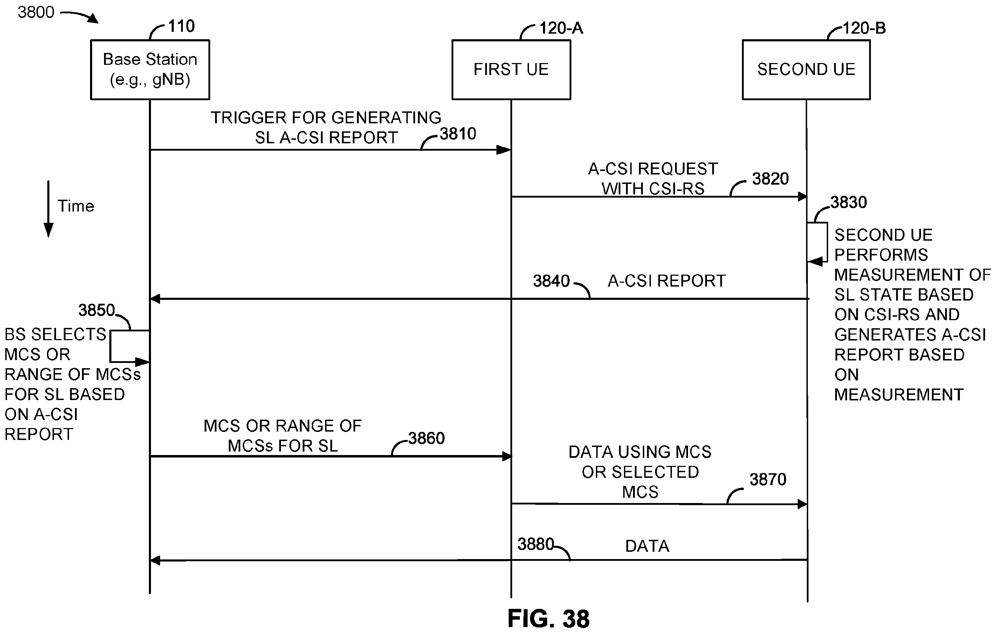

Fig. 38 illustrates another example signaling and data transmission timeline related to another method 3800 of determining a modulation and coding scheme for transmission of data via a sidelink according to some aspects. The method 3800 is similar to method 3700, but instead of the first UE 120-A receiving the A-CSI report from the second UE 120-B and then forwarding the A-CSI report to the base station 110, the second UE 120-B sends the A-CSI report to the base station 110 via a cellular communication link.

More specifically, according to the method 3800, the base station 110 sends a message 3810 including a trigger to initiate a process of generating the A-CSI report for the sidelink to the first UE 120-A via a cellular communication link. Then, according to the method 3800, the first UE 120-A sends a request 3820 for the A-CSI report to the second UE 120-B via the sidelink in response to the message 3810.

Further, according to the method 3800, the second UE 120-B receives the request 3820 for the A-CSI report including one or more reference signals (e.g., CSI-RS), and performs one or more measurements of a state of the sidelink based on the one or more reference signals (at 3830). Also, at 3830, the second UE 120-B generates the A-CSI report based on the one or more measurements.

Further, according to the method 3800, the second UE 120-B sends the A-CSI report 3840 to the base station 110 via a cellular communication link. In some implementations, the A-CSI report 3840 is sent via a UCI message or a MAC uplink message.

Further, according to the method 3800, the base station 110 receives the A-CSI report 3840 from the second UE 120-B via a cellular communication link, and selects an MCS or a range of MCSs based on the A-CSI report (at 3850). Then, according to the method 3800, the base station 110 sends a message 3860 including the MCS or the range of MCSs to the first UE 120-A via a cellular communication link.

Further, according to the method 3800, the first UE 120-A receives the message 3860, and transmits the data 3870 using the MCS or a selected one of the range of MCSs to the second UE 120-B via the sidelink. If, in this example, the second UE 120-B is operating as a relay UE, then, according to the method 3800, the second UE 120-B forwards or transmits the data 3880 to the base station 110 via a cellular communication link.

As indicated above, Fig. 38 is provided as an example. Other examples may differ from what is described with respect to Fig. 38.

Fig. 39 is a diagram illustrating an example process 3900 performed, for example, by a base station, in accordance with the present disclosure. Example process 3900 is an example where the base station (e.g., base station 110) performs operations associated with base station triggering and reception of CSI reports for sidelink adaptation.

As shown in Fig. 39, in some aspects, process 3900 may include receiving a CSI report concerning a sidelink between a first UE and a second UE (block 3910). For example, the base station (e.g., using a reception component or a receiver of a base station as described elsewhere herein) may receive a CSI report concerning a sidelink between a first UE and a second UE, as described above.

As further shown in Fig. 39, in some aspects, process 3900 may include selecting an MCS or a range of MCSs based on the CSI report (block 3920). For example, the base station (e.g., using an MCS selection component of a base station described elsewhere herein) may select an MCS or a range of MCSs based on the CSI report, as described above.

As further shown in Fig. 39, in some aspects, process 3900 may include sending a first message including the MCS or the range of MCS to the first UE, the MCS or a selected one in the range of MCSs to be used by the first UE to transmit data to the second UE via the sidelink (block 3930). For example, the base station (e.g., using a transmission component or a transmitter of a base station as described elsewhere herein) may send a first message including the MCS or the range of MCS to the first UE, the MCS or a selected one in the range of MCSs to be used by the first UE to transmit data to the second UE via the sidelink, as described above.

Process 3900 may include additional aspects, such as any single aspect or any combination of aspects described below and/or in connection with one or more other processes described elsewhere herein.

In a first aspect, process 3900 includes sending a second message including a trigger to initiate a process of generating the CSI report to the first UE.

In a second aspect, alone or in combination with the first aspect, the second message specifies a type of the CSI report.

In a third aspect, alone or in combination with one or more of the first and second aspects, the second message is sent via a DCI message or a downlink MAC message.

In a fourth aspect, alone or in combination with one or more of the first through third aspects, the second message includes a grant of radio resources for the first UE to send the CSI report via a cellular communication link.

In a fifth aspect, alone or in combination with one or more of the first through fourth aspects, receiving the CSI report comprises receiving the CSI report from the first UE.

In a sixth aspect, alone or in combination with one or more of the first through fifth aspects, receiving the CSI report comprises receiving the CSI report from the second UE.

In a seventh aspect, alone or in combination with one or more of the first through sixth aspects, the first message is sent via a DCI message or a downlink MAC message.

In an eighth aspect, alone or in combination with one or more of the first through seventh aspects, the CSI report is received via a UCI message or a MAC uplink message.

In a ninth aspect, alone or in combination with one or more of the first through eighth aspects, process 3900 includes receiving the data from the second UE.

Although Fig. 39 shows example blocks of process 3900, in some aspects, process 3900 may include additional blocks, fewer blocks, different blocks, or differently arranged blocks than those depicted in Fig. 39. Additionally, or alternatively, two or more of the blocks of process 3900 may be performed in parallel.

Fig. 40 is a diagram illustrating an example process 4000 performed, for example, by a first UE, in accordance with the present disclosure. Example process 4000 is an example where the first UE (e.g., a UE 120, a relay UE, or the like) performs operations associated with base station triggering and reception of CSI reports for sidelink adaptation.

As shown in Fig. 40, in some aspects, process 4000 may include sending a request for a CSI report to a second UE via a sidelink (block 4010). For example, the first UE (e.g., using a transmission component or a transmitter of a UE described elsewhere herein) may send a request for a CSI report to a second UE via a sidelink, as described above.

As further shown in Fig. 40, in some aspects, process 4000 may include receiving the CSI report from the second UE via the sidelink (block 4020). For example, the first UE (e.g., using a reception component or a receiver of a UE described elsewhere herein) may receive the CSI report from the second UE via the sidelink, as described above.

As further shown in Fig. 40, in some aspects, process 4000 may include sending the CSI report to a base station (block 4030). For example, the first UE (e.g., using a transmission component or a transmitter of a UE described elsewhere herein) may send the CSI report to a base station, as described above.

Process 4000 may include additional aspects, such as any single aspect or any combination of aspects described below and/or in connection with one or more other processes described elsewhere herein.

In a first aspect, process 4000 includes receiving a message including a trigger to initiate a process of generating the CSI report from the base station, wherein the request for the CSI report is sent in response to the message.

In a second aspect, alone or in combination with the first aspect, the message specifies a type of the CSI report.

In a third aspect, alone or in combination with one or more of the first and second aspects, the message includes a grant of radio resources for sending the CSI report to the base station via a cellular communication link.

In a fourth aspect, alone or in combination with one or more of the first through third aspects, the message is received via a DCI message or a downlink MAC message.

In a fifth aspect, alone or in combination with one or more of the first through fourth aspects, process 4000 includes receiving a message including an MCS or a range of MCSs to be used for data transmission to the second UE via the sidelink.

In a sixth aspect, alone or in combination with one or more of the first through fifth aspects, the message is received via a DCI message or a downlink MAC message.

In a seventh aspect, alone or in combination with one or more of the first through sixth aspects, process 4000 includes sending the data using the MCS or a selected one in the range of MCSs to the second UE via the sidelink.

In an eighth aspect, alone or in combination with one or more of the first through seventh aspects, the CSI report is sent via a UCI message or a MAC uplink message.

Although Fig. 40 shows example blocks of process 4000, in some aspects, process 4000 may include additional blocks, fewer blocks, different blocks, or differently arranged blocks than those depicted in Fig. 40. Additionally, or alternatively, two or more of the blocks of process 4000 may be performed in parallel.

Fig. 41 is a diagram illustrating an example process 4100 performed, for example, by a first UE, in accordance with the present disclosure. Example process 4100 is an example where the first UE (e.g., a UE 120, a remote UE, or the like) performs operations associated with base station triggering and reception of CSI reports for sidelink adaptation.

As shown in Fig. 41, in some aspects, process 4100 may include receiving a request for a CSI report from a second UE via a sidelink, wherein the request includes one or more reference signals (block 4110). For example, the first UE (e.g., using a reception component or a receiver of a UE described elsewhere herein) may receive a request for a CSI report from a second UE via a sidelink, wherein the request includes one or more reference signals, as described above.

As further shown in Fig. 41, in some aspects, process 4100 may include performing one or more measurements of a state of the sidelink based on the one or more reference signals (block 4120). For example, the first UE (e.g., using a CSI-RS measuring component of a UE described elsewhere herein) may perform one or more measurements of a state of the sidelink based on the one or more reference signals, as described above.

As further shown in Fig. 41, in some aspects, process 4100 may include generating the CSI report based on the one or more measurements (block 4130). For example, the first UE (e.g., using a CSI-RS measuring component of a UE described elsewhere herein) may generate the CSI report based on the one or more measurements, as described above.

As further shown in Fig. 41, in some aspects, process 4100 may include sending the CSI report to a base station (block 4140). For example, the first UE (e.g., using a transmission component or a transmitter of a UE described elsewhere herein) may send the CSI report to a base station, as described above.

Process 4100 may include additional aspects, such as any single aspect or any combination of aspects described below and/or in connection with one or more other processes described elsewhere herein.

In a first aspect, the CSI report is sent via a UCI message or a MAC uplink message.

In a second aspect, alone or in combination with the first aspect, process 4100 includes receiving data from the second UE with an MCS based on the CSI report via the sidelink.

In a third aspect, alone or in combination with one or more of the first and second aspects, process 4100 includes sending the data to the base station.

Although Fig. 41 shows example blocks of process 4100, in some aspects, process 4100 may include additional blocks, fewer blocks, different blocks, or differently arranged blocks than those depicted in Fig. 41. Additionally, or alternatively, two or more of the blocks of process 4100 may be performed in parallel.

The foregoing disclosure provides illustration and description, but is not intended to be exhaustive or to limit the aspects to the precise form disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software.

As used herein, satisfying a threshold may, depending on the context, refer to a value being greater than the threshold, greater than or equal to the threshold, less than the threshold, less than or equal to the threshold, equal to the threshold, not equal to the threshold, and/or the like.

It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method of wireless communication performed by a relay user equipment, UE, (610; 810; 910), comprising:
transmitting (1810; 2510; 2820) an aperiodic channel state information, CSI, request (815; 915; 2425) to a UE (605; 805; 905), wherein the aperiodic CSI request is for a sidelink channel between the relay UE (610; 810; 910) and the UE (605; 805; 905);
receiving (1820; 2830), from a base station (110), modulation and coding scheme, MCS, information (830; 935; 2435) for the sidelink communications based at least in part on transmitting the aperiodic CSI request, the MCS information identifying an offset value corresponding to a number of indices relative to an index value associated with a first MCS of a set of MCSs, the first MCS based on an MCS-to-CSI mapping for sidelink communications in the sidelink channel;
receiving, from the base station (110), a communication (615; 835; 940) to be relayed to the UE (605; 805); and
relaying (1830; 2545; 2840) the communication (615; 835; 940) to the UE (605; 805; 905) via the sidelink channel, wherein the sidelink channel is modulated using a second MCS of the set of MCSs based at least in part on the offset value.

2. The method of claim 1, further comprising:
receiving an aperiodic CSI report from the UE based at least in part on transmitting the aperiodic CSI request to the UE, wherein the aperiodic CSI report is for the sidelink communications;
transmitting the aperiodic CSI report to the base station before receiving, from the base station, the indication of the MCSs.

3. The method of claim 2, wherein the aperiodic CSI report is transmitted to the base station in at least one of a medium access control, MAC, control element, a MAC payload, uplink control information, or a combination thereof.

4. The method of claim 1, wherein the indication of the MCSs is received from the base station in at least one of a medium access control, MAC, control element, a MAC payload, downlink control information, a sidelink grant for the sidelink communication, or a combination thereof.

5. The method of claim 1, wherein the relay UE provides a layer 2 relay service for the UE.

6. The method of claim 1, further comprising selecting, by the relay UE and based on the offset value, the second MCS, from the MCSs.

7. An apparatus for wireless communication by a relay user equipment, UE, (610; 810; 910), comprising:
a memory; and
one or more processors, operatively coupled to the memory, configured to:
transmit (1810; 2820) an aperiodic channel state information, CSI, request (815; 915) to a UE (605; 805; 905), wherein the aperiodic CSI request is for a sidelink channel between the relay UE (610; 810; 910) and the UE (605; 805; 905);
receive (1820; 2830), from a base station (110), modulation and coding scheme, MCS, information (830; 935; 2435) for the sidelink communications based at least in part on transmitting the aperiodic CSI request, the MCS information identifying an offset value corresponding to a number of indices relative to an index value associated with a first MCS of a set of MCSs, the first MCS based on an MCS-to-CSI mapping for sidelink communications in the sidelink channel;
receive, from the base station (110), a communication (615; 835; 940) to be relayed to the UE; and
relay (1830; 2840) the communication (615; 835; 940) to the UE (605; 805; 905) via the sidelink channel, wherein the sidelink channel is modulated using a second MCS of the set of MCSs based at least in part on the offset value.

8. The apparatus of claim 7, wherein the one or more processors are further configured to:
receive an aperiodic CSI report from the UE based at least in part on transmitting the aperiodic CSI request to the UE, wherein the aperiodic CSI report is for the sidelink communications;
transmit the aperiodic CSI report to the base station before receiving, from the base station, the indication of the MCSs.

9. The apparatus of claim 8, wherein the aperiodic CSI report is transmitted to the base station in at least one of a medium access control, MAC, control element, a MAC payload, uplink control information, or a combination thereof.

10. The apparatus of claim 7, wherein the indication of the MCSs is received from the base station in at least one of a medium access control, MAC, control element, a MAC payload, downlink control information, a sidelink grant for the sidelink communication, or a combination thereof.

11. The apparatus of claim 7, wherein the relay UE provides a layer 2 relay service for the UE.

12. The apparatus of claim 7, wherein the one or more processors are further configured to select, based on the offset value, the second MCS from the MCSs.

13. A computer-readable medium storing a set of instructions for wireless communication, the set of instructions comprising one or more instructions that, when executed by one or more processors of a relay user equipment, UE, cause the relay UE to perform the method of any one of claims 1-6.

## Patentansprüche

1. Ein Verfahren für eine drahtlose Kommunikation, das durch ein Funkrelais- bzw. Relais-Benutzergerät (Relay User Equipment bzw. UE) (610; 810; 910) durchgeführt wird, aufweisend:
Senden (1810; 2510; 2820) einer aperiodischen Kanalzustandsinformationen (Channel State Information bzw. CSI)-Anfrage (815; 915; 2425) an ein UE (605; 805; 905), wobei die aperiodische CSI-Anfrage für einen Sidelink-Kanal zwischen dem Relais-UE (610; 810; 910) und dem UE (605; 805; 905) ist,
Empfangen (1820; 2830), von einer Basisstation (110), von Modulations- und Codierschema (MCS)-Informationen (830; 935; 2435) für die Sidelink-Kommunikationen basierend wenigstens teilweise auf dem Senden der aperiodischen CSI-Anfrage, wobei die MCS-Informationen einen Versatzwert in Entsprechung zu einer Anzahl von Indizes relativ zu einem mit einem ersten MCS aus einem Satz von MCSs assoziierten Indexwert identifizieren, wobei das erste MCS auf einem MCS-zu-CSI-Mapping für Sidelink-Kommunikationen in dem Sidelink-Kanal basiert,
Empfangen, von der Basisstation (110), einer Kommunikation (615; 835; 940), die an das UE (605; 805) weiterzuleiten ist, und
Weiterleiten (1830; 2545; 2840) der Kommunikation (615; 835; 940) an das UE (605; 805; 905) über den Sidelink-Kanal, wobei der Sidelink-Kanal unter Verwendung eines zweiten MCS aus dem Satz von MCSs basierend wenigstens teilweise auf dem Versatzwert moduliert wird.

2. Verfahren nach Anspruch 1, das weiterhin aufweist:
Empfangen eines aperiodischen CSI-Berichts von dem UE basierend wenigstens teilweise auf dem Senden der aperiodischen CSI-Anfrage an das UE, wobei der aperiodische CSI-Bericht für die Sidelink-Kommunikationen ist,
Senden des aperiodischen CSI-Berichts an die Basisstation vor dem Empfangen, von der Basisstation, der Angabe der MCSs.

3. Verfahren nach Anspruch 2, wobei der aperiodische CSI-Bericht an die Basisstation in einem MAC (Medium Access Control)-Steuerelement, einer MAC-Nutzlast, Uplink-Steuerinformationen oder einer Kombination aus diesen gesendet wird.

4. Verfahren nach Anspruch 1, wobei die Angabe der MCSs von der Basisstation in einem MAC (Medium Access Control)-Steuerelement, einer MAC-Nutzlast, Downlink-Steuerinformationen, einer Sidelink-Gewährung für die Sidelink-Kommunikation oder einer Kombination aus diesen empfangen wird.

5. Verfahren nach Anspruch 1, wobei das Relais-UE einen Schicht 2-Relaisdienst für das UE vorsieht.

6. Verfahren nach Anspruch 1, das weiterhin das Auswählen, durch das Relais-UE und basierend auf dem Versatzwert, des zweiten MCS aus den MCSs aufweist.

7. Eine Vorrichtung für eine drahtlose Kommunikation durch ein Relais-Benutzergerät (User Equipment bzw. UE) (610, 810; 910), aufweisend:
einen Speicher, und
einen oder mehrere Prozessoren, die operativ mit dem Speicher gekoppelt sind und konfiguriert sind zum:
Senden (1810; 2820) einer aperiodischen Kanalzustandsinformationen (Channel State Information bzw. CSI)-Anfrage (815; 915) an ein UE (605; 805; 905), wobei die aperiodische CSI-Anfrage für einen Sidelink-Kanal zwischen dem Relais-UE (610; 810; 910) und dem UE (605; 805; 905) ist,
Empfangen (1820; 2830), von einer Basisstation (110), von Modulations- und Codierschema (MCS)-Informationen (830; 935; 2435) für die Sidelink-Kommunikationen basierend wenigstens teilweise auf dem Senden der aperiodischen CSI-Anfrage, wobei die MCS-Informationen einen Versatzwert in Entsprechung zu einer Anzahl von Indizes relativ zu einem mit einem ersten MCS aus einem Satz von MCSs assoziierten Indexwert identifizieren, wobei das erste MCS auf einem MCS-zu-CSI-Mapping für Sidelink-Kommunikationen in dem Sidelink-Kanal basiert,
Empfangen, von der Basisstation (110), einer Kommunikation (615; 835; 940), die an das UE weiterzuleiten ist, und
Weiterleiten (1830; 2840) der Kommunikation (615; 835; 940) an das UE (605; 805; 905) über den Sidelink-Kanal, wobei der Sidelink-Kanal unter Verwendung eines zweiten MCS aus dem Satz von MCSs basierend wenigstens teilweise auf dem Versatzwert moduliert wird.

8. Vorrichtung nach Anspruch 7, wobei der eine oder die mehreren Prozessoren weiterhin konfiguriert sind zum:
Empfangen eines aperiodischen CSI-Berichts von dem UE basierend wenigstens teilweise auf dem Senden der aperiodischen CSI-Anfrage an das UE, wobei der aperiodische CSI-Bericht für die Sidelink-Kommunikationen ist,
Senden des aperiodischen CSI-Berichts an die Basisstation vor dem Empfangen, von der Basisstation, der Angabe der MCSs.

9. Vorrichtung nach Anspruch 8, wobei der aperiodische CSI-Bericht an die Basisstation in einem MAC (Medium Access Control)-Steuerelement, einer MAC-Nutzlast, Uplink-Steuerinformationen oder einer Kombination aus diesen gesendet wird.

10. Vorrichtung nach Anspruch 7, wobei die Angabe der MCSs von der Basisstation in einem MAC (Medium Access Control)-Steuerelement, einer MAC-Nutzlast, Downlink-Steuerinformationen, einer Sidelink-Gewährung für die Sidelink-Kommunikation oder einer Kombination aus diesen empfangen wird.

11. Vorrichtung nach Anspruch 7, wobei das Relais-UE einen Schicht 2-Relaisdienst für das UE vorsieht.

12. Vorrichtung nach Anspruch 7, wobei der eine oder die mehreren Prozessoren weiterhin konfiguriert sind zum Auswählen, basierend auf dem Versatzwert, des zweiten MCS aus den MCSs.

13. Ein computerlesbares Medium, das einen Satz von Befehlen für eine drahtlose Kommunikation speichert, wobei der Satz von Befehlen einen oder mehrere Befehle aufweist, die bei einer Ausführung durch einen oder mehrere Prozessoren eines Relais-Benutzergeräts (User Equipment bzw. UE) das Relais-UE zum Durchführen des Verfahrens gemäß einem der Ansprüche 1 bis 6 veranlassen.

## Revendications

1. Procédé de communication sans fil réalisé par un équipement d'utilisateur, UE, relais (610 ; 810 ; 910), le procédé comprenant les étapes consistant à :
émettre (1810 ; 2510 ; 2820) une demande apériodique d'informations d'état de canal, CSI, (815 ; 915 ; 2425) vers un UE (605 ; 805 ; 905), la demande apériodique de CSI concernant un canal en liaison latérale entre l'UE relais (610 ; 810 ; 910) et l'UE (605 ; 805 ; 905) ;
recevoir (1820 ; 2830), en provenance d'une station de base (110), des informations de schéma de modulation et de codage, MCS, (830 ; 935 ; 2435) pour les communications en liaison latérale sur la base, au moins en partie, de l'émission de la demande apériodique de CSI, les informations MCS identifiant une valeur de décalage correspondant à un nombre d'indices par rapport à une valeur d'indice associée à un premier MCS parmi un ensemble de MCS, le premier MCS étant basé sur une correspondance MCS-CSI pour des communications en liaison latérale dans le canal en liaison latérale ;
recevoir, en provenance de la station de base (110), une communication (615 ; 835 ; 940) à relayer vers l'UE (605 ; 805) ; et
relayer (1830 ; 2545 ; 2840) la communication (615 ; 835 ; 940) vers l'UE (605 ; 805 ; 905) par l'intermédiaire du canal en liaison latérale, le canal en liaison latérale étant modulé au moyen d'un second MCS parmi l'ensemble de MCS sur la base, au moins en partie, de la valeur de décalage.

2. Procédé selon la revendication 1, comprenant en outre les étapes consistant à :
recevoir un rapport apériodique de CSI en provenance de l'UE, sur la base, au moins en partie, de l'émission de la demande apériodique de CSI vers l'UE, le rapport apériodique de CSI concernant les communications en liaison latérale ;
émettre le rapport apériodique de CSI vers la station de base avant de recevoir, en provenance de la station de base, l'indication des MCS.

3. Procédé selon la revendication 2, le rapport apériodique de CSI étant émis vers la station de base dans au moins un élément parmi un élément de commande de contrôle d'accès au support, MAC, une charge utile MAC, des informations de commande en liaison montante, ou une combinaison de ceux-ci.

4. Procédé selon la revendication 1, l'indication des MCS étant reçue en provenance de la station de base dans au moins un élément parmi un élément de commande de contrôle d'accès au support, MAC, une charge utile MAC, des informations de commande en liaison descendante, un octroi en liaison latérale pour la communication en liaison latérale, ou une combinaison de ceux-ci.

5. Procédé selon la revendication 1, l'UE relais fournissant un service de relais de couche 2 pour l'UE.

6. Procédé selon la revendication 1, comprenant en outre l'étape consistant à sélectionner, par l'UE relais et sur la base de la valeur de décalage, le second MCS parmi les MCS.

7. Appareil de communication sans fil par un équipement d'utilisateur, UE, relais (610 ; 810 ; 910), comprenant :
une mémoire ; et
un ou plusieurs processeurs, couplés de manière fonctionnelle à la mémoire, configurés pour :
émettre (1810 ; 2820) une demande apériodique d'informations d'état de canal, CSI, (815 ; 915) vers un UE (605 ; 805 ; 905), la demande apériodique de CSI concernant un canal en liaison latérale entre l'UE relais (610 ; 810 ; 910) et l'UE (605 ; 805 ; 905) ;
recevoir (1820 ; 2830), en provenance d'une station de base (110), des informations de schéma de modulation et de codage, MCS, (830 ; 935 ; 2435) pour les communications en liaison latérale sur la base, au moins en partie, de l'émission de la demande apériodique de CSI, les informations MCS identifiant une valeur de décalage correspondant à un nombre d'indices par rapport à une valeur d'indice associée à un premier MCS parmi un ensemble de MCS, le premier MCS étant basé sur une correspondance MCS-CSI pour des communications en liaison latérale dans le canal en liaison latérale ;
recevoir, en provenance de la station de base (110), une communication (615 ; 835 ; 940) à relayer vers l'UE ; et
relayer (1830 ; 2840) la communication (615 ; 835 ; 940) vers l'UE (605 ; 805 ; 905) par l'intermédiaire du canal en liaison latérale, le canal en liaison latérale étant modulé au moyen d'un second MCS parmi l'ensemble de MCS sur la base, au moins en partie, de la valeur de décalage.

8. Appareil selon la revendication 7, les un ou plusieurs processeurs étant en outre configurés pour :
recevoir un rapport apériodique de CSI en provenance de l'UE, sur la base, au moins en partie, de l'émission de la demande apériodique de CSI vers l'UE, le rapport apériodique de CSI concernant les communications en liaison latérale ;
émettre le rapport apériodique de CSI vers la station de base avant de recevoir, en provenance de la station de base, l'indication des MCS.

9. Appareil selon la revendication 8, le rapport apériodique de CSI étant émis vers la station de base dans au moins un élément parmi un élément de commande de contrôle d'accès au support, MAC, une charge utile MAC, des informations de commande en liaison montante, ou une combinaison de ceux-ci.

10. Appareil selon la revendication 7, l'indication des MCS étant reçue en provenance de la station de base dans au moins un élément parmi un élément de commande de contrôle d'accès au support, MAC, une charge utile MAC, des informations de commande en liaison descendante, un octroi en liaison latérale pour la communication en liaison latérale, ou une combinaison de ceux-ci.

11. Appareil selon la revendication 7, l'UE relais fournissant un service de relais de couche 2 pour l'UE.

12. Appareil selon la revendication 7, les un ou plusieurs processeurs étant en outre configurés pour sélectionner, sur la base de la valeur de décalage, le second MCS parmi les MCS.

13. Support lisible par ordinateur, stockant un ensemble d'instructions pour une communication sans fil, l'ensemble d'instructions comprenant une ou plusieurs instructions qui, lorsqu'elles sont exécutées par un ou plusieurs processeurs d'un équipement d'utilisateur, UE, relais, amènent l'UE relais à réaliser le procédé selon l'une quelconque des revendications 1 à 6.
